(19) Europäisches Patentamt
European Patent Office
Office européen des brevets

(11) EP 4 517 999 A1

(12) EUROPEAN PATENT APPLICATION
published in accordance with Art. 153(4) EPC

(43) Date of publication:
**05.03.2025 Bulletin 2025/10**

(21) Application number: **23796242.8**

(22) Date of filing: **20.04.2023**

(51) International Patent Classification (IPC):
***H01M 50/451*** (2021.01) ***H01M 50/414*** (2021.01)
***H01M 50/417*** (2021.01) ***H01M 50/42*** (2021.01)
***H01M 50/426*** (2021.01) ***H01M 50/443*** (2021.01)
***H01M 50/463*** (2021.01) ***H01M 50/489*** (2021.01)
***H01M 50/491*** (2021.01)

(52) Cooperative Patent Classification (CPC):
**H01M 50/414; H01M 50/417; H01M 50/42; H01M 50/426; H01M 50/443; H01M 50/451; H01M 50/463; H01M 50/489; H01M 50/491;**
Y02E 60/10

(86) International application number:
**PCT/JP2023/015785**

(87) International publication number:
**WO 2023/210500 (02.11.2023 Gazette 2023/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **26.04.2022 JP 2022072665**

(71) Applicant: **Asahi Kasei Battery Separator Corporation**
**Tokyo 100-0006 (JP)**

(72) Inventors:
- **MISAWA, Kazushi**
  **Tokyo 100-0006 (JP)**
- **MIZUTANI, Wataru**
  **Tokyo 100-0006 (JP)**
- **UCHIDA, Yuki**
  **Tokyo 100-0006 (JP)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

# (54) SEPARATOR FOR POWER STORAGE DEVICES, AND POWER STORAGE DEVICE COMPRISING SAME

(57) The purpose of the present disclosure is to provide: a separator for power storage devices, the separator having high adhesion to an electrode and a low thermal shrinkage ratio, while being capable of improving the cycle characteristics and output characteristics of a power storage device; and a power storage device which comprises this separator for power storage devices. A separator for power storage devices according to the present disclosure comprises: a base material which is formed of a polyolefin microporous membrane that contains a polyolefin as a main component; and a cover layer which is arranged on at least one surface of the base material. The base material has a film thickness of 1 μm to 30 μm, and an air permeability of 500 sec/100 $cm^3$ or less. The cover layer contains an inorganic filler and polymer particles of a thermoplastic polymer. Some of the polymer particles protrude from the cover layer by a length that is not less than 0.1 times the thickness of the inorganic filler portion of the cover layer. The porosity after compression as measured after compressing the base material at the temperature of 70°C and the pressure of 8 MPa for the compression time of 3 minutes is 30% or more; and/or the crystal long period of the polyolefin microporous membrane as determined by a small-angle X-ray scattering method (SAXS) is 37.0 nm or more.

EP 4 517 999 A1

Fig. 1

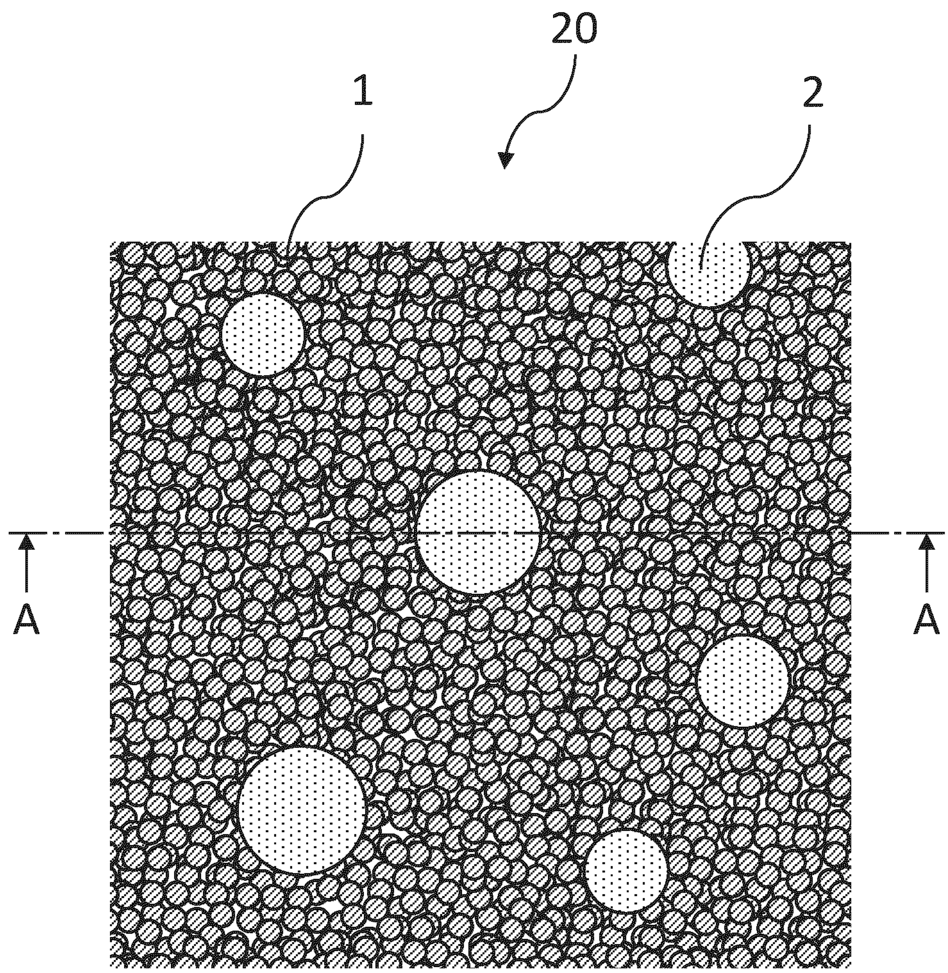

## Description

FIELD

The present disclosure relates to a separator for a power storage device and a power storage device comprising the same.

BACKGROUND

Power storage devices, such as lithium-ion secondary batteries, are being actively developed. In general, a power storage device includes a positive electrode, a negative electrode, and a microporous membrane separator between them. The separator has the function of preventing direct contact between the positive electrode and the negative electrode and allowing ions to permeate through the electrolyte solution held in the micropores thereof. The separator is required to have safety performance such as a characteristic to quickly stop the battery reaction at the time of abnormal heating (fuse characteristics), and performance to maintain its shape even at high temperatures and prevent dangerous situations in which the positive electrode and the negative electrode directly react (short-circuit resistance characteristics).

Non-aqueous secondary batteries such as lithium-ion secondary batteries are available in various shapes such as cylindrical, square, and pouch-like, depending on the application. The battery production method varies depending on the shape of the battery. For example, in the production of a square battery, a wound or laminated body of electrodes and a polyolefin microporous membrane is pressed and inserted into a rectangular exterior can.

In particular, in recent years, in order to increase the capacity of power storage devices, the volume of the power storage device has been reduced by hot pressing a laminate of electrodes and a separator, or by hot pressing a wound body obtained by winding a laminate of electrodes and a separator. In this case, in order to affix the electrodes and the separator after hot pressing and maintain the volume at the time of pressing, there is known a technology in which a covering layer containing a thermoplastic polymer which exhibits an adhesive function under certain conditions is arranged on the separator serving as the base material to improve the adhesion between the entire separator and the electrodes.

In accordance with improvements in electrode materials and high-density modularization of multiple nonaqueous secondary batteries (single cells) (increasing the module volume energy density), there is a demand to ensure the ion permeability of a microporous membrane as a separator, and the output characteristics or cycle characteristics of a battery including the same, even when external pressure is applied to the cell and separator.

For example, Patent Literature 1 describes a separator comprising a porous coating layer containing organic polymer particles for the purpose of enhancing safety by increasing the binding strength between the separator and the electrodes to strongly integrate the separator and the electrodes without performing a moisture-induced phase separation process for the organic binder polymer or a secondary coating of an adhesive layer. In this separator, the organic polymer particles protrude to a height of 0.1 $\mu$m to 3 $\mu$m from the surface of the porous coating layer.

Patent Literature 2 describes a separator comprising a surface coating containing polymer binder particles of different particle sizes for the purpose of suppressing deformation of the power storage device due to volume expansion of the electrodes during charging. The polymer binder particles of different particle sizes form gaps between the separator and the electrodes which allow internal expansion of the power storage device.

Patent Literature 3 describes a separator comprising a composite coating including inorganic particles, polymer particles, and a binder, for the purpose of further improving existing separators and the production methods thereof, which have suitable thermal stability performance and suitable adhesion effect with the electrodes, thereby ensuring the safety and flatness of the power storage device. The polymer particles are dispersed in the inorganic particles and protrude from the surfaces of the inorganic particles.

Patent Literature 4 describes a separator comprising a functional layer containing inorganic particles and a particulate polymer for the purpose of improving the adhesion, heat resistance, and electrolyte solution injection property. When the surface of this functional layer is viewed in a plan view, the ratio of the area occupied by the inorganic particles per unit area of the surface of the functional layer is greater than 90%, the volume average particle size of the particulate polymer is within a specific range, and the volume average particle size of the particulate polymer is greater than the thickness of the inorganic particle layer.

Patent Literature 5 describes a separator having a functional layer containing inorganic particles and a particulate polymer, for the purpose of providing a functional layer for an electrochemical element that has excellent process adhesion and can cause the electrochemical element to exhibit excellent cycle characteristics. This functional layer has a particle-shedding portion, and when the surface of the functional layer for an electrochemical element is viewed in a plan view, the ratio of the area of the particle-shedding portion to the total area of the particulate polymer and the particle-shedding portion is 0.1% or more and 40.0% or less, and the volume average particle size of the particulate polymer is greater than the thickness of the inorganic particle layer containing the inorganic particles.

From the viewpoint of the heat resistance or rigidity of a separator, which is a base material, and cycle characteristics of lithium-ion secondary batteries, the crystallinity of the polyolefin contained in the separator or the press test characteristics of the polyolefin microporous membrane used as the separator have been investigated (Patent Literature 6 to 9).

Patent Literature 6 describes the long period of a lamellar crystal portion of a polyolefin microporous film that has been dry-stretched and porous, as measured by small-angle X-ray scattering (SAXS), from the viewpoint of achieving both excellent lithium-ion permeability and heat resistance.

Patent Literature 7 describes the long period of polymer crystals measured by the SAXS method for a stretched polypropylene film from the viewpoint of achieving both low thermal shrinkage and high rigidity.

Patent Literature 8 and 9 describe, from the viewpoint of the compression resistance of a separator for a lithium-ion secondary battery and the cycle characteristics of a lithium-ion secondary battery, for example, the rate of change in membrane thickness of a polyolefin microporous membrane before and after a heat compression test at a temperature of 80°C and a pressure of 1 MPa for 60 minutes (Patent Literature 8), or the rate of change in air permeability and the rate of change in membrane thickness of a polyolefin microporous membrane before and after a heat compression test at a temperature of 90°C and a pressure of 5.0 MPa for 5 minutes (Patent Literature 9).

[CITATION LIST]

[PATENT LITERATURE]

[PTL 1] Korean Patent Publication No. 10-2016-0118979
[PTL 2] WO 2019/089492
[PTL 3] Chinese Patent No. 105958000
[PTL 4] WO 2020/175079
[PTL 5] WO 2021/085144
[PTL 6] WO 2014/175252
[PTL 7] WO 2015/012324
[PTL 8] WO 2018/164056
[PTL 9] WO 2015/194504

SUMMARY

[TECHNICAL PROBLEM]

However, these conventional separators for a lithium-ion secondary battery and separators that serve as a base material composed of polyolefin microporous membrane have the following problems.

For example, in Patent Literature 1 and Patent Literature 3, adhesive polymers in the form of secondary particles are used, and there is a problem of uneven distribution of the separator thickness. Furthermore, since the adhesive polymer has poor dispersibility in a coating material state, there are parts on the separator where the adhesive polymer aggregates, which causes unevenness in the adhesive strength with the electrode, resulting in a problem of a decrease in the overall adhesive strength and a problem of a deterioration in heat resistance. In Patent Literature 2, in which the separator is not provided with a heat-resistant layer having an inorganic filler, there is a problem in that sufficient heat resistance cannot be imparted to the separator. In Patent Literature 4 and 5, the binding strength of the covering layer is insufficient, and there is still room for improvement in suppressing powder flaking during the production process and in adhesive strength with the electrode.

In the production of batteries using a conventional polyolefin microporous membrane as described in Patent Literature 6 to 9, the phenomenon that the cycle characteristics and output characteristics of batteries deteriorate may occur due to a pressing step. The same phenomenon is remarkable when a high-capacity electrode that is prone to expansion is used.

In view of the circumstances described above, an object of the present disclosure is to provide a separator for a power storage device that has high adhesive strength with electrodes, a small thermal shrinkage rate, and can improve the cycle characteristics and output characteristics of a power storage device, and a power storage device comprising the same.

[SOLUTION TO PROBLEM]

Examples of embodiments of the present disclosure are listed below.

[1] A separator for a power storage device, comprising a base material which is a polyolefin microporous membrane comprising a polyolefin as a primary component, and a covering layer arranged on at least one surface of the base material, wherein

> the base material has a membrane thickness of 1 μm to 30 μm, an air permeability of 500 sec/100 $cm^3$ or less, and a post-compression porosity of 30% or more as measured after compressing the base material under conditions of a temperature of 70°C, a pressure of 8 MPa, and a compression time of 3 minutes,
> the covering layer comprises an inorganic filler and a particulate polymer that is a thermoplastic polymer, and the particulate polymer comprises a particulate polymer protruding from the covering layer by 0.1-fold or greater the thickness of an inorganic filler portion of the covering layer.

[2] A separator for a power storage device, comprising a base material which is a polyolefin microporous membrane comprising a polyolefin as a primary component, and a covering layer arranged on at least one surface of the base material, wherein

> a crystal long-period of the polyolefin microporous membrane as measured by small-angle X-ray scattering (SAXS) is 37.0 nm or more,
> the covering layer comprises an inorganic filler and a particulate polymer that is a thermoplastic polymer, and the particulate polymer comprises a particulate polymer protruding from the covering layer by 0.1-fold or greater the thickness of an inorganic filler portion of the covering layer.

[3] The separator for a power storage device according to Item [2], wherein the base material has a membrane thickness of 1 μm to 30 μm, an air permeability of 500 sec/100 $cm^3$ or less, and a post-compression porosity of 30% or more as measured after compressing the base material under conditions of a temperature of 70°C, a pressure of 8 MPa, and a compression time of 3 minutes.

[4] The separator for a power storage device according to any one of Items [1] to [3], wherein an amount of the particulate polymer in the covering layer is 1 part by weight or more and 50 parts by weight or less relative to 100 parts by weight of inorganic filler contained in the covering layer, and
the covering layer is formed in a gradient shape so as to become thicker toward the protruding particulate polymer.

[5] The separator for a power storage device according to Item [4], wherein when a thickness of the inorganic filler portion of the covering layer is defined as L1, and a maximum distance from a boundary between the base material and the covering layer to an outer surface of the inorganic filler of the covering layer, which is formed in a gradient shape, is defined as L2, an average value of a gradient ratio L2/L1 of the covering layer is 1.2 or more.

[6] The separator for a power storage device according to Item [4] or [5], wherein when a thickness of the inorganic filler portion of the covering layer is defined as L1, and a maximum distance from a boundary between the base material and the covering layer to an outer surface of the inorganic filler of the covering layer, which is formed in a gradient shape, is defined as L2, and a maximum distance from a boundary between the base material and the covering layer to an contour of the protruding particulate polymer is defined as L3, an average value of a coverage rate (L2-L1) / (L3-L1) of a protruding portion of the protruding particulate polymer is 0.4 or more.

[7] The separator for a power storage device according to any one of Items [1] to [6], wherein the particulate polymer comprises at least one selected from the group consisting of (meth)acrylic polymers, styrene-butadiene copolymers, and copolymers containing fluorine atoms.

[8] The separator for a power storage device according to any one of Items [1] to [6], wherein the particulate polymer comprises a copolymer containing (meth)acrylic acid, butyl (meth)acrylate, and ethylhexyl (meth)acrylate as monomers.

[9] The separator for a power storage device according to any one of Items [1] to [6], wherein the particulate polymer comprises a copolymer containing a polyfunctional (meth)acrylate as a monomer.

[10] A power storage device, comprising the separator for a power storage device according to any one of Items [1] to [9].

Examples of other embodiments of the present disclosure are listed below.

[11] A separator for a power storage device, comprising a base material which is a polyolefin microporous membrane comprising a polyolefin as a primary component, and a covering layer arranged on at least one surface of the base material, wherein

the covering layer comprises an inorganic filler and a particulate polymer that is a thermoplastic polymer, and the particulate polymer comprises a particulate polymer protruding from the covering layer by 0.1-fold or greater the thickness of an inorganic filler portion of the covering layer.

[12] The separator for a power storage device according to Item [11], wherein the base material has a membrane thickness of 1 μm to 30 μm, an air permeability of 500 sec/100 $cm^3$ or less, and a post-compression porosity of 30% or more as measured in a compression test under conditions of a temperature of 70°C, a pressure of 8 MPa, and a compression time of 3 minutes.

[13] The separator for a power storage device according to Item [11] or [12], wherein a crystal long-period of the polyolefin microporous membrane as measured by small-angle X-ray scattering (SAXS) is 37.0 nm or more.

[14] The separator for a power storage device according to any one of Items [11] to [13], wherein an amount of the particulate polymer in the covering layer is 1 part by weight or more and 50 parts by weight or less relative to 100 parts by weight of the inorganic filler contained in the covering layer.

[15] The separator for a power storage device according to any one of Items [11] to [14], wherein the covering layer is formed in a gradient shape so as to become thicker toward the protruding particulate polymer.

[16] The separator for a power storage device according to any one of Items [11] to [15], wherein 20% or more of the protruding particulate polymer is in contact with a surface of the base material.

[17] The separator for a power storage device according to any one of Items [11] to [16], wherein the covering layer has a 180° peel strength from the base material of 200 gf/cm or more.

[18] The separator for a power storage device according to any one of Items [11] to [17], wherein an average number of the protruding particulate polymers adjacent to any one of the protruding particulate polymers is fewer than two.

[19] The separator for a power storage device according to any one of Items [11] to [18], wherein a ratio of an average particle size of the protruding particulate polymer to an average particle size of the inorganic filler is greater than 10.

[20] The separator for a power storage device according to any one of items [11] to [19], wherein an average value of a gradient ratio L2/L1 of the covering layer is 1.2 or more, where L1 is a thickness of the inorganic filler portion of the covering layer, and L2 is a maximum distance from a boundary line between the base material and the covering layer to an outer surface of the inorganic filler of the covering layer, which is formed in a gradient shape.

[21] The separator for a power storage device according to any one of items [11] to [20], wherein when a thickness of the inorganic filler portion of the covering layer is defined as L1, and a maximum distance from a boundary between the base material and the covering layer to an outer surface of the inorganic filler of the covering layer, which is formed in a gradient shape, is defined as L2, and a maximum distance from a boundary between the base material and the covering layer to an contour of the protruding particulate polymer is defined as L3, an average value of a coverage rate (L2-L1) / (L3-L1) of a protruding portion of the protruding particulate polymer is 0.4 or more.

[22] The separator for a power storage device according to any one of Items [11] to [21], wherein a number of the protruding particulate polymers is 50% or more of the total number of the particulate polymers contained in the covering layer.

[23] The separator for a power storage device according to any one of Items [11] to [22], wherein a number of other protruding particulate polymers present within a radius of 10 μm from any one of the protruding particulate polymers is fewer than 60.

[24] The separator for a power storage device according to any one of Items [11] to [23], wherein a methylene chloride soluble content of the separator for a power storage device is 0.05 wt% or more and 0.80 wt% or less, based on the total weight of the separator for a power storage device.

[25] The separator for a power storage device according to any one of Items [11] to [24], wherein a total amount of metal cations contained in the covering layer is 0.1 ppm or more and 100 ppm or less based on the total weight of the covering layer.

[26] The separator for a power storage device according to any one of Items [11] to [25], wherein the covering layer comprises a water-soluble polymer.

[27] The separator for a power storage device according to Item [26], wherein a content of the water-soluble polymer is 0.04 parts by weight or more and less than 2 parts by weight relative to 100 parts by weight of the inorganic filler.

[28] The separator for a power storage device according to any one of Items [11] to [27], wherein a thickness of one of the covering layers arranged on at least one of the base materials is 0.3 μm or more and 1.3 μm or less.

[29] The separator for a power storage device according to any one of Items [11] to [28], wherein the particulate polymer comprises at least one selected from the group consisting of (meth)acrylic polymers, styrene-butadiene copolymers, and copolymers containing fluorine atoms.

[30] The separator for a power storage device according to any one of Items [11] to [28], wherein the particulate polymer comprises a copolymer containing (meth)acrylic acid, butyl (meth)acrylate, and ethylhexyl (meth)acrylate as monomers.

[31] The separator for a power storage device according to any one of Items [11] to [28], wherein the particulate

polymer comprises a copolymer containing a multifunctional (meth)acrylate as a monomer.

[32] The separator for a power storage device according to any one of Items [11] to [31], wherein the particulate polymer comprises primary particles.

[33] The separator for a power storage device according to Item [32], wherein an average particle size of the primary particles is 1 μm or more and 10 μm or less.

[34] The separator for a power storage device according to any one of Items [11] to [33], having a TD direction thermal shrinkage rate at 130°C for 1 hour of 5% or less.

[35] The separator for a power storage device according to any one of Items [11] to [34], having a TD direction thermal shrinkage rate at 150°C for 1 hour of 5% or less.

[36] A power storage device comprising the separator for a power storage device according to any one of [11] to [35].

[ADVANTAGEOUS EFFECTS OF INVENTION]

According to the present disclosure, there is provided a separator for a power storage device that has high adhesive strength with electrodes, a small thermal shrinkage rate, and can improve the cycle characteristics and output characteristics of a power storage device, and a power storage device comprising the same.

BRIEF DESCRIPTION OF DRAWINGS

FIG. 1 is a schematic view of a surface of a covering layer of the separator for a power storage device according to an embodiment of the present invention.

FIG. 2 is a schematic view of a cross-section taken along line A-A of FIG. 1.

FIG. 3 is an example of a power approximation curve of post-compression porosity and post-compression air permeability.

DESCRIPTION OF EMBODIMENTS

Hereinafter, exemplary embodiments of the present disclosure (hereinafter, abbreviated as "the present embodiment") will be described in detail, but the present disclosure is not limited to the present embodiment.

As used herein, the longitudinal direction (MD) means the machine direction of the microporous membrane continuous molding, and transverse direction (TD) means the direction crossing the MD of the microporous membrane at an angle of 90°.

In the present description, the upper and lower limits of each numerical range can be arbitrarily combined. Furthermore, a certain constituent material comprising a specific component as a primary component means that the content of the specific component constitutes the largest weight in the weight of the constituent material. Unless otherwise specified, the physical properties or numerical values described in the present description are measured or calculated by the methods described in the Examples.

<<Separator for Power Storage Device>>

The separator for a power storage device of the present embodiment comprises a base material which is a polyolefin microporous membrane comprising a polyolefin as a primary component, and a covering layer arranged on at least one surface of the base material. The covering layer comprises an inorganic filler and a particulate polymer that is a thermoplastic polymer.

<Amount of Particulate Polymer>

The amount of particulate polymer is 1 part by weight or more and 50 parts by weight or less, preferably 3 parts by weight or more and 50 parts by weight or less, more preferably 5 parts by weight or more and 30 parts by weight or less, and further preferably 10 parts by weight or more and 25 parts by weight or less, relative to 100 parts by weight of the inorganic filler. When the amount of particulate polymer is 1 part by weight or more and 50 parts by weight or less, it is possible to increase the adhesive strength with the electrodes while maintaining ion permeability. From the viewpoint of improving heat shrinkage resistance, the amount is preferably 10 parts by weight or less.

<Protruding Amount of Particulate Polymer>

The particulate polymer comprises a particulate polymer protruding from the covering layer by 0.1-fold or more the thickness of the inorganic filler portion of the covering layer.

In the present description, the "thickness of the inorganic filler portion of the covering layer" means the distance (L1) between the surface of the polyolefin microporous membrane and the outermost surface of the layer of inorganic fillers stacked thereon (layer of inorganic fillers), and is measured from an SEM image of a cross-section of the covering layer. Note that the "inorganic filler portion" means the portion that does not contain particulate polymer and is 1.5D or more away from the center of each protruding particulate polymer in the horizontal direction (the surface direction of the covering layer) when the diameter of each protruding particulate polymer is D. The measurement conditions are explained in the Examples.

Since the protrusion of the particulate polymer is 0.1-fold or more the thickness of the inorganic filler portion of the covering layer, the adhesive strength with the electrode can be increased. Since the protrusion of the particulate polymer is 0.1-fold or more the thickness of the inorganic filler portion of the covering layer, gaps are formed between the separator and the electrodes. These gaps can mitigate the effect of internal expansion accompanying charging and discharging of the power storage device, suppress distortion of the wound body, and improve cycle characteristics. In particular, by combining a particulate polymer with a large particle diameter to a degree that protrudes 0.1-fold or more the thickness of the covering layer with a base material having features (6) and/or (7) described later, not only can the air permeability of the base material portion that does not contact the particulate polymer when bonded to the electrode be maintained in a suitable state, but also the air permeability can be maintained in the base material portion (portion receiving a load) that contacts the electrode via the particulate polymer, and as a result, excellent cycle characteristics and output characteristics can be realized. From this viewpoint, the protrusion of the particulate polymer is preferably 0.2-fold or more or 0.3-fold or more. From the viewpoint of preventing the particulate polymer from flaking from the separator, the protrusion of the particulate polymer is preferably 5-fold or less, more preferably 4-fold or less, 3-fold or less, 2-fold or less, 1-fold or less, or 0.4-fold or less.

In the present description, "protruding" means that the particulate polymer protrudes toward the surface side of the covering layer beyond the "thickness of the inorganic filler portion of the covering layer." In the protruding portion of the particulate polymer (hereinafter referred to as the "protruding portion"), the particulate polymer need not be exposed on the surface of the covering layer, and at least a part or all of the protruding portion may be covered with the inorganic filler. From the viewpoint of preventing disengagement of the particulate polymer from the covering layer and obtaining a higher adhesive strength, it is preferable that at least a part of the periphery of the protruding portion be covered with the inorganic filler. From the viewpoint of obtaining a higher adhesive strength by securing the contact area between the particulate polymer and the electrodes, it is preferable that the center of the protruding portion be exposed on the surface of the covering layer.

In the present description, the "state in which the particulate polymer protrudes from the covering layer by 0.1-fold or more the thickness of the inorganic filler portion of the covering layer" means that when the thickness of the inorganic filler portion of the covering layer measured from an SEM image of the cross section of the covering layer is L1 and the maximum distance from the boundary between the base material and covering layer to the contour of the protruding particulate polymer is L3, the average value of the ratio (L3-L1)/L1 is 0.1 or more. In the present description, "the maximum distance from the boundary between the base material and covering layer to the contour of the protruding particulate polymer" means the distance to the point on the contour of the protruding particulate polymer that is farthest from the boundary between the base material and covering layer.

In the present description, the "state in which the particulate polymer protrudes from the covering layer by 0.1-fold or more the thickness of the inorganic filler portion of the covering layer" means, in other words, that the maximum distance (L3) from the boundary line between the base material and covering layer to the contour of the protruding particulate polymer, as measured from an SEM image of the cross section of the covering layer, is 1.1-fold or more the thickness (L1) of the inorganic filler portion of the covering layer.

<Gradient Shape of Covering Layer, Contact Ratio Between Particulate Polymer and Base Material, 180° Peel Strength, Average Number of Adjacent Particulate Polymer Particles, and Average Particle Size Ratio>

The separator for a power storage device of the present embodiment preferably has one or more of the following features (1) to (5): (1) the covering layer is formed in a gradient shape so as to become thicker toward the protruding particulate polymer; (2) 20% or more of the protruding particulate polymers are in contact with a surface of the base material; (3) the 180° peel strength of the covering layer from the base material (hereinafter also simply referred to as "180° peel strength") is 200 gf/cm (196 N/m) or more; (4) the average number of protruding particulate polymers adjacent to any one protruding particulate polymer (hereinafter also simply referred to as "average number of adjacent particulate polymers") is fewer than two; and (5) the ratio of the average particle size of the protruding particulate polymers to the

average particle size of the inorganic filler, i.e., the ratio calculated as the average particle size of the particulate polymer/the average particle size of the inorganic filler (hereinafter also simply referred to as "average particle size ratio"), is greater than 10. By having at least one of the above features (1) to (5), there can be provided a separator for a power storage device that has higher adhesive strength with the electrodes and a smaller thermal shrinkage rate.

Feature (1):

In the separator for a power storage device, the covering layer is preferably formed in a gradient shape so as to become thicker toward the protruding particulate polymer. This prevents disengagement of the particulate polymer from the covering layer, and increases the adhesive strength with the electrodes. In the present description, the term "gradient shape" means that when the thickness of the inorganic filler portion of the covering layer is defined as L1 and the maximum distance from the boundary between the base material and the covering layer to the outer surface of the inorganic filler of the covering layer formed in a gradient shape is defined as L2, the average value of the gradient ratio L2/L1 of the covering layer is 1.1 or more. For an example of the relationship between L1 and L2, refer to the schematic view of FIG. 2. The gradient is preferably such that the thickness of the covering layer changes continuously so that the covering layer gradually becomes thicker toward the protruding particulate polymer, and preferably does not include discontinuous changes due to missing parts of the covering layer. The absence of missing parts of the covering layer tends to improve heat resistance and cycle characteristics. The gradient may be gentler as it moves away from the protruding particulate polymer, and may be steeper as it approaches the protruding portion of the protruding particulate polymer. When the inorganic filler covers at least a part or all of the protruding portion, the gradient on the protruding portion may become gentle again toward the center of the protruding portion. The average value of the gradient ratio L2/L1 of the covering layer is preferably 1.2 or more, 1.3 or more, 1.4 or more, 1.5 or more, or 1.7 or more.

By forming the covering layer in a gradient shape so as to become thicker toward the protruding particulate polymer, the inorganic filler may follow the contour of the particulate polymer to cover at least a part or all of the protruding portion. It is preferable that the inorganic filler follow the contour of the particular polymer to cover a part of the periphery of the protruding portion. It is also preferable that the vicinity of the center of the protruding portion be exposed on the surface of the covering layer. When the maximum distance from the boundary line between the base material and the covering layer to the contour of the protruding particulate polymer (the distance from the boundary line between the base material and the covering layer to the point on the contour of the protruding particulate polymer that is the farthest from the boundary line between the base material and the covering layer) is defined as L3, the average value of the coverage rate (L2-L1) / (L3-L1) of the protruding portion is preferably 0.4 or more. Regarding the relationship between L1, L2 and L3, refer to the schematic view of FIG. 2 as an example. By setting the average value of the gradient ratio L2/L1 to 1.1 or more, or the average value of the coverage rate (L2-L1)/(L3-L1) to 0.4 or more, disengagement of the particulate polymer from the covering layer is prevented, and the adhesive strength with the electrodes is increased. The upper limit of the average value of the gradient ratio L2/L1 is not particularly limited, and may be 5.0 or less, 4.0 or less, 3.0 or less, 2.8 or less, 2.5 or less, 2.3 or less, 2.0 or less, or 1.8 or less, from the viewpoint of securing the adhesive area between the particulate polymer and the electrodes and increasing the adhesive strength with the electrodes. The upper limit of the coverage rate (L2-L1) / (L3-L1) is preferably less than 1.0, 0.9 or less, 0.8 or less, or 0.7 or less. A coverage rate of 1.0 or more means that the inorganic filler on the protruding portion of the particulate polymer reaches the top of the contour of the protruding particulate polymer (the point farthest from the boundary line between the base material and the covering layer). When the coverage rate is less than 1.0, the contact area between the particulate polymer and the electrodes is secured, and the adhesive strength with the electrodes is increased. When the coverage rate is 0.8 or less, the contact area between the particulate polymer and the electrodes is increased, and the adhesive strength with the electrodes is increased.

Feature (2):

In the separator for a power storage device, the contact ratio between the particulate polymer protruding from the covering layer in the covering layer and the surface of the base material is preferably 20% or more, more preferably 50% or more, and further preferably 70% or more. The "contact ratio" is calculated from an image obtained by observing the cross section of the covering layer of the separator for a power storage device with an SEM. By increasing the particulate polymer protruding from the covering layer and contacting the base material, the binding strength between the base material and the particulate polymer is further increased, the 180° peel strength is improved, and the adhesive strength with the electrodes is increased. The upper limit of the contact ratio between the particulate polymer protruding from the covering layer in the covering layer and the surface of the base material is not particularly limited, and may be less than 100% or may be 100%.

Feature (3):

The separator for a power storage device has a 180° peel strength of preferably 200 gf/cm or more, more preferably 230 gf/cm or more, and further preferably 250 gf/cm or more. The "180° peel strength" is the strength when the covering layer is peeled off so that the surface of the covering layer facing the base material forms an angle of 180° with the base material. By setting the 180° peel strength to 200 gf/cm or more, the adhesive strength with the electrodes is increased and thermal shrinkage is suppressed. The upper limit of the 180° peel strength is not particularly limited, and may be 500 gf/cm or less.

Feature (4):

In the separator for a power storage device, the average number of adjacent particulate polymers is preferably fewer than 2, and more preferably fewer than 1. "Adjacent" means that the shortest distance between the outer edge of one particulate polymer and the outer edge of another particulate polymer is 0.2 μm or less in an image obtained by observing the surface of the covering layer of the separator for a power storage device with an SEM. The average number of adjacent particulate polymers being fewer than 2 means that the particulate polymers are uniformly dispersed in the covering layer, which improves the 180° peel strength, increases the adhesive strength with the electrodes, suppresses thermal shrinkage, and ensures the uniformity of the thickness of the covering layer. The lower limit of the average number of adjacent particulate polymers is not particularly limited, and may be greater than 0 or may be 0.

Feature (5):

In the separator for a power storage device, the ratio of the average particle size of the protruding particulate polymer to the average particle size of the inorganic filler is preferably greater than 10. Each "average particle size" is measured from an image obtained by observing the surface of the covering layer of the separator for a power storage device with an SEM. The measurement conditions are explained in the Examples. When the ratio of the average particle size is greater than 10, the particulate polymer is likely to form a structure protruding from the surface of the covering layer, and thus, the adhesive strength with the electrodes is increased and thermal shrinkage is suppressed. From the viewpoint of achieving both permeability and adhesive strength of the separator, the upper limit of the ratio of the average particle size is preferably 50 or less, more preferably 35 or less, and further preferably 25 or less, 22 or less, or 20 or less.

The separator for a power storage device of the present embodiment is any combination of the above features (1) to (5), i.e.: (1) and (2); (1) and (3); (1) and (4); (1) and (5); (2) and (3); (2) and (4); (2) and (5); (3) and (4); (3) and (5); (4) and (5); (1), (2), and (3); (1), (2), and (4); (1), (2), and (5); (1), (3), and (4); (1), (3), and (5); (1), (4), and (5); (2), (3), and (4); (2), (3), and (5); (2), (4), and (5); (3), (4), and (5); (1), (2), (3), and (4); (1), (2), (3), and (5); (1), (2), (4), and (5); (1), (3), (4), and (5); (2), (3), (4), and (5); or (1), (2), (3), (4) and (5). Among these, from the viewpoint of higher adhesive strength and smaller thermal shrinkage rate, the combination of (1), (2), and (3) is preferable, and specifically, the covering layer is formed in a gradient shape so as to become thicker toward the protruding particulate polymer, the contact ratio between the particulate polymer protruding from the covering layer in the covering layer and the surface of the base material is 20% or more, and the 180° peel strength is 200 gf/cm or more.

<Number of Particulate Polymers within 10 μm Radius>

In the separator for a power storage device of the present embodiment, the number of other protruding particulate polymers present within a radius of 10 μm from any one protruding particulate polymer is preferably fewer than 60, more preferably fewer than 40, further preferably fewer than 15, and even further preferably fewer than 5. This makes it possible to suppress variations in adhesive strength. The lower limit of the number of particulate polymers within a radius of 10 μm is not particular limited, and may be 0, but may be 1 or more in order to appropriately densify the particulate polymer to improve adhesive strength.

<Methylene Chloride Soluble Content>

In the separator for a power storage device of the present embodiment, the methylene chloride soluble content is preferably 0.05 wt% or more and 0.80 wt% or less, more preferably 0.10 wt% or more and 0.60 wt% or less, and further preferably 0.15 wt% or more and 0.50 wt% or less, based on the total weight of the separator for a power storage device. The "soluble content" of methylene chloride means the component extracted into methylene chloride when the separator is immersed in methylene chloride. The plasticizer mixed when producing the base material is mainly extracted as the methylene chloride soluble content. By containing 0.10 wt% or more of the methylene chloride soluble content, the binding strength between the base material and the covering layer is further increased, and it is easier to adjust the 180° peel

strength to 200 gf/cm or more. By containing a methylene chloride soluble content of 0.60 wt% or less, the internal resistance of the battery can be reduced. Methods for adjusting the methylene chloride soluble content to 0.05 wt% or more and 0.80 wt% or less include a method involving, at the plasticizer extraction step during base material production, adjusting the extraction time, type of extraction solvent, temperature of the extraction solvent, number of extractions, etc., in a batchwise system, and adjusting the extraction time, type of extraction solvent, temperature of the extraction solvent, supply amount of the extraction solvent, etc., in a continuous system.

<Metal Cations>

In the separator for a power storage device of the present embodiment, the total amount of metal cations contained in the covering layer is preferably 0.1 ppm or more and 100 ppm or less, more preferably 0.1 ppm or more and 70 ppm or less, and further preferably 0.1 ppm or more and 50 ppm or less, based on the total weight of the covering layer. When the total amount of metal cations is adjusted to be small, the inorganic filler and the particulate polymer are easily uniformly dispersed and applied in the formation of the covering layer. Examples of metal cations include sodium ions ($Na^+$), calcium ions ($Ca^{2+}$), and magnesium ions ($Mg^{2+}$). Examples of the method for adjusting the total amount of metal cations to 0.1 ppm or more and 100 ppm or less include a method of washing the filler, which is the raw material of the covering layer, with water before use. The number of washings may be one or more, but the total amount of metal cations contained in the filler becomes less as the number of washings increases.

<Thermal Shrinkage Rate>

In the separator for a power storage device of the present embodiment, the TD thermal shrinkage rate at 130°C for 1 hour is preferably 5% or less, more preferably 0% or more and 3% or less, and further preferably 0% or more and 1% or less. The TD thermal shrinkage rate at 150°C for 1 hour is preferably 5% or less, more preferably 0% to 3% or less, and further preferably 0% to 1% or less. When the TD thermal shrinkage rate is 5% or less, it is possible to more effectively suppress the occurrence of short circuits in locations other than the location to which an external force is applied when heat is generated due to short circuit during a crash test. This makes it possible to more reliably prevent temperature rise of the entire battery, and the smoke and fire that may occur as a result. The thermal shrinkage rate of the separator can be adjusted by appropriately combining a stretching operation and heat treatment of the base material described above. At the same time as suppressing the TD thermal shrinkage rate, the MD thermal shrinkage rate is also preferably 5% or less, more preferably 0% or more and 3% or less, and further preferably 0% or more and 1% or less.

<Air Permeability of Separator>

The air permeability of the separator for a power storage device is preferably 10 sec/100 $cm^3$ or more and 10,000 sec/100 $cm^3$ or less, more preferably 10 sec/100 $cm^3$ or more and 1,000 sec/100 $cm^3$ or less, further preferably 50 sec/100 $cm^3$ or more and 500 sec/100 $cm^3$ or less, and particularly preferably 80 sec/100 $cm^3$ or more and 250 sec/100 $cm^3$ or less. This allows high ion permeability to be obtained. The air permeability is the air permeability resistance measured in accordance with JIS P-8117.

<Base Material>

The base material is a polyolefin microporous membrane comprising polyolefin as a primary component, and preferably has the following feature (6) or (7) or a combination thereof: (6) the membrane thickness is 1 μm to 30 μm, the air permeability is 500 sec/100 $cm^3$ or less, and the post-compression porosity measured in a compression test under conditions of a temperature of 70°C, a pressure of 8 MPa, and a compression time of 3 minutes is 30% or more; and (7) the crystal long-period of the polyolefin microporous membrane as measured by small-angle X-ray scattering (SAXS) is 37.0 nm or more.

Feature (6):

Without being bound by theory, it is believed that when the polyolefin microporous membrane has an air permeability of 500 sec/100 $cm^3$ or less and a post-compression porosity of 30% or more within a membrane thickness range of 1 μm to 30 μm, for example, in the production of a nonaqueous secondary battery using a polyolefin microporous membrane as a separator, the electrical resistance of the polyolefin microporous membrane can be reduced or an increase in electrical resistance can be suppressed after a pressing step, whereby high output and high cycle characteristics of the nonaqueous secondary battery can be achieved. The suppression of the increase in resistance by the polyolefin microporous membrane is remarkable when an electrode that easily expands and contracts in the cell of the nonaqueous

secondary battery is used, and is more remarkable when a high-capacity electrode used in an on-board battery or a silicon (Si)-containing negative electrode is used. The method of performing the compression test under conditions of a temperature of 70°C, a pressure of 8 MPa, and a compression time of 3 minutes is described in detail in the Examples.

The post-compression porosity is considered to be related to the structure of the primary component of the polyolefin microporous membrane, which reduces the resistance and/or suppresses the increase in resistance in non-aqueous secondary batteries. From the viewpoints described above, the post-compression porosity of the polyolefin microporous membrane is preferably 31% or more, more preferably 32% or more, and further preferably 33% or more. The upper limit of the post-compression porosity of the polyolefin microporous membrane can be determined in accordance with the porosity before compression, and may be, for example, preferably 60% or less, and more preferably 50% or less.

The post-compression porosity of the polyolefin microporous membrane can be adjusted within the above-described numerical range in, for example, the production process of the polyolefin microporous membrane by controlling the molecular weight of the polyolefin raw material, the molecular weight and content of the polyethylene raw material, the stretching ratio in the biaxial stretching step, the preheating coefficient in the biaxial stretching step, the stretching coefficient in the biaxial stretching step, the MD/TD stretching temperature in the biaxial stretching step, the heat setting temperature, etc. Alternatively, the post-compression porosity of the polyolefin microporous membrane can be adjusted within the above-described numerical range by controlling the molecular weight of the polyolefin raw material, the molecular weight and content of the polyethylene raw material, the stretching ratio in the biaxial stretching step, the preheating coefficient in the biaxial stretching step, the stretching coefficient in the biaxial stretching step, the ratio of the preheating coefficient to the stretching coefficient, etc.

It is preferable to compare the porosity of the polyolefin microporous membrane before and after the compression test in order to specify the structure of the primary component of the membrane that can reduce the resistance and/or suppress the increase in resistance in a non-aqueous secondary battery and achieve high output and high cycle characteristics. The porosity of the polyolefin microporous membrane before the compression test or not subjected to the compression test (hereinafter simply referred to as "porosity") is measured by the method described in the Examples, and the preferable numerical range is described later.

The membrane thickness of the polyolefin microporous membrane is preferably 3 μm to 20 μm, more preferably 5 μm to 16 μm, and further preferably 6 μm to 13 μm, from the viewpoint of reducing the electrical resistance and suppressing the increase in resistance as described above, as well as reducing the size. The membrane thickness of the microporous membrane can be optimized by, for example, the distance between the cast rollers, the stretching ratio in the stretching step, etc.

The air permeability of the polyolefin microporous membrane before compression can be measured by the method described in the section "Air Permeability Before Compression (sec/100 $cm^3$)" in the Examples. The air permeability of the polyolefin microporous membrane is preferably 400 sec/100 $cm^3$ or less, more preferably 300 sec/100 $cm^3$ or less, further preferably 200 sec/100 $cm^3$ or less, and particularly preferably 160 sec/100 $cm^3$ or less from the viewpoint of the ion permeability of the microporous membrane and the high output of the non-aqueous secondary battery in addition to the reduction in electrical resistance and the suppression of resistance increase described above, and is preferably 40 sec/100 $cm^3$ or more from the viewpoint of the mechanical strength of the microporous membrane. The air permeability of the microporous membrane can be optimized in the same manner as the control means for post-compression porosity described above.

Feature (7):

Without being bound by theory, when the polyolefin microporous membrane has a crystal long-period of 37.0 nm or more, surprisingly, the structural uniformity and compression resistance of the polyolefin microporous membrane are improved, and the reaction uniformity in the nonaqueous secondary battery is also improved accordingly. As a result, it is believed that the nonaqueous secondary battery can achieve high output and high cycle characteristics even after the pressing step in the production of the nonaqueous secondary battery using the polyolefin microporous membrane as a separator. The improvement in the structural uniformity and compression resistance of the polyolefin microporous membrane is remarkable when an electrode that is prone to expansion and contraction is used in the cell of a nonaqueous secondary battery, and is more remarkable when a high-capacity electrode or a silicon (Si)-containing negative electrode used in an in-vehicle battery or the like is used.

The SAXS measurement of the polyolefin microporous membrane will be described in detail in the Examples. Without being bound by theory, it is believed that the crystal long-period obtained by the SAXS measurement is related to the structure of polyethylene that improves the structural uniformity and compression resistance of the membrane and the reaction uniformity in the non-aqueous secondary battery. In addition, it is believed that the crystal long-period of the polyolefin microporous membrane correlates with the post-compression porosity of the membrane. From the viewpoints described above, the crystal long-period of the polyolefin microporous membrane is preferably 37.0 nm to 60.0 nm, 38.0 nm to 55.0 nm, 40.0 nm to 50.0 nm, or 42.0 nm to 50.0 nm.

The crystal long-period of the polyolefin microporous membrane can be adjusted within the above-described numerical range by controlling, for example, the molecular weight of the polyolefin raw material, the molecular weight and content of the polyethylene raw material, the stretching ratio in the biaxial stretching step, the preheating coefficient in the biaxial stretching step, the stretching coefficient in the biaxial stretching step, the MD/TD stretching temperature in the biaxial stretching step, the heat setting temperature, etc., in the production process of the polyolefin microporous membrane.

The membrane thickness of the polyolefin microporous membrane has a lower limit of 1 μm or more in order to achieve mechanical strength and maintain insulation. In order to improve the safety of the battery by ensuring the amount of resin per unit area, the membrane thickness is preferably 2 μm or more, and more preferably 3 μm or more. In order to ensure insulation when lithium dendrites grow, the membrane thickness is preferably 6 μm or more, and more preferably 10 μm or more. The membrane thickness of the polyolefin microporous membrane is preferably 16 μm or less from the viewpoint of increasing the capacity of the non-aqueous secondary battery. The membrane thickness of the microporous membrane can be adjusted by controlling the distance between the cast rollers, the stretching ratio in the stretching step, etc.

The air permeability of the polyolefin microporous membrane before compression is preferably 30 sec/100 $cm^3$ or more and 250 sec/100 $cm^3$ or less, more preferably 40 sec/100 $cm^3$ or more and 200 sec/100 $cm^3$ or less, further preferably 50 sec/100 $cm^3$ or more and 180 sec/100 $cm^3$ or less, and even further preferably 60 sec/100 $cm^3$ or more and 150 sec/100 $cm^3$ or less. The air permeability of the microporous membrane before compression is preferably 40 sec/100 $cm^3$ or more from the viewpoint of ensuring pin puncture strength, and preferably 200 sec/100 $cm^3$ or less from the viewpoint of output characteristics.

Points shared by features (6) and (7):

Examples of polyolefin microporous membranes include porous membranes containing polyolefin resins; porous membranes containing, in addition to polyolefin resins, resins such as polyethylene terephthalate, polycycloolefin, polyethersulfone, polyamide, polyimide, polyimideamide, polyaramid, polycycloolefin, nylon, and polytetrafluoroethylene; woven polyolefin fibers (woven fabrics); and nonwoven polyolefin fibers. Among these, from the viewpoints of lowering or suppressing an increase in the electrical resistance of the membrane, the compression resistance and structural uniformity of the membrane, etc., a microporous membrane comprising a polyolefin resin (hereinafter, polyolefin resin porous membrane) is preferable, and a microporous membrane comprising polyethylene as a primary component is more preferable.

From the viewpoint of improving the shutdown performance when a polyolefin microporous membrane for a non-aqueous secondary battery is formed, the polyolefin resin porous membrane is preferably a porous membrane formed from a polyolefin resin composition in which 50 wt% or more and 100 wt% or less of the resin components constituting the porous membrane is a polyolefin resin.

Since polyolefins have excellent applicability of their coating liquid when applying the coating liquid on the membrane, they are advantageous for making the separator thinner, increasing the active material ratio in the power storage device, and increasing the capacity per volume. The polyolefin microporous membrane can be one that has been used as a base material for conventional separators, and is preferably a porous membrane with fine pores that has no electronic conductivity, has ionic conductivity, and is highly resistant to organic solvents.

(Base Material Ingredients)

The base material is a polyolefin microporous membrane comprising a polyolefin as a primary component. "Comprising...as a primary component" means that the weight of the target component (polyolefin) constitutes the largest weight in the entire base material. The content of polyolefin in the polyolefin microporous membrane is, for example, more than 50 parts by weight, preferably 75 parts by weight or more, more preferably 85 parts by weight or more, further preferably 90 parts by weight or more, even further preferably 95 parts by weight or more, particularly preferably 98 parts by weight or more, and may be 100 parts by weight, based on the total weight of the base material.

The polyolefin is not particularly limited, and may be a polyolefin that can be used in convention extrusion, injection, inflation, blow molding, etc. Examples of polyolefins include homopolymers containing ethylene, propylene, 1-butene, 4-methyl-1-pentene, 1-hexene, or 1-octene as a monomer, as well as copolymers and multi-stage polymers of two or more of these monomers. These homopolymers, copolymers, and multi-stage polymers may be used alone or in combination of two or more thereof.

From the viewpoints of reducing or suppressing an increase in the electrical resistance of the membrane, compressive resistance and structural uniformity of the membrane, examples of the polyolefin include polyethylene, polypropylene, and polybutene, and more specifically, low-density polyethylene, linear low-density polyethylene, medium-density polyethylene, high-density polyethylene, ultra-high molecular weight polyethylene, isotactic polypropylene,

atactic polypropylene, ethylene-propylene random copolymers, polybutene, and ethylene propylene rubber.

These may be used alone or in combination of two or more thereof. Among these, the polyolefin is preferably at least one selected from the group consisting of low-density polyethylene, linear low-density polyethylene, medium-density polyethylene, high-density polyethylene, and ultra-high molecular weight polyethylene, from the viewpoint of the shutdown property in which the pores are occluded by thermal melting. In particular, high-density polyethylene is preferable because of the low melting point and high strength thereof, and polyethylene having a density of 0.93 g/cm$^3$ or more as measured in accordance with JIS K7112 is more preferable. The polymerization catalyst used in the production of these polyethylenes is not particularly limited, and examples thereof include Ziegler-Natta catalysts, Phillips catalysts, and metallocene catalysts. It is preferable that the primary component of the polyolefin be polyethylene, and the content ratio of polyethylene to the total weight of the polyolefin in the base material be 50 parts by weight or more.

In order to improve the heat resistance of the base material, the polyolefin microporous membrane preferably contains polypropylene and a polyolefin other than polypropylene. Examples of polyolefin resins other than polypropylene include homopolymers containing ethylene, 1-butene, 4-methyl-1-pentene, 1-hexene, or 1-octene as a monomer, as well as copolymers and multi-stage polymers of two or more of these monomers.

The amount of the polypropylene relative to the total weight of polyolefin in the base material (polypropylene/-polyolefin) is not particularly limited, and from the viewpoint of achieving both heat resistance and suitable shutdown function, it is preferably 1 part by weight to 35 parts by weight, more preferably 3 parts by weight to 20 parts by weight, and further preferably 4 parts by weight to 10 parts by weight. From the same viewpoint, the content ratio of olefin resin other than polypropylene, for example, polyethylene, relative to the total weight of polyolefin in the polyolefin microporous membrane (olefin resin other than polypropylene / polyolefin) is preferably 65 parts by weight to 99 parts by weight, more preferably 80 parts by weight to 97 parts by weight, and further preferably 90 parts by weight to 96 parts by weight.

From the viewpoint of crystallinity, high strength, and compression resistance, during the formation of the polyolefin microporous membrane for a non-aqueous secondary battery, the polyolefin resin porous membrane is preferably a porous membrane formed from a polyethylene composition in which polyethylene accounts for 50 wt% or more and 100 wt% or less of the resin components constituting the microporous membrane. The proportion of polyethylene in the resin components constituting the porous membrane is more preferably 60 wt% or more and 100 wt% or less, further preferably 70 wt% or more and 100 wt% or less, and further preferably 90 wt% or more and 100 wt% or less.

When the microporous membrane is a polyolefin resin porous membrane, the viscosity average molecular weight (Mv) of the polyolefin resin used as a raw material is preferably 30,000 or more and 6,000,000 or less, more preferably 80,000 or more and 3,000,000 or less, and further preferably 150,000 or more and 2,000,000 or less. It is preferable that the viscosity average molecular weight be 30,000 or more because the polymers tend to be entangled to achieve high strength. Conversely, it is preferable that the viscosity average molecular weight be 6,000,000 or less from the viewpoint of improving the moldability in the extrusion and stretching steps.

When the polyolefin resin porous membrane comprises polyethylene as a primary component, the lower limit of Mv of at least one polyethylene is preferably 600,000 or more, and more preferably 700,000 or more, from the viewpoint of orientation and rigidity of the membrane, and the upper limit of Mv of the polyethylene may be, for example, 2,000,000 or less. From the same viewpoint, the proportion of the polyethylene having an Mv of 700,000 or more in the polyolefin resin constituting the polyolefin resin porous membrane is preferably 50 wt% or more, more preferably 60 wt% or more, and further preferably 70 wt% or more, and may be 100 wt%. From the viewpoint of a reduction in fluidity when the membrane melts and short circuit resistance during pin penetration testing, the proportion of the polyethylene having an Mv of 600,000 or more in the polyolefin resin constituting the polyolefin resin porous membrane is preferably 30 wt% or more, more preferably 50 wt% or more, further preferably 60 wt% or more, and even further preferably 70 wt% or more, and may be 100 wt%.

The viscosity average molecular weight (Mv) is calculated from the intrinsic viscosity [η] measured at a measurement temperature of 135°C using decalin as a solvent in accordance with ASTM-D4020, using the following formula:

$$\text{Polyethylene: } [\eta] = 6.77 \times 10^{-4} Mv^{0.67} \text{ (Chiang formula)}$$

$$\text{Polypropylene: } [\eta] = 1.10 \times 10^{-4} Mv^{0.80}$$

For example, instead of using a polyolefin having a viscosity average molecular weight of less than 1 million alone, a mixture of a polyolefin having a viscosity average molecular weight of 2 million and a polyolefin having a viscosity average molecular weight of 270,000, the viscosity average molecular weight of which is less than 1 million, may be used.

The base material may contain other resins besides polyolefins, such as polyethylene terephthalate, polycycloolefin, polyethersulfone, polyamide, polyimide, polyimideamide, polyaramid, polycycloolefin, nylon, and polytetrafluoroethylene.

The base material may comprise arbitrary additives. Such additives are not particularly limited, and examples thereof include plasticizers, polymers other than polyolefins, inorganic particles, antioxidants such as phenol-based, phosphorus-based, and sulfur-based, metal soaps such as calcium stearate and zinc stearate, ultraviolet absorbers, light stabilizers, antistatic agents, antifogging agents, and coloring pigments. The total content of these additives is preferably 20 parts by weight or less, more preferably 10 parts by weight or less, and further preferably 5 parts by weight or less, relative to 100 parts by weight of the polyolefin resin in the polyolefin microporous membrane.

The base material preferably comprises a plasticizer. When the base material comprises a plasticizer, the binding strength between the base material and the covering layer is improved, and the 180° peel strength can more easily be controlled to 200 gf/cm or more. The amount of the plasticizer is preferably 0.1 parts by weight or more and 1.6 parts by weight or less, more preferably 0.2 parts by weight or more and 1.2 parts by weight or less, and further preferably 0.3 parts by weight or more and 1.0 part by weight or less, based on the total weight of the base material. By using the plasticizer in an amount within the above range, the binding strength between the base material and the covering layer can be improved while reducing the internal resistance of the battery. Examples of plasticizers include hydrocarbons such as liquid paraffin, esters such as dioctyl phthalate and dibutyl phthalate, and higher alcohols such as oleyl alcohol and stearyl alcohol. Among these, the plasticizer is preferably liquid paraffin.

When the polyolefin resin porous membrane comprises polyethylene as a primary component, it is preferable that the crystallite size in the MDND plane (110) of the polyethylene be 28 nm or less. The MDND plane (110) crystallite size of the polyethylene can be measured by X-ray diffraction (XRD) or wide-angle X-ray scattering (WAXS) as described in detail in the Examples.

Without being bound by theory, when the MDND plane (110) crystallite size of the polyethylene is 28.0 nm or less, the polyolefin microporous membrane containing the polyethylene becomes rigid and the compression resistance of the membrane tends to improve, whereby high output and high cycle characteristics can be achieved even after the pressing step in the production of a non-aqueous secondary battery. From this viewpoint, the MDND plane (110) crystallite size of the polyethylene is more preferably 27.0 nm or less, further preferably 10.0 nm to 27.0 nm, even further preferably 15.0 nm to 26.0 nm, particularly preferably 15.0 nm to 25.0 nm, and even more particularly preferably 15.0 nm to 22.0 nm. In particular, when the MDND plane (110) crystallite size of the polyethylene is 22.0 nm or less, the rigidity of the membrane is strengthened and the compression resistance is improved. The MDND plane (110) crystallite size of the polyethylene can be adjusted within the above-described numerical range by controlling, for example, the molecular weight of the polyolefin raw material, the molecular weight of the polyethylene raw material, the stretching ratio in the biaxial stretching step, the preheating coefficient in the biaxial stretching step, and the stretching coefficient in the biaxial stretching step, in the production process of the polyolefin microporous membrane.

From the viewpoint of making the membrane rigid for the membrane to have an improved compression resistance, the polyolefin resin contained in the polyolefin resin porous membrane preferably has a melting point in the range of 120°C or higher and 150°C or lower, and more preferably in the range of 125°C or higher and 140°C or lower, and/or a first peak temperature of DSC preferably in the range of 136°C to 144°C.

From the viewpoints of crystallinity, high strength, compression resistance, and suppression of electrical resistance, when the polyolefin microporous membrane is formed as a separator for a non-aqueous secondary battery, the proportion of polyethylene in the polyolefin resin is preferably 30 wt% or more, more preferably 50 wt% or more, further preferably 70 wt% or more, and even further preferably 80 wt% or more, based on the weight of the entire polyolefin resin, and is 100 wt% or less, preferably 97 wt% or less, and more preferably 95 wt% or less. In addition, it is preferable from the viewpoint of strength expression that the proportion of polyethylene (PE) in the polyolefin resin be 100 wt%. It is also preferable from the viewpoint of fuse behavior being expressed with high responsiveness that the proportion of PE in the polyolefin resin be 50 wt% or more.

The polyolefin resin composition may comprise arbitrary additives. Examples of additives include polymers other than polyolefin resins; inorganic fillers; antioxidants such as phenol-based, phosphorus-based, and sulfur-based antioxidants; metal soaps such as calcium stearate and zinc stearate; ultraviolet absorbers; light stabilizers; antistatic agents; antifogging agents; and coloring pigments. The total amount of these additives is preferably 20 wt% or less, more preferably 10 wt% or less, and further preferably 5 wt% or less, based on 100 wt% of the polyolefin resin, from the viewpoint of improving the shutdown performance.

The type, molecular weight, and composition of the polyolefin resin constituting the polyolefin resin porous membrane can be adjusted, for example, by controlling the type, molecular weight, and blending ratio of polymer raw materials such as polyolefin in the production process of the polyolefin microporous membrane. For a multilayer polyolefin resin porous membrane having a structure in which two or more layers of the same or different polyolefin resin microporous membranes, the adjustment can be made as described above.

(Base Material Structure)

Polyolefin microporous membranes have a porous structure in which a large number of very fine pores gather to form dense interconnected pores. As a result, they have the characteristics of being extremely excellent in ion permeability when containing an electrolyte solution, as well as being very strong.

The average membrane thickness of the polyolefin microporous membrane before compression is preferably 1 μm to 16 μm, more preferably 3 μm to 13 μm, and further preferably 5 μm to 12 μm, from the viewpoints of high ion permeability and suitable rate characteristics, and of reducing the volume occupied by the separator in high-capacity batteries to improve battery capacity. The average membrane thickness of the polyolefin microporous membrane can be adjusted within the above numerical range by controlling the distance between the cast rollers, the cast clearance, the stretch ratio during the biaxial stretching step, the HS ratio, and the HS temperature.

The porosity of the microporous membrane before compression is preferably 20% or more, more preferably 35% or more, further preferably 38% or more, even further preferably 40% or more, and particularly preferably 45% or more, from the viewpoint of achieving both high output and high cycle characteristics of the battery by reducing the electrical resistance of the membrane after the pressing step in the production of a nonaqueous secondary battery having the microporous membrane as a separator, and from the viewpoint of achieving a certain membrane strength and low air permeability. From the viewpoint of battery safety and achieving a certain membrane strength and low air permeability, it is preferably 70% or less, more preferably 65% or less, and further preferably 60% or less. The porosity of the microporous membrane can be adjusted by controlling the mixing ratio of the polyolefin resin composition and the plasticizer, the stretching temperature, the stretching ratio, the heat setting temperature, the stretching ratio during heat setting, the relaxation rate during heat setting, or a combination of these.

From the viewpoint of achieving high ion permeability, excellent voltage resistance, and high strength, the pore size of the microporous membrane is preferably 30 nm to 70 nm, and more preferably 35 nm to 60 nm, when measured by a half-dry method. The pore size of the microporous membrane can be adjusted by, for example, controlling the stretching temperature, stretching ratio, heat setting temperature, stretching ratio during heat setting, relaxation rate during heat setting, or a combination of these.

The melt flow index (MI) of the polyolefin microporous membrane is preferably 1.0 or less, more preferably 0.001 or more and 1.0 or less, further preferably 0.005 or more and 0.8 or less, and even further preferably 0.01 or more and 0.4 or less, from the viewpoint of reducing the fluidity of the membrane when melted and suppressing short-circuiting between electrodes due to the flow of the separator in a heated state during pin penetration testing. The MI of the polyolefin microporous membrane can be adjusted to within the above numerical range by, for example, controlling the molecular weight and blending ratio of the polymer raw material such as the polyolefin.

Regarding the molecular weight distribution of the polyolefin microporous membrane as measured by GPC, from the viewpoint of a reduction in fluidity of the membrane when melted and short circuit resistance during pin penetration testing, the polyethylene component having an Mw of 1,000,000 or more is 7 wt% or more of the total eluted components, more preferably 9 wt% or more, further preferably 12 wt% or more, and further preferably 15 wt% or more. In addition, from the viewpoint of suppressing excessive stress when the membrane shrinks in high temperature environments, the polyethylene component having an Mw of 1,000,000 or more is preferably 57 wt% or less, more preferably 42 wt% or less, further preferably 33 wt% or less, and even further preferably 27 wt% or less based on the total eluted components. The molecular weight distribution of the polyolefin microporous membrane can be adjusted within the above numerical range by, for example, controlling the type, molecular weight, and blending ratio of the polyolefin raw material.

The pin puncture strength of the microporous membrane not converted into basis weight (hereinafter simply referred to as pin puncture strength) is preferably 250 gf or more from the viewpoint of battery safety, and is preferably 700 gf or less from the viewpoint of suppressing post-compression porosity, crystallinity, and electrical resistance of the polyolefin microporous membrane. The pin puncture strength is more preferably 300 gf to 690 gf, and further preferably 310 gf to 680 gf. A pin puncture strength of 200 gf/20 μm or more is preferable from the viewpoint of suppressing rupture of the membrane due to disengaged active material when the separator is wound together with the electrodes, and from the viewpoint of suppressing concerns regarding short circuit due to expansion and contraction of the electrodes accompanying charge and discharge. Conversely, a pin puncture strength of 2000 gf/20 μm or less is preferable from the viewpoint of reducing width contraction due to orientation relaxation during heating. The pin puncture strength is measured in accordance with the method described in the Examples. The pin puncture strength can be adjusted by adjusting the stretching ratio and/or stretching temperature of the base material.

The basis weight of the polyolefin microporous membrane is preferably 3.0 g/m$^2$ or more from the viewpoint of suppressing thermal runaway of the non-aqueous secondary battery, and is preferably 10 g/m$^2$ or less from the viewpoint of increasing battery capacity. The basis weight of the polyolefin microporous membrane is more preferably 3.0 g/m$^2$ or more and 7.0 g/m$^2$ or less, and further preferably 3.0 g/m$^2$ or more and 6.0 g/m$^2$ or less. By improving the compression resistance, the safety of the battery can be ensured even with a lower basis weight.

The withstand voltage per unit area of the microporous membrane is preferably 0.13 kV/(g/m$^2$) or more from the

viewpoint of safety of the nonaqueous secondary battery comprising the microporous membrane.

The tensile breaking strength of the polyolefin microporous membrane, in both the MD and TD, is preferably, as the upper limit thereof, 5000 kgf/$cm^2$ or less, more preferably 4500 kgf/$cm^2$ or less, further preferably 4000 kgf/$cm^2$ or less, even further preferably 3500 kgf/$cm^2$ or less, and particularly preferably 3,000 kgf/$cm^2$ or less, from the viewpoint of ensuring the membrane strength necessary for winding and laminating the electrodes and the separator in the production process of the nonaqueous secondary battery. The lower limit is preferably 500 kgf/$cm^2$ or more, more preferably 700 kgf/$cm^2$ or more, further preferably 1,000 kgf/$cm^2$ or more, even further preferably 1500 kgf/$cm^2$ or more, particularly preferably 2000 kgf/$cm^2$ or more, and more particularly preferably 2500 kgf/$cm^2$ or more. The upper limit of the tensile breaking strength of the polyolefin microporous membrane is preferably less than 5000 kgf/$cm^2$ in both the MD and TD from the viewpoint of suppressing the thermal shrinkage of the polyolefin microporous membrane.

The closer the tensile breaking strength values of the polyolefin microporous membrane in the MD and TD, the more uniformly the membrane ruptures during pin penetration testing of the non-aqueous secondary battery, minimizing the short circuit area, and thus, improving the safety of the pin penetration test. Furthermore, the closer the MD and TD tensile strength values of the polyolefin microporous membrane, the less likely the membrane is to tear in the direction of weak strength when a foreign object is mixed in or when it is subjected to an external impact, improving safety, and the structure becomes isotropic, improving the cycle characteristics of the battery. From this viewpoint, the ratio of the MD tensile breaking strength of the polyolefin microporous membrane to the TD tensile breaking strength (MD/TD tensile breaking strength ratio) is preferably 0.5 or more and 2.0 or less, more preferably 0.7 or more and 1.5 or less, further preferably 0.7 or more and 1.4 or less, even further preferably 0.7 or more and 1.3 or less, particularly preferably 0.75 or more and 1.25 or less, more particularly preferably 0.8 or more and 1.3 or less, and even more particularly preferably 0.8 or more and 1.2 or less. The MD/TD tensile breaking strength ratio of the polyolefin microporous membrane can be adjusted within the above-mentioned numerical range by, for example, controlling the stretching ratio and the HS ratio during the biaxial stretching step.

When the tensile elongation at break of the polyolefin microporous membrane is controlled within an appropriate numerical range in both the MD and TD, the membrane is appropriately stretched and broken during the pin penetration testing of the non-aqueous secondary battery, thereby minimizing the short circuit area, and thus, improving the safety of the pin penetration test. When the tensile elongation at break is excessively high, the pin penetration part elongates too much, whereby the surrounding area other than the pin penetration membrane rupture part is pulled, and the membrane thickness of the surrounding area becomes thin, leading to a short circuit over a large area. From this viewpoint, the tensile elongation at break of the polyolefin microporous membrane is preferably 20% or more and 200% or less, more preferably 30% or more and 150% or less, further preferably 40% or more and 120% or less, and even further preferably 50% or more and 110% or less, in both the MD and TD. The tensile elongation at break of the polyolefin microporous membrane in the MD and/or TD can be adjusted within the numerical range described above by, for example, controlling the stretch ratio, and HS ratio during the biaxial stretching step.

The closer the values of MD and TD tensile elongation at break of the polyolefin microporous membrane, the more the membrane will stretch and rupture during the pin penetration test of the non-aqueous secondary battery, minimizing the short circuit area, and thus, improving the pin penetration test safety. From this viewpoint, the ratio of the MD tensile elongation at break to the TD tensile elongation at break (MD/TD tensile elongation at break ratio) of the polyolefin microporous membrane is preferably 0.3 or more and 2.0 or less, more preferably 0.35 or more and 1.5 or less, further preferably 0.4 or more and 1.3 or less, and even further preferably 0.5 or more and 1.2 or less. The MD/TD tensile elongation at break ratio of the polyolefin microporous membrane can be adjusted within the above-described numerical range by, for example, controlling the stretch ratio and HS ratio during the biaxial stretching step.

The tensile modulus of elasticity of the polyolefin microporous membrane is preferably 1,000 kg/$cm^2$ to 10,000 kg/$cm^2$, and more preferably 2,000 kg/$cm^2$ to 90,000 kg/$cm^2$ in both the MD and TD, from the viewpoint of reducing the likelihood of membrane rupture of the separator and preventing short circuit from occurring when a pin penetrates a nonaqueous secondary battery during the pin penetration test, penetrating and deforming the separator and electrodes as well, thereby improving safety.

The closer the values of MD and TD tensile modulus of elasticity of the polyolefin microporous membrane, the more uniformly the membrane ruptures during the pin penetration test of the non-aqueous secondary battery, thereby minimizing the short circuit area, and thus, improving the safety of the pin penetration test. From this viewpoint, the ratio of the MD tensile modulus of elasticity and the TD tensile modulus of elasticity of the polyolefin microporous membrane (MD/TD tensile modulus ratio) is preferably 0.3 or more and 3.0 or less, more preferably 0.35 or more and 2.0 or less, further preferably 0.4 or more and 1.5 or less, and even further preferably 0.5 or more and 1.3 or less. The MD/TD tensile modulus ratio of the polyolefin microporous membrane can be adjusted within the above-described numerical range by, for example, controlling the stretching ratio and HS ratio during the biaxial stretching step.

The shutdown (fuse) temperature of the porous membrane is preferably 150°C or lower, more preferably 149°C or lower. The upper limit of the shutdown temperature means that when some sort of abnormal reaction occurs and the temperature inside the battery rises, the pores of the separator are occluded before this temperature is reached. Thus, the

lower the shutdown temperature, the more quickly the flow of lithium-ions between the electrodes stops at a lower temperature, thereby improving safety. Conversely, from the viewpoint of not reducing the battery performance even when exposed to a high temperature exceeding 100°C, the fuse temperature of the microporous membrane is preferably 130°C or higher, more preferably 135°C or higher, further preferably 138°C or higher, and even further preferably 139°C or higher.

Regarding the surface smoothness of the polyolefin microporous membrane, from the viewpoint of cycle characteristics and rate characteristics under pressure, the average value of the surface smoothness of one side and the other side of the polyolefin microporous membrane is preferably 20,000 sec/10 $cm^3$ or more and 200,000 sec/10 $cm^3$ or less, more preferably 30,000 sec/10 $cm^3$ or more and 180,000 sec/10 $cm^3$ or less, further preferably 40,000 sec/10 $cm^3$ or more and 160,000 sec/10 $cm^3$ or less, and particularly preferably 50,000 sec/10 $cm^3$ or more and 140,000 sec/10 $cm^3$ or less. When the surface smoothness is less than 20,000 sec/10 $cm^3$, the physical distance between the polyolefin microporous membrane and the electrode material becomes nonuniform, which may cause the battery reaction to become nonuniform and the cycle characteristics to deteriorate. When the surface smoothness is greater than 200,000 sec/10 $cm^3$, the distance between the polyolefin microporous membrane and the electrode material is small, and the gaps formed between the microporous membrane and the electrode material are small, which may prevent uniform penetration of the electrolyte solution and reduce the cycle characteristics. The surface smoothness of the polyolefin microporous membrane can be adjusted within the above-described numerical range by, for example, controlling the molecular weight and blending ratio of the polymer raw material such as polyolefin, the distance between the cast rollers, the stretching ratio in the biaxial stretching step, the MD/TD stretching temperature in the biaxial stretching step, the heat amount coefficient per unit resin of the resin composition in the biaxial stretching step, the HS magnification, and the HS temperature.

<Covering Layer>

The separator for a power storage device of the present embodiment comprises a covering layer arranged on at least one surface of the base material. Specifically, the covering layer may be arranged on only one surface of the base material, or on both surfaces. "Arranged on...surface" means that it may be arranged on the entire surface of the base material, or on a part of it. The covering layer is intended to be directly bonded to the electrodes. It is preferable that the covering layer be arranged so that the base material and the electrodes are bonded via the covering layer, and so that the covering layer is directly bonded to the electrodes. The covering layer is preferably a coating layer formed by applying a coating liquid containing an inorganic filler and a particulate polymer to the base material.

The covering layer comprises an inorganic filler and a particulate polymer of a thermoplastic polymer. The covering layer may further comprise a resin binder, a water-soluble polymer, and other additives in addition to the particulate thermoplastic polymer.

(Inorganic Filler)

The inorganic filler is not particularly limited, and is preferably one which has a melting point of 200°C or higher, has high electrical insulation, and is electrochemically stable within the range of use of a power storage device such as a lithium-ion secondary battery. Examples of such an inorganic filler include inorganic oxides (oxide ceramics) such as alumina, silica, titania, zirconia, magnesia, ceria, yttria, zinc oxide, and iron oxide; inorganic nitrides (nitride ceramics) such as silicon nitride, titanium nitride, and boron nitride; ceramics such as silicon carbide, calcium carbonate, magnesium sulfate, aluminum sulfate, barium sulfate, aluminum hydroxide, aluminum oxide hydroxide, potassium titanate, talc, kaolinite, dickite, nacrite, halloysite, pyrophyllite, montmorillonite, sericite, mica, amesite, bentonite, asbestos, zeolite, calcium silicate, magnesium silicate, diatomaceous earth, and silica sand; and glass fibers. These can be used alone or in combination of two or more thereof. Among these, the inorganic filler is preferably at least one selected from the group consisting of alumina, barium sulfate, and aluminum oxide hydroxide (boehmite).

The lower limit of the average particle size of the inorganic filler is preferably 50 nm or more, 100 nm or more, 150 nm or more, 200 nm or more, 250 nm or more, 300 nm or more, 350 nm or more, or 400 nm or more, and the upper limit is preferably 2000 nm or less, 1100 nm or less, 800 nm or less, 450 nm or less, 400 nm or less, 350 nm or less, or 300 nm or less. The average particle size of the inorganic filler is 50 nm or more, from the viewpoint of maintaining the gap for ion permeation through the covering layer and improving the rate characteristics. The average particle size of the inorganic filler is preferably 2000 nm or less, from the viewpoint of increasing the filling rate of the inorganic filler in the covering layer and improving the thermal shrinkage resistance. The average particle size of the inorganic filler is preferably, for example, 180 nm or more and 300 nm or less. The reason is that, in particular when the thickness of the covering layer is small, a uniform covering layer thickness is formed and the thermal shrinkage resistance is improved. It is also preferable that the average particle size of the inorganic filler be, for example, 250 nm or more and 450 nm or less. This is because it is possible to achieve a high degree of compatibility between rate characteristics and thermal shrinkage resistance. The "average particle size" of the inorganic filler is measured by the method described in the Examples. Examples of methods for adjusting the particle size and the distribution thereof include a method of pulverizing the inorganic filler using an

appropriate pulverization device such as a ball mill, a bead mill, or a jet mill to reduce the particle size. The particle size distribution of the inorganic filler can have one peak in a graph of frequency against particle size. However, it may have two peaks or a trapezoidal chart with no peak. The coefficient of variation of the particle size distribution of the inorganic filler is preferably 0.55 or less, more preferably 0.50 or less, and further preferably 0.45 or less. It is preferable that the coefficient of variation of the particle size distribution be 0.55 or less from the viewpoint of suppressing deformation at temperatures exceeding the melting point of the base material, and from the viewpoint of improving the gradient ratio of the covering layer and increasing the adhesive strength with the electrode.

Examples of the shape of the inorganic filler include plate-like, scale-like, needle-like, columnar, spherical, polyhedral, and block-like. A combination of inorganic fillers having these shapes may be used. Block-like is preferable from the viewpoint of improving the gradient ratio of the covering layer to increase the adhesive strength with the electrodes. Regardless of the aspect ratio, the shape of the filler is preferably block-like rather than spherical. If the shape of the filler is close to spherical, surface contact of the particulate polymer with the base material is inhibited due to surface tension and Newtonian fluidity of the coating material, which is not preferable.

The aspect ratio of the inorganic filler is preferably 1.0 or more and 2.5 or less, and more preferably 1.1 or more and 2.0 or less. The aspect ratio is preferably 2.5 or less, because this suppresses the moisture adsorption amount of the separator, suppresses the capacity deterioration when cycles are repeated, suppresses deformation at temperatures exceeding the melting point of base material, and improves the gradient ratio of covering layer to enhance the adhesive strength with electrodes. The reason why the gradient ratio increases when the aspect ratio of the inorganic filler is 1.0 or more and 2.5 or less is considered to be because the orientation of particles in the covering layer is small whereby the inorganic filler is more likely to form a laminated structure.

The particle size distribution of the inorganic filler, which is obtained by dividing the standard deviation SD value of the volume average particle size of the inorganic filler by the value of D50, is preferably 0.55 or less, more preferably 0.50 or less, and further preferably 0.45 or less. A particle size distribution of 0.55 or less is preferable from the viewpoint of suppressing deformation at temperatures exceeding the melting point of base material, and from the viewpoint of improving the gradient ratio of covering layer and increasing the adhesive strength with electrode. The reason why the gradient ratio increases when the particle size distribution of the inorganic filler is 0.55 or less is considered to be that the uniformity of particles is increased, and the contact ratio between particles is improved, whereby a laminated structure is more likely to form.

The amount of the inorganic filler relative to the total weight of the covering layer is, for example, 20 parts by weight or more and less than 100 parts by weight, 30 parts by weight or more and 80 parts by weight or less, 35 parts by weight or more and 70 parts by weight or less, or further 40 parts by weight or more and 60 parts by weight or less.

(Particulate Polymer)

The particulate polymer is particles of a thermoplastic polymer. In order to enhance the adhesion between the separator and the electrodes, the particulate polymer preferably contains a thermoplastic polymer having a glass transition temperature or melting point of 20°C or higher and 200°C or lower. The glass transition temperature refers to the midpoint glass transition temperature described in JIS K7121, and is determined from a DSC curve obtained by differential scanning calorimetry (DSC). Specifically, the temperature at the point where the curve of the step-like change during the glass transition intersects with a straight line that is equidistant from a straight line obtained by extending the baseline on the low temperature side of the DSC curve to the high temperature side and a straight line obtained by extending the baseline on the high temperature side of the DSC curve to the low temperature side in the vertical axis direction can be used as the glass transition temperature. More specifically, it may be determined in accordance with the method described in the Examples. The "glass transition" refers to a change in heat flow rate that occurs on the endothermic side due to a change in the state of the test sample polymer in DSC. Such a change in heat flow rate is observed as a step-like change in the shape of a DSC curve. "Step-like change" refers to the portion of the DSC curve where the curve leaves the previous low-temperature baseline and transitions to a new high-temperature baseline. Note that a combination of a step-like change and a peak is also included in the step-like change. In the step-like change portion, it can be expressed as the point where the curve changes from being convex upwards to convex downwards, with the upper side being the heat generation side. "Peak" refers to the portion of the DSC curve where the curve leaves the low-temperature baseline and transitions back to the same baseline. "Baseline" refers to the DSC curve in the temperature range where no transition or reaction occurs in the test sample.

The glass transition temperature (Tg) of the particulate polymer is preferably 20°C or higher and 110°C or lower, more preferably 50°C or higher, further preferably 80°C or higher, and further preferably 90°C or higher, and is particularly preferably greater than 90°C in terms of improving the adhesive strength after injection of the electrolyte solution. The Tg of the particulate polymer is 20°C or higher from the viewpoint of preventing adjacent separators from sticking together (blocking) through the covering layer during storage and transportation of the separator for power storage device and during the production process of the power storage device. Conversely, the Tg of the particulate polymer is preferably

110°C or lower from the viewpoint of obtaining suitable adhesive strength with the electrodes. The Tg of the particulate polymer can be appropriately adjusted by, for example, changing the type of the monomer used in the production of the particulate polymer and the blending ratio of each monomer when the particulate polymer is a copolymer. Specifically, for each monomer used in the production of the particulate polymer, the glass transition temperature can be roughly estimated from the generally-stated Tg of the homopolymer (for example, as described in the "Polymer Handbook" (A Wiley-Interscience Publication)) and the blending ratio of the monomers. For example, a copolymer obtained by copolymerizing a high ratio of monomers such as methyl methacrylate, acrylonitrile, and methacrylic acid, which give a homopolymer with a Tg of about 100°C, has a high Tg, while a copolymer obtained by copolymerizing a high ratio of monomers such as n-butyl acrylate and 2-ethylhexyl acrylate, which give a homopolymer with a Tg of about -50°C, has a low Tg. The Tg of a copolymer can also be roughly calculated by the FOX formula shown below:

$$1/Tg = W_1/Tg_1 + W_2/Tg_2 + ... + W_i/Tg_i + ... W_n/Tg_n$$

where Tg(K) is the Tg of the copolymer, $Tg_i$ (K) is the Tg of the homopolymer of the ith monomer, and $W_i$ is the mass fraction of each monomer. i is an integer from 1 to n, and n is the number of types of monomers constituting the copolymer. However, the glass transition temperature Tg of the particulate polymer in the present embodiment is a value measured by the method using DSC described above.

The average particle size of the particulate polymer is preferably 0.5 to 5-fold, more preferably 1 to 2-fold, further preferably 1.1 to less than 1.5-fold, and particularly preferably 1.2 to 1.4-fold the thickness of the covering layer, from the viewpoint of adhesion between the separator and the electrodes and preventing the particulate polymer from disengaging from the covering layer. The "average particle size" of the particulate polymer means the volume average particle size measured by the measurement method described in the Examples. The "primary particle" of the particulate polymer means an independent particle that is united by a covalent bond. Conversely, a form in which two or more primary particles are in contact with each other to form an aggregate is referred to as a "secondary particle."

The particle size distribution MV/MN of the particulate polymer, calculated by dividing the volume average particle size MV of the particulate polymer by the number average particle size MN, is preferably 1.60 or less, more preferably 1.30 or less, further preferably 1.20 or less, even further preferably 1.10 or less, and particularly preferably less than 1.10. A particle size distribution of the particulate polymer within the above range is preferable from the viewpoints of ensuring the uniformity of the thickness of the covering layer, improving cycle characteristics, improving adhesion to the electrodes, reducing the amount of particulate polymer on the small particle size side of the distribution embedded in the covering layer, improving adhesion to the electrode, improving heat resistance, and reducing the total thickness of the separator. The lower limit of the particle size distribution MV/MN of the particulate polymer is not particularly limited, and may be, for example, 1.01 or more, or 1.01.

The particulate polymer contained in the covering layer is preferably in the form of primary particles. The average particle size of the primary particles of the particulate polymer is preferably 1 μm or more and 10 μm or less, more preferably 1 μm or more and 5 μm or less, and further preferably 2 μm or more and 4 μm or less. The particulate polymer being in the form of primary particles means that the particulate polymer is uniformly dispersed in the covering layer, which improves the 180° peel strength, increases the adhesive strength with the electrodes, suppresses thermal shrinkage, and ensures the uniformity of the thickness of the covering layer. When the average particle size of the primary particles is 1 μm or more and 10 μm or less, the particulate polymer is likely to form a structure protruding from the surface of the covering layer, which increases the adhesive strength with the electrodes and suppresses thermal shrinkage.

Examples of the thermoplastic polymer include (meth)acrylic polymers, conjugated diene polymers, polyvinyl alcohol resins, and fluorine-containing resins.

From the viewpoint of high adhesion to the electrodes and low thermal shrinkage, the thermoplastic polymer preferably contains a (meth)acrylic polymer. The term "(meth)acrylic polymer" refers to a polymer or copolymer containing a (meth)acrylic compound as a monomer. Such a (meth)acrylic compound can be represented by the following general formula:

$$CH_2 = CR^{Y1}\text{-}COO\text{-}R^{Y2}$$

where $R^{Y1}$ represents a hydrogen atom or a methyl group, and $R^{Y2}$ represents a hydrogen atom or a monovalent hydrocarbon group. When $R^{Y2}$ is a monovalent hydrocarbon group, it may have a substituent or a heteroatom. Examples of the monovalent hydrocarbon group include linear or branched chain alkyl groups, cycloalkyl groups, and aryl groups. Examples of the substituent include a hydroxyl group and a phenyl group, and examples of the heteroatom include a halogen atom and an oxygen atom. The (meth)acrylic compound is used alone or in combination of two or more thereof. Examples of the (meth)acrylic compound include (meth)acrylic acid, linear alkyl (meth)acrylates, cycloalkyl (meth)acrylates, (meth)acrylates having a hydroxyl group, and (meth)acrylic acid aryl esters.

More specific examples of chain alkyl (meth)acrylates include (meth)acrylates having chain alkyl groups having 1 to 3 carbon atoms, such as methyl, ethyl, n-propyl, and isopropyl groups; n-butyl, isobutyl, t-butyl, n-hexyl, and 2-ethylhexyl groups; and chain alkyl groups having 4 or more carbon atoms, such as lauryl groups. An example of the (meth)acrylic acid aryl ester is phenyl (meth)acrylate.

Specific examples of (meth)acrylates include (meth)acrylates having a chain alkyl group such as methyl acrylate, ethyl acrylate, propyl acrylate, isopropyl acrylate, butyl acrylate, isobutyl acrylate, t-butyl acrylate, n-hexyl acrylate, 2-ethylhexyl acrylate, lauryl acrylate, methyl methacrylate, ethyl methacrylate, propyl methacrylate, isopropyl methacrylate, butyl methacrylate, isobutyl methacrylate, t-butyl methacrylate, n-hexyl methacrylate, 2-ethylhexyl methacrylate, and lauryl methacrylate; and (meth)acrylates having an aromatic ring such as phenyl (meth)acrylate and benzyl (meth) acrylate.

Conjugated diene polymers are preferable because they have a conjugated diene compound as a monomer unit and are compatible with electrodes. Examples of conjugated diene compounds include 1,3-butadiene, 2-methyl-1,3-butadiene, 2,3-dimethyl-1,3-butadiene, 2-chloro-1,3-butadiene, substituted linear conjugated pentadienes, substituted, and side-chain conjugated hexadienes, which may be used alone or in combination of two or more thereof. Among these, 1,3-butadiene is particularly preferable. Conjugated diene polymers may contain a (meth)acrylic compound or another monomer as a monomer unit, as described below. Examples of such monomers include styrene-butadiene copolymers and hydrogenated products thereof, acrylonitrile-butadiene copolymers and hydrogenated products thereof, and acrylonitrile-butadiene-styrene copolymers and hydrogenated products thereof.

Examples of polyvinyl alcohol-based resins include polyvinyl alcohol and polyvinyl acetate.

Fluorine-containing resins are preferable from the viewpoint of voltage resistance, and examples thereof include polyvinylidene fluoride, polytetrafluoroethylene, and copolymers containing fluorine atoms, such as vinylidene fluoride-hexafluoropropylene copolymers, vinylidene fluoride-hexafluoropropylene-tetrafluoroethylene copolymers, and ethylene-tetrafluoroethylene copolymers. The fluorine-containing resin is preferably a copolymer containing fluorine atoms.

Among the thermoplastic polymers listed above, the particulate polymer preferably contains at least one selected from the group consisting of copolymers containing (meth)acrylate as a monomer, styrene-butadiene copolymers, and copolymers containing fluorine atoms. Copolymers containing (meth)acrylate as a monomer more preferably contain copolymers containing (meth)acrylic acid, butyl (meth)acrylate, and ethylhexyl (meth)acrylate as monomers. By including these specific thermoplastic polymers in the particulate polymer, it is possible to provide a separator for power storage devices that has higher adhesion to the electrodes and a smaller thermal shrinkage rate.

The particulate polymer preferably contains a crosslinkable monomer. The crosslinkable monomer is not particularly limited, and examples thereof include monomers having two or more radically polymerizable double bonds, and monomers having a functional group that gives a self-crosslinking structure during or after polymerization. These are used alone or in combination of two or more thereof.

Examples of monomers having two or more radically polymerizable double bonds include divinylbenzene and polyfunctional (meth)acrylates, and polyfunctional (meth)acrylates are preferable. The polyfunctional (meth)acrylate may be at least one selected from the group consisting of bifunctional (meth)acrylates, trifunctional (meth)acrylates, and tetrafunctional (meth)acrylates. Specific examples thereof include polyoxyethylene diacrylate, polyoxyethylene dimethacrylate, polyoxypropylene diacrylate, polyoxypropylene dimethacrylate, neopentyl glycol diacrylate, neopentyl glycol dimethacrylate, butanediol diacrylate, butanediol dimethacrylate, trimethylolpropane triacrylate, trimethylolpropane trimethacrylate, pentaerythritol tetraacrylate, and pentaerythritol tetramethacrylate. These may be used alone or in combination of two or more thereof. Among these, from the same viewpoint as above, at least one of trimethylolpropane triacrylate or trimethylolpropane trimethacrylate is preferable.

(Resin Binder)

The covering layer preferably contains a resin binder for binding the inorganic fillers together and binding the inorganic filler and the base material. The type of the resin for the resin binder is not particularly limited, and any resin that is insoluble in the electrolyte solution of a power storage device such as a lithium-ion secondary battery and is electrochemically stable within the range of use of a power storage device such as a lithium-ion secondary battery can be used.

Specific examples of the resin of the resin binder include polyolefins such as polyethylene and polypropylene; fluorine-containing resins such as polyvinylidene fluoride and polytetrafluoroethylene; fluorine-containing rubbers such as vinylidene fluoride-hexafluoropropylene-tetrafluoroethylene copolymers and ethylene-tetrafluoroethylene copolymers; rubbers such as styrene-butadiene copolymers and hydrogenated products thereof, acrylonitrile-butadiene copolymers and hydrogenated products thereof, acrylonitrile-butadiene-styrene copolymers and hydrogenated products thereof, methacrylate-acrylate copolymers, styrene-acrylate copolymers, acrylonitrile-acrylate copolymers, ethylene propylene rubbers, polyvinyl alcohol, and polyvinyl acetate; cellulose derivatives such as ethyl cellulose, methyl cellulose, hydroxyethyl cellulose, and carboxymethyl cellulose; and resins having a melting point of 180°C or higher, or resins having no melting point but a decomposition temperature of 200°C or higher, such as polyphenylene ether, polysulfone, polyethersulfone, polyphenylene sulfide, polyetherimide, polyamideimide, polyamide, and polyester. These may be used alone or in combination of two or more thereof.

The resin binder may comprise, for example, a resin latex binder. As the resin latex binder, for example, a copolymer of an unsaturated carboxylic acid monomer and another monomer copolymerizable therewith may be used. Examples of aliphatic conjugated diene monomers include butadiene and isoprene, examples of unsaturated carboxylic acid monomers include (meth)acrylic acid, and examples of other monomers include styrene. The polymerization method of such a copolymer is not particularly limited, and emulsion polymerization is preferable. The emulsion polymerization method is not particularly limited, and known methods can be used. The method of adding the monomer and other components is not particularly limited, and any of a lump-sum addition method, a divided addition method, and a continuous addition method can be adopted, and any of a single-stage polymerization method, a two-stage polymerization method, and a multi-stage polymerization method of three or more stages can be adopted as the polymerization method.

Specific examples of the resin binder include the following (1) to (7):

(1) polyolefins, for example, polyethylene, polypropylene, ethylene propylene rubber, and modified products thereof;
(2) conjugated diene polymers, for example, styrene-butadiene copolymers and hydrogenated products thereof, acrylonitrile-butadiene copolymers and hydrogenated products thereof, and acrylonitrile-butadiene-styrene copolymers and hydrogenated products thereof;
(3) acrylic polymers, for example, methacrylate-acrylate copolymers, styrene-acrylate copolymers, and acrylonitrile-acrylate copolymers;
(4) polyvinyl alcohol-based resins, for example, polyvinyl alcohol and polyvinyl acetate;
(5) fluorine-containing resins, for example, polyvinylidene fluoride, polytetrafluoroethylene, vinylidene fluoride-hexafluoropropylene-tetrafluoroethylene copolymers, and ethylene-tetrafluoroethylene copolymers;
(6) cellulose derivatives, for example, ethyl cellulose, methyl cellulose, hydroxyethyl cellulose, and carboxymethyl cellulose; and
(7) resins having a melting point and/or a glass transition temperature of 180°C or higher, or polymers having no melting point but a decomposition temperature of 200°C or higher, for example, polyphenylene ether, polysulfone, polyethersulfone, polyphenylene sulfide, polyetherimide, polyamideimide, polyamide, and polyester.

When the resin binder is a resin latex binder, the volume average particle size (D50) thereof may be, for example, 50 nm to 500 nm, 60 nm to 460 nm, or 80 nm to 250 nm. The volume average particle size of the resin binder can be controlled by, for example, adjusting the polymerization time, polymerization temperature, raw material composition ratio, raw material charging order, pH, etc.

From the viewpoint of improving the 180° peel strength, the glass transition temperature of the resin binder is preferably 25°C or lower, more preferably 10°C or lower, and further preferably -15°C or lower. From the viewpoint of transparency, the glass transition temperature of the resin binder is preferably -60°C or higher.

The volume average particle size (D50) of the resin binder is preferably 1-fold or more, more preferably 2-fold or more, and further preferably 2.5-fold or more the average pore size of the polyolefin microporous membrane from the viewpoint of improving the 180° peel strength. By selecting the volume average particle size (D50) of the resin binder in this manner, it is possible to hold the resin binder on the surface of the polyolefin microporous membrane, whereby the 180° peel strength is improved. From the viewpoint of improving the rate characteristics, the volume average particle size (D50) of the resin binder is preferably 10-fold or less the average pore size of the polyolefin microporous membrane. The content ratio of the resin binder in the covering layer may be, for example, more than 0 parts by weight and 80 parts by weight or less, 1 part by weight or more and 20 parts by weight or less, 2 parts by weight or more and 10 parts by weight or less, or 3 parts by weight or more and 5 parts by weight or less, relative to the total amount of the covering layer.

From the viewpoints of wettability to the base material, binding between the base material and the particulate polymer, binding between the covering layer and the particulate polymer, binding between the base material and the covering layer, and adhesion with the electrodes, the Tg of the resin binder is preferably lower than 40°C. From the viewpoint of ion permeability, the Tg of the resin binder is more preferably -100°C or higher, further preferably -50°C or higher, and particularly preferably -40°C or higher, and from the viewpoint of binding between the base material and the particulate polymer, it is more preferably lower than 20°C, further preferably lower than 15°C, and particularly preferably lower than 0°C.

(Water-Soluble Polymer)

The covering layer may further contain a water-soluble polymer in addition to the inorganic filler and the particulate polymer. The water-soluble polymer may be incompatible with the thermoplastic polymer of the particulate polymer. In general, the water-soluble polymer functions as a dispersant in the coating liquid for forming the covering layer containing the inorganic filler and the particulate polymer of the thermoplastic polymer, and functions as a dispersant

and/or a water retention agent when the coating liquid is a water-based coating material.

The content of the water-soluble polymer in the covering layer is preferably 0.04 parts by weight or more and less than 2 parts by weight, more preferably 0.04 parts by weight or more and 1.5 parts by weight or less, and further preferably 0.1 parts by weight or more and 1 part by weight or less, relative to 100 parts by weight of inorganic filler. By setting the content of the water-soluble polymer to 0.04 parts by weight or more, the binding property between the inorganic components is improved, and thermal shrinkage can be further suppressed. Furthermore, the precipitation of the components during the preparation of the slurry of the covering layer can be suppressed, whereby they can be stably dispersed. By setting the content of the water-soluble polymer to 5 parts by weight or less, streaking and unevenness during the formation of the covering layer can be suppressed.

The water-soluble polymer also contributes to the binding between inorganic fillers in the covering layer. From the viewpoint of suppressing thermal shrinkage of the separator, the water-soluble polymer preferably exhibits a weight loss rate of less than 10% at 150°C when the weight at 50°C is taken as 100% in thermogravimetry.

The water-soluble polymer may be a polymer derived from a natural product, a synthetic product, or a semi-synthetic product, and from the viewpoint of forming a coating material from the inorganic components and organic components, and in particular, a water-based coating material, it is preferable that the water-soluble polymer be an anionic, cationic, amphoteric, or nonionic polymer, and more preferably be an anionic, cationic, or amphoteric polymer.

Examples of the anionic polymer include modified starches such as carboxymethyl starch and starch phosphate; anionic cellulose derivatives such as carboxymethyl cellulose; ammonium salts or alkali metal salts of polyacrylic acid; gum arabic; carrageenan; sodium chondroitin sulfate; sulfonic acid compounds such as sodium polystyrene sulfonate, sodium polyisobutylene sulfonate, and naphthalene sulfonic acid condensate salts; and polyethyleneimine xanthate salts. Among these, from the viewpoint of achieving an appropriate balance between rigidity, rate characteristics, and cycle characteristics of the power storage device, an anionic polymer containing a metal salt as a counter cation is preferable; an anionic cellulose derivative, and an ammonium salt or an alkali metal salt of polyacrylic acid are also preferable; and from the viewpoint of the balance between heat resistance and rate characteristics, an alkali metal salt of polyacrylic acid is more preferable, and sodium polyacrylate is further preferable.

The ammonium salt or alkali metal salt of polyacrylic acid refers to a polymer in which at least one of the -COO- moieties derived from multiple carboxylic acid groups forms a salt with an ammonium ion or an alkali metal ion, such as a sodium ion ($Na^+$) or a potassium ion ($K^+$).

The ammonium or alkali metal salt of polyacrylic acid may be at least one of the following (I) to (III):

(I) a homopolymer of a monomer ($C_i$) having one ammonium salt or alkali metal salt of a carboxylic acid, or a copolymer of a plurality of monomers ($C_i$) with other monomers;

(II) a homopolymer of a monomer ($C_{ii}$) having a plurality of ammonium salts or alkali metal salts of a carboxylic acid, or a copolymer of the monomer (Cii) and another monomer; and

(III) an ammonium salt or alkali metal salt of a polymer or copolymer obtained by polymerizing or copolymerizing a monomer having one or more carboxylic acids.

Examples of the monomer ($C_i$) having one ammonium salt or alkali metal salt of a carboxylic acid include sodium (meth)acrylate and ammonium (meth)acrylate.

Examples of the monomer ($C_{ii}$) having a plurality of ammonium salts or alkali metal salts of a carboxylic acid include ammonium salts or sodium salts of 11-(methacryloyloxy)undecane-1,1-dicarboxylic acid; ammonium salts, monosodium salts or disodium salts of ethylenically unsaturated dicarboxylic acids such as fumaric acid, maleic acid, itaconic acid, and citraconic acid; and alicyclic polycarboxylic acids having a (meth)acryloyl group.

Examples of the monomer copolymerizable with the monomer ($C_i$) or the monomer (Cii) include (meth) acrylamides; ethylenically unsaturated dicarboxylic acids such as fumaric acid, maleic acid, itaconic acid, and citraconic acid; and ethylenically unsaturated dicarboxylic anhydrides such as maleic anhydride, itaconic anhydride, and citraconic anhydride.

Examples of the ammonium salt or alkali metal salt of a polymer or copolymer obtained by polymerizing or copolymerizing a monomer having one or more carboxylic acids include sodium polyacrylate and ammonium polyacrylate.

The structures of the ammonium salt or alkali metal salt of polyacrylic acid described in (I) to (III) above may overlap with each other. It is desirable that the ammonium salt or alkali metal salt of polyacrylic acid described in (I) to (III) above have a small content of polyvalent cations when dissolved in water. Examples of polyvalent cations include magnesium ions, calcium ions, and iron ions. By reducing the content of these ions, the dispersibility of the particulate polymer in the mixed slurry with the particulate polymer is stabilized.

Examples of cationic polymers include cationic starch; chitosan; gelatin; homopolymers or copolymers of quaternary salts of dimethylaminoethyl (meth)acrylate; homopolymers or copolymers of dimethylallylammonium chloride; polyamidines and copolymers thereof; polyvinylimidazoline; dicyandiamide-based condensates; epichlorohydrin-dimethylamine condensates; and polyethyleneimine.

Examples of amphoteric polymers include dimethylaminoethyl (meth)acrylate quaternary salt-acrylic acid copolymers and Hofmann degradation products of polyacrylamide.

Examples of non-ionic polymers include starch and derivatives thereof; cellulose derivatives such as methyl cellulose, hydroxyethyl cellulose, and hydroxypropyl cellulose, and ammonium salts or alkali metal salts thereof; gums such as guar gum and modification products thereof; and synthetic polymers such as polyvinyl alcohol, polyacrylamide, polyethylene glycol, polymethyl vinyl ether, polyisopropylacrylamide, copolymers of vinyl alcohol and another monomer, and modification products thereof.

The water-soluble polymer may or may not have an amide bond-containing cyclic structure. The water-soluble polymer having an amide bond-containing cyclic structure refers to a homopolymer or copolymer having a group having an amide bond-containing cyclic structure and a skeleton derived from a polymerizable double bond. The water-soluble polymer having an amide bond-containing cyclic structure may have one or more amide bond-containing cyclic structures.

The group having an amide bond-containing cyclic structure includes a group represented by the following formula (2):

[Chem 1]

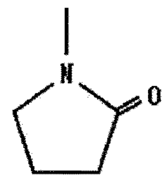

(2)

Specific examples of water-soluble polymers having an amide bond-containing cyclic structure include homopolymers of monomers having a group having an amide bond-containing cyclic structure and a polymerizable double bond, such as poly(N-vinylcaprolactam), which is a homopolymer of N-vinylcaprolactam, and polyvinylpyrrolidone (PVP), which is a homopolymer of vinylpyrrolidone; copolymers of two or more monomers having a group having an amide bond-containing cyclic structure and a polymerizable double bond (N-vinylcaprolactam, vinylpyrrolidone, etc.); and copolymers of one or more monomers having a group having an amide bond-containing cyclic structure and a polymerizable double bond (N-vinylcaprolactam, vinylpyrrolidone, etc.) with one or more monomers having other polymerizable double bonds (monomers other than the monomers having a group having an amide bond-containing cyclic structure and a polymerizable double bond).

Examples of monomers copolymerizable with the monomer having a group having an amide bond-containing cyclic structure and a polymerizable double bond include vinyl acyclic amides; (meth)acrylic acid and esters thereof; (meth)acrylamide and derivatives thereof; styrene and derivatives thereof; vinyl esters such as vinyl acetate; $\alpha$-olefins; basic unsaturated compounds such as vinylimidazole and vinylpyridine and derivatives thereof; carboxyl group-containing unsaturated compounds and acid anhydrides thereof; vinyl sulfonic acid and derivatives thereof; vinyl ethylene carbonate and derivatives thereof; and vinyl ethers.

(Additives)

The covering layer may be composed of only the inorganic filler, particulate polymer, and arbitrary water-soluble polymer, or may further contain additives other than these. Examples of additives include low molecular weight dispersants other than water-soluble polymers; thickeners; antifoaming agents; and pH adjusters such as ammonium hydroxide. Specific examples of low molecular weight dispersants include monomers ($C_{ii}$) having a plurality of ammonium salts or alkali metal salts of carboxylic acid, and non-polymerizable compounds having a plurality of ammonium salts or alkali metal salts of carboxylic acid (for example, sodium alginate and sodium hyaluronate).

As specific examples of defoaming agents, surfactants containing an ethoxylated acetylene glycol (acetylenic surfactants) represented by the following formula (A) are preferable:

[Chem 2]

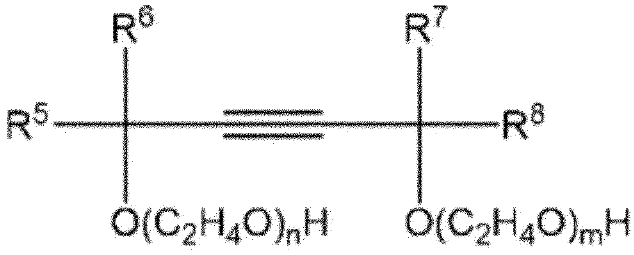

(A)

where $R^5$ to $R^8$ each independently represent an alkyl group having 1 to 10 carbon atoms, and n and m each independently represent an integer of 0 or more, under the proviso that n+m = 0 to 40.

Specific examples of the alkyl group having 1 to 10 carbon atoms may be linear, branched, or cyclic, and include a methyl group, an ethyl group, an n-propyl group, an isopropyl group, an n-butyl group, a sec-butyl group, a tert-butyl group, an n-pentyl group, an n-hexyl group, an n-heptyl group, an n-octyl group, an n-nonyl group, and an n-decyl group.

Specific examples of acetylene glycols represented by formula (A) include 2,5,8,11-tetramethyl-6-dodecyne-5,8-diol, 5,8-dimethyl-6-dodecyne-5,8-diol, 2,4,7,9-tetramethyl-5-decyne-4,7-diol, 4,7-dimethyl-5-decyne-4,7-diol, 2,3,6,7-tetramethyl-4-octyne-3,6-diol, 3,6-dimethyl-4-octyne-3,6-diol, 2,5-dimethyl-3-hexyne-2,5-diol, ethoxylated 2,4,7,9-tetramethyl-5-decyne-4,7-diol (number of moles of ethylene oxide added: 1.3), ethoxylated 2,4,7,9-tetramethyl-5-decyne-4,7-diol (number of moles of ethylene oxide added: 4), ethoxylated 3,6-dimethyl-4-octyne-3,6-diol (number of moles of ethylene oxide added: 4), ethoxylated 2,5,8,11-tetramethyl-6-dodecyne-5,8-diol (number of moles of ethylene oxide added: 6), ethoxylated 2,4,7,9-tetramethyl-5-decyne-4,7-diol (number of moles of ethylene oxide added: 10), ethoxylated 2,4,7,9-tetramethyl-5-decyne-4,7-diol (number of moles of ethylene oxide added: 30), and ethoxylated 3,6-dimethyl-4-octyne-3,6-diol (number of moles of ethylene oxide added: 20). These defoaming agents may be used alone or in combination of two or more thereof.

Acetylenic surfactants are also available as commercial products, and examples of such commercial products include Olfine SPC (manufactured by Nissin Chemical Industry Co., Ltd., active ingredient 80 parts by weight, pale yellow liquid), Olfine AF-103 (manufactured by Nissin Chemical Industry Co., Ltd., pale brown liquid), Olfine AF-104 (manufactured by Nissin Chemical Industry Co., Ltd., pale brown liquid), Olfine SK-14 (manufactured by Nissin Chemical Industry Co., Ltd., pale yellow viscous liquid), Olfine AK-02 (manufactured by Nissin Chemical Industry Co., Ltd., pale yellow viscous liquid), Olfine AF-201F (manufactured by Nissin Chemical Industry Co., Ltd., pale yellow viscous liquid), Olfine D-10PG (manufactured by Nissin Chemical Industry Co., Ltd., active ingredient 50 parts by weight, pale yellow liquid), Olfine E-1004 (manufactured by Nissin Chemical Industry Co., Ltd., active ingredient 100 parts by weight, pale yellow liquid), Olfine E-1010 (manufactured by Nissin Chemical Industry Co., Ltd., active ingredient 100 parts by weight, pale yellow liquid), Olfine E-1020 (manufactured by Nissin Chemical Industry Co., Ltd., active ingredient 100 parts by weight, pale yellow liquid), Olfine E-1030W (manufactured by Nissin Chemical Industry Co., Ltd., active ingredient 75 parts by weight, pale yellow liquid), Surfynol 420 (manufactured by Nissin Chemical Industry Co., Ltd., active ingredient 100 parts by weight, pale yellow viscous substance), Surfynol 440 (manufactured by Nissin Chemical Industry Co., Ltd., active ingredient 100 parts by weight, pale yellow viscous substance), and Surfynol 104E (manufactured by Nissin Chemical Industry Co., Ltd., active ingredient 50 parts by weight, pale yellow viscous substance).

As the surfactant of the additive, polyether surfactants and/or silicone surfactants can be used instead of or together with the acetylenic surfactant. Representative examples of polyether surfactants include polyethylene glycol, polypropylene glycol, polytetramethylene glycol, polyoxyethylene oleyl ether, polyoxyethylene stearyl ether, polyoxyethylene lauryl ether, polyoxyethylene dodecyl ether, polyoxyethylene nonylphenyl ether, polyoxyethylene octylphenyl ether, and polyoxyethylene-polyoxypropylene block copolymers. Among these, polyethylene glycol is particularly preferable. These surfactants may be used alone or in combination of two or more thereof.

Polyether surfactants are also available as commercially available products, and examples of such commercially available products include E-D052, E-D054, and E-F010 (manufactured by San Nopco Ltd.).

The silicone surfactant may be linear, branched, or cyclic, as long as it contains at least a silicone chain, and may contain either a hydrophobic group or a hydrophilic group. Specific examples of the hydrophobic group include alkyl groups such as methyl, ethyl, n-propyl, isopropyl, n-butyl, sec-butyl, tert-butyl, n-pentyl, n-hexyl, n-heptyl, n-octyl, n-nonyl, and n-decyl; cyclic alkyl groups such as cyclohexyl; and aromatic hydrocarbon groups such as phenyl. Specific examples of the hydrophilic group include amino groups, thiol groups, hydroxyl groups, alkoxy groups, carboxylic acid, sulfonic acid, phosphoric acid, nitric acid, and organic or inorganic salts thereof, ester groups, aldehyde groups, glycerol groups, and heterocyclic groups. Representative examples of silicone surfactants include dimethyl silicone, methylphenyl silicone, chlorophenyl silicone, alkyl-modified silicone, fluorine-modified silicone, amino-modified silicone, alcohol-modified silicone, phenol-modified silicone, carboxy-modified silicone, epoxy-modified silicone, fatty acid ester-modified silicone, and polyether-modified silicone.

Silicone-based surfactants are also available as commercial products, and examples of such commercial products include BYK-300, BYK-301, BYK-302, BYK-306, BYK-307, BYK-310, BYK-313, BYK-320, BYK-333, BYK-341, BYK-345, BYK-346, BYK-347, BYK-348, BYK-349 (all trade names, manufactured by BYK Japan KK), KM-80, KF-351A, KF-352A, KF-353, KF-354L, KF-355A, KF-615A, KF-945, KF-640, KF-642, KF-643, KF-6020, X-22-4515, KF-6011, KF-6012, KF-6015, KF-6017 (all trade names, manufactured by Shin-Etsu Chemical Co., Ltd.), SH-28PA, SH8400, SH-190, SF-8428 (all trade names, manufactured by Dow Corning Toray Co., Ltd.), Polyflow KL-245, Polyflow KL-270, Polyflow KL-100 (all trade names, manufactured by Kyoeisha Chemical Co., Ltd.), Silface SAG002, Silface SAG005, and Silface SAG0085 (all trade names, manufactured by Nissin Chemical Industry Co., Ltd.).

(Amount of Covering Layer)

The amount of the covering layer relative to the base material, i.e., the amount of the covering layer per unit area of one surface of the base material, is preferably 0.5 $g/m^2$ or more, more preferably 1.0 $g/m^2$ or more, by weight, and preferably 0.15 $cm^3/m^2$ or more, more preferably 0.30 $cm^3/m^2$ or more, by volume. The upper limit of the amount of the covering layer is preferably 10.0 $g/m^2$ or less, more preferably 7.0 $g/m^2$ or less, by weight, and preferably 3.50 $cm^3/m^2$ or less, more preferably 2.50 $cm^3/m^2$ or less, by volume. It is preferable that the amount of the covering layer be equal to or greater than the lower limit from the viewpoint improving the adhesive strength between the covering layer and the electrodes and suppressing thermal shrinkage. It is preferable that the amount of the covering layer be equal to or less than the upper limit from the viewpoint suppressing a decrease in ion permeability.

(Thickness of Covering Layer)

The thickness of either one of the covering layers arranged on at least one of the base materials (the thickness of the inorganic filler portion of the covering layer) is preferably 0.3 μm or more and 5.0 μm or less, more preferably 0.5 μm or more and 2.5 μm or less, and further preferably 0.7 μm or more and 1.3 μm or less. When the thickness of the covering layer is 0.3 μm or more, the thermal shrinkage rate can be further suppressed, and the adhesive force between the electrodes and the base material can easily be made uniform, and as a result, the characteristics of the power storage device can be improved. When the thickness of the covering layer is 1.3 μm or less, it is preferable in that a decrease in ion permeability can be suppressed and a thin separator for a power storage device can be obtained. Specifically, by reducing the thickness of the separator, a power storage device with a large capacity per volume can be produced. Conversely, from the viewpoint of preventing the particulate polymer from flaking from the covering layer, it is preferably 1.6 μm or more, or 2.1 μm or more. The thickness of the covering layer can be adjusted by, for example, changing the type or concentration of the particulate polymer in the coating liquid applied to the base material, the coating amount of the coating liquid, the coating method, and the coating conditions. However, the method for adjusting the thickness of the covering layer is not limited to these.

FIG. 1 is a schematic diagram of the surface of the covering layer of the separator for a power storage device of the present embodiment. As schematically shown in FIG. 1, the surface of the covering layer (10) comprises an inorganic filler (1) and a particulate polymer (2) that is a thermoplastic polymer protruding from the covering layer. In FIG. 1, the particulate polymer is present in the form of primary particles without agglomerating with other particulate polymers.

FIG. 2 is a cross-sectional view of the separator for a power storage device of FIG. 1 taken along line A-A. As schematically shown in FIG. 2, the covering layer (20) is formed in a gradient so as to become continuously thicker from an inorganic filler portion that is 1.5D or more away from the volume center of each particulate polymer in the horizontal direction (the surface direction of the covering layer) toward the protruding particulate polymer (2). The gradient of the covering layer is gentler the farther it is from the protruding particulate polymer, and becomes greater the closer it is to the protruding particulate polymer. The inorganic filler (1) covers a part of the periphery of the protruding portion so as to follow the contour of the particulate polymer, and the vicinity of the center of the protruding portion is exposed on the surface of the covering layer.

<Method for Production of Separator for Power Storage Device>

<Base Material Production Method>

(Method for Production of Polyolefin Microporous Membrane)

The method for the production of the base material is not particularly limited, and any known production method can be used, for example, either a wet porosity method or a dry porosity method. Example of the wet porosity method

include, in the case where the base material is a polyolefin microporous membrane, a method in which a polyolefin resin composition and a plasticizer are melt-kneaded to form a sheet, which is then optionally stretched, and the plasticizer is extracted to make the membrane porous; a method in which a polyolefin resin composition comprising a polyolefin resin as a primary component is melt-kneaded, extruded at a high draw ratio, and then heat-treated and stretched to peel the polyolefin crystal interface to make the membrane porous; a method in which a polyolefin resin composition and an inorganic filler are melt-kneaded to form a sheet, and then stretched and the interface between the polyolefin and the inorganic filler is peeled to make the membrane porous; and a method in which a polyolefin resin composition is dissolved, immersed in a poor solvent for polyolefin, and the polyolefin is solidified while the solvent is removed to make the membrane porous.

The method for the production of the polyolefin microporous membrane according to the present disclosure is not particularly limited, and examples thereof include a method including the following steps:

(A) extruding a polyolefin composition comprising a polyolefin resin and a pore-forming material to form a gel-like sheet;
(B) biaxially stretching the gel-like sheet to form a stretched sheet;
(C) extracting the pore-forming material from the stretched sheet to form a porous membrane; and
(D) heat-setting the porous membrane.

The production steps and preferable embodiments of the polyolefin microporous membrane are described below.

Extrusion Step (A):

In step (A), the polyolefin composition is extruded to form a gel-like sheet. The polyolefin composition may comprise a polyolefin resin, a pore-forming agent, and the like. The resin contained in the polyolefin composition is preferably composed of only polyolefin without containing non-resin components such as fine particles or highly heat-resistant resins with significantly different melting points, from the viewpoint of making uniform the stretching stress and improving the distribution of air permeability and air permeability distribution of the resulting membrane. The gel-like sheet can be obtained by melt-kneading the polyolefin resin and the pore-forming material and forming it into a sheet.

First, the polyolefin resin and the pore-forming material are melt-kneaded. Examples of the melt-kneading method may include a method in which the polyolefin resin and, if necessary, other additives are put into a resin kneading device such as an extruder, a kneader, a lab plastomill, a kneading roll, or a Banbury mixer, and the pore-forming material is introduced at an arbitrary ratio while the resin component is heated and melted, and kneaded.

The polyolefin resin contained in the polyolefin composition can be determined in accordance with the desired resin raw material of the resulting polyolefin microporous membrane. Specifically, the polyolefin resin used in the extrusion step (A) may be the polyolefin resin described as a component of the polyolefin microporous membrane.

The content of the plasticizer in the resin composition is preferably 66 wt% to 90 wt%, more preferably 68 wt% to 88 wt%, and further preferably 70 wt% to 80 wt%. By adjusting the content of the plasticizer to 66 wt% or more, the melt viscosity of the resin composition is reduced, and melt fracture is suppressed, which tends to improve the membrane formability during extrusion. Conversely, by adjusting the content of the plasticizer to 90 wt% or less, stretching of the raw sheet during the film formation step can be suppressed.

The proportion of the polymer component (hereinafter, also simply referred to as "PC") of the resin composition is preferably 20 wt% to 40 wt%, more preferably 22 wt% to 37 wt%, and further preferably 24 wt% to 33 wt%, based on the total weight of the resin composition, from the viewpoint of uniformly dispersing the resin with a high molecular weight to make uniform the stretching stress and improve the ion permeability and air permeability distribution of the obtained membrane.

From the viewpoint of adjusting the molecular weight, MI, pin puncture strength, basis weight converted pin puncture strength, difference R between the maximum and minimum air permeability at three points in the TD, air permeability and porosity before compression, and thermal shrinkage rate of the obtained microporous membrane within the above-described numerical ranges, the lower limit of Mv of at least one of the raw materials is preferably 700,000 or more, and the upper limit may be, for example, 2,000,000 or less. From the same viewpoints, the proportion of high molecular weight raw materials having an Mv of 700,000 or more in the resin contained in the polyolefin composition is preferably 30 wt% or more, more preferably 40 wt% or more, further preferably 50 wt% or more, and may be 100 wt%.

When the polyolefin composition comprises polyethylene as a primary component, from the viewpoint of adjusting the post-compression porosity, crystal long-period, or crystallite size of the obtained microporous membrane within the numerical ranges described above, the lower limit of Mv of the polyethylene is preferably 600,000 or more, more preferably 700,000 or more, and the upper limit may be, for example, 2,000,000 or less. From the same viewpoints, the proportion of polyethylene having an Mv of 700,000 or more in the polyolefin resin constituting the polyolefin composition is

preferably 50 wt% or more, more preferably 60 wt% or more, further preferably 70 wt% or more, and may be 100 wt%.

When the polyolefin composition comprises polyethylene as a primary component, from the viewpoint of adjusting the molecular weight, MI, pin puncture strength, basis weight converted pin puncture strength, difference R between the maximum and minimum air permeability at three points in the TD, air permeability and porosity before compression, and thermal shrinkage rate of the obtained microporous membrane within the numerical ranges described above, for at least one of the raw materials, the Mv of the polyethylene is preferably 700,000 or more, and the upper limit may be, for example, 2,000,000 or less. From the same viewpoints, the proportion of polyethylene having an Mv of 700,000 or more in the polyolefin resin constituting the polyolefin composition is preferably 30 wt% or more, more preferably 40 wt% or more, further preferably 50 wt% or more, and may be 100 wt%.

From the viewpoint of the heat resistance of the obtained microporous membrane, polypropylene may be mixed into the polyolefin composition. In this case, from the viewpoint of membrane strength and compression resistance, the ratio of polypropylene to the total weight of polyolefin resin in the polyolefin composition is preferably 1 wt% or more and 20 wt% or less, more preferably 2 wt% or more and 15 wt% or less, and further preferably 2 wt% or more and 10 wt% or less. Furthermore, from the viewpoint of improving moldability, the ratio of polypropylene to the total weight of the polyolefin resin in the polyolefin composition is preferably 3 wt% or more and 10 wt% or less, and more preferably 5 wt% or more and 9 wt% or less.

Examples of the pore-forming material include plasticizers, inorganic materials, and combinations thereof. The plasticizer is not particularly limited, and it is preferable to use a non-volatile solvent that can form a homogeneous solution at or above the melting point of the polyolefin. Specific examples of the non-volatile solvent include hydrocarbons such as liquid paraffin and paraffin wax; esters such as dioctyl phthalate and dibutyl phthalate; and higher alcohols such as oleyl alcohol and stearyl alcohol. These plasticizers may be recovered and reused by distillation or other operations after extraction.

Among the plasticizers, liquid paraffin is preferable in that when the polyolefin resin is polyethylene or polypropylene, liquid paraffin has high compatibility therewith, and even when the molten mixture is stretched, interfacial peeling between the resin and the plasticizer is unlikely to occur, making it easier to perform uniform stretching.

The inorganic material is not particularly limited, and examples thereof include oxide ceramics such as alumina, silica (silicon oxide), titania, zirconia, magnesia, ceria, yttria, zinc oxide, and iron oxide; nitride ceramics such as silicon nitride, titanium nitride, and boron nitride; ceramics such as silicon carbide, calcium carbonate, aluminum sulfate, aluminum hydroxide, potassium titanate, talc, kaolin clay, kaolinite, halloysite, pyrophyllite, montmorillonite, sericite, mica, amesite, bentonite, asbestos, zeolite, calcium silicate, magnesium silicate, diatomaceous earth, and silica sand; and glass fibers.. These may be used alone or in combination of two or more thereof. Among these, silica is particularly preferable because it is easy to extract.

From the viewpoint of obtaining suitable isolation between the polyolefin resin composition and the inorganic material, the weight of the inorganic material relative to the total weight of these is preferably 3 wt% or more, and more preferably 10 wt% or more, and from the viewpoint of ensuring high strength, it is preferably 60 wt% or less, and more preferably 50 wt% or less.

Next, the melt-kneaded product is formed into a sheet to obtain a gel-like sheet. When melt-kneading is performed using an extruder, the ratio of the extrusion speed of the polyolefin composition, i.e., the discharge rate Q of the extruder (kg/hour) to the screw rotation speed N of the extruder (rpm) (Q/N, unit: kg/(h·rpm), is preferably 0.1 or more and 7.0 or less, more preferably 0.5 or more and 6.0 or less, and further preferably 1.0 or more and 5.0 or less. When melt-kneading is performed under the condition of a Q/N of 0.1 or more and less than 7.0, the liquid paraffin that is phase-separated from the resin becomes more easily dispersed, whereby the pore structure becomes dense and the strength tends to be increased.

Examples of the method for producing a sheet-like molded product include a method in which the molten kneaded product is extruded into a sheet shape through a T-die or the like, and then brought into contact with a thermal conductor to cool to a temperature sufficiently lower than the crystallization temperature of the resin component to solidify. Examples of thermal conductors used for cooling and solidifying include metal, water, air, plasticizers, etc. Among these, it is preferable to use a metal roller because of the high thermal conduction efficiency thereof. It is more preferable to interpose the extruded gel-like sheet between rollers when bringing the sheet into contact with metal roller, because this further increases the thermal conduction efficiency, and the sheet is oriented, whereby the membrane strength is improved and the surface smoothness of the sheet also tends to be improved.

By controlling the cast clearance when the molten mixture is extruded from a T-die into a sheet, the average membrane thickness of the obtained microporous membrane before compression can be adjusted within the numerical range described above. From this viewpoint, for example, in the case of cast rollers, the roll distance is preferably 200 μm or more and 3,000 μm or less, more preferably 500 μm or more and 2,500 μm or less. When the roll distance of the cast rollers is 200 μm or more, the risk of membrane breakage in the subsequent stretching step can be reduced, and when the roll distance is 3,000 μm or less, the cooling rate is fast and cooling unevenness can be prevented. Furthermore, from the viewpoint of achieving the stretching ratio necessary to obtain a thin membrane and increase the plane orientation and

crystallinity thereby improving compressibility, the cast thickness is preferably 500 μm to 2200 μm, and more preferably 700 μm to 2000 μm.

The extruded sheet-like molded body or gel-like sheet may be rolled. The rolling can be performed by, for example, a method using a roller or the like. By applying rolling, the orientation of the surface layer part in particular can be increased. The rolling surface ratio is preferably greater than 1-fold and 3-fold or less, and more preferably greater than 1-fold and 2-fold or less. When the rolling ratio exceeds 1-fold, the surface orientation increases, and the membrane strength of the ultimately obtained porous membrane tends to increase. When the rolling ratio is 3-fold or less, the orientation difference between the surface layer part and the center inside is small, and a uniform porous structure tends to be formed in the thickness direction of the membrane.

Biaxial Stretching Step (B):

In step (B), the gel-like sheet obtained in step (A) is stretched. Step (B) is performed before step (C) of extracting the pore-forming material from the sheet. In step (B), the stretching treatment of the gel-like sheet is performed at least once each in the longitudinal direction and the width direction (i.e., by biaxial stretching) from the viewpoint of controlling the bending rigidity of the polyolefin microporous membrane.

Examples of the stretching method include simultaneous biaxial stretching, sequential biaxial stretching, multistage stretching, and repeated stretching. Among them, simultaneous biaxial stretching is preferable from the viewpoints of improving the membrane strength and uniformity of stretching, and of the trunk structure being easily isotropic in-plane to isotropically disperse stress during the pin penetration test thereby improving the safety of the pin penetration test. Simultaneous biaxial stretching refers to a stretching method in which MD stretching and TD stretching are performed simultaneously, and the stretching ratios in each direction may be different. Sequential biaxial stretching refers to a stretching method in which MD and TD stretching are performed independently, and when stretching is performed in the MD or TD, the other direction is in an unconstrained state or fixed at a fixed length.

In step (B), from the viewpoint of adjusting the post-compression porosity, crystal long-period, or crystallite size of the resulting microporous membrane to within the numerical range described above, it is preferable to preheat the gel-like sheet in a stretching furnace immediately before stretching, and it is more preferable to increase the preheat coefficient. The preheat coefficient is a value obtained by multiplying the preheating temperature by the preheating air speed and the preheating time, and is preferably 130,000°C·m to 300,000°C·m, more preferably 150,000°C·m to 300,000°C·m, and further preferably 180,000°C·m to 300,000°C·m. When the preheating furnace is divided into a plurality of chambers having different air speeds, the air speed of the entire preheating furnace is calculated from the formula "air speed of each chamber × furnace length of each chamber / furnace length of the entire preheating furnace".

In the MD stretching in step (B), it is preferable to adjust the MD stretching ratio from the viewpoint of adjusting the post-compression porosity, crystal long-period, or crystallite size of the obtained microporous membrane within the numerical range described above, from the viewpoint of highly orienting the polyethylene as the primary component to form a high-rigidity trunk, and from the viewpoint of increasing the strength of the membrane by stretching orientation and improving compressibility by increasing crystallinity. The MD stretching ratio is preferably 5-fold or more, more preferably 5-fold or more and 10-fold or less, further preferably 5-fold or more and 9-fold or less, even further preferably 6-fold or more and 10-fold or less, and particularly preferably 6-fold or more and 8-fold or less. The MD stretching ratio can be adjusted in accordance with, for example, the MD stretching temperature, the MD stretching air speed, the MD stretching time, and the MD stretching coefficient.

From the same viewpoints as above, and from the viewpoint of making uniform stress even to a high molecular weight resin to improve the permeability and air permeability distribution of the obtained membrane, the lower limit of the MD stretching temperature is preferably 122.0°C or higher, more preferably 123.0°C or higher, further preferably 124.0°C or higher, even further preferably 125.0°C or higher, particularly preferably 126.0°C or higher, and most preferably 127.0°C or higher. The upper limit of the MD stretching temperature is preferably 145.0°C or lower, more preferably 140.0°C or lower, and further preferably 131.0°C or lower. It is presumed that when the MD stretching temperature is between the melting point of the primary component minus 12°C and the melting point, moderate stress is applied to the membrane, which is preferable for stretch molding. The MD stretching temperature is more preferably between the melting point of the primary component minus 10°C and the melting point, and further preferably between the melting point of the primary component minus 8°C and the melting point. The MD stretching temperature can be adjusted in accordance with, for example, the MD stretching ratio, the MD stretching air speed, the MD stretching time, and the MD stretching coefficient.

In the TD stretching in step (B), it is preferable to adjust the TD stretching ratio from the viewpoint of adjusting the post-compression porosity, crystal long-period, or crystallite size of the obtained microporous membrane within the numerical range described above, from the viewpoint of highly orienting the polyethylene as the primary component to form a high-rigidity trunk, and from the viewpoint of increasing the strength of the membrane by stretching orientation and improving compressibility by increasing crystallinity. The TD stretching ratio is preferably 5-fold or more, more preferably 5-fold or more and 10-fold or less, further preferably 5-fold or more and 9-fold or less, even further preferably 6-fold or more

and 10-fold or less, and particularly preferably 6-fold or more and 8-fold or less. The TD stretching ratio can be adjusted in accordance with, for example, the TD stretching temperature, the TD stretching air speed, the TD stretching time, and the TD stretching coefficient.

Even if the polyolefin composition subjected to step (A) has a high molecular weight composition, it is preferable to adjust the TD stretching temperature in step (B) from the viewpoint of facilitating uniform TD stretching in step (B) to improve the cycle characteristics of the non-aqueous secondary battery comprising the obtained microporous membrane, and from the viewpoint of making uniform stress even to a high molecular weight resin to improve the permeability and air permeability distribution of the obtained membrane. The lower limit of the TD stretching temperature is preferably 122.0°C or higher, more preferably 123.0°C or higher, further preferably 124.0°C or higher, even further preferably 125.0°C or higher, particularly preferably 126.0°C or higher, and more particularly preferably 127.0°C or higher, and the upper limit is preferably 145.0°C or lower, more preferably 140.0°C or lower, and further preferably 131.0°C or lower. The TD stretching temperature can be adjusted in accordance with, for example, the TD stretching ratio, the TD stretching air speed, the TD stretching time, and the TD stretching coefficient.

In step (B), from the viewpoint of adjusting the post-compression porosity, crystal long-period, or crystallite size of the obtained microporous membrane within the numerical range described above, the ratio of the preheating coefficient to the stretching coefficient (preheating coefficient/stretching coefficient) is preferably adjusted to 5.7 or more and 7.0 or less, and more preferably 5.8 or more and 7.0 or less. When this ratio is adjusted to 5.7 or more, the sheet is easily stretched by adding more heat in the preheating immediately before stretching, and a uniform structure is easily formed, whereby the cycle characteristics of the nonaqueous secondary battery comprising the ultimately obtained microporous membrane tend to be improved. When this ratio is adjusted to 7.0 or more, stretching unevenness tends to occur, resulting in a non-uniform membrane structure, whereby the cycle characteristics of the nonaqueous secondary battery comprising the ultimately obtained microporous membrane tend to be reduced. The stretching coefficient is a value obtained by multiplying the stretching temperature by the stretching air speed and the residence time of the membrane in the stretching step, and is preferably 20,000°C·m to 50,000°C·m, and more preferably 30,000°C·m to 50,000°C·m. When the stretching furnace is divided into a plurality of chambers having different air speeds, the air speed of the entire stretching furnace is calculated from the formula "air speed of each chamber × furnace length of each chamber / furnace length of the entire stretching furnace." Furthermore, the residence time in the stretching furnace is calculated from "oven length of the entire stretching furnace / average speed of the entire stretching furnace."

In step (B), it is preferable to adjust the biaxial stretching ratio from the viewpoint of adjusting the pin puncture strength, the basis weight converted pin puncture strength, the difference R between the maximum and minimum air permeability at three points in the TD, the air permeability and porosity before compression, the thermal shrinkage rate, the tensile breaking strength and the MD/TD tensile breaking strength ratio of the obtained microporous membrane within the above-described numerical ranges. The biaxial stretching ratio is preferably 5×5 or more, more preferably 5×5 or more and 10×10 or less, and further preferably 6×6 or more and 10×10 or less. From the same viewpoint, it is preferable that the biaxial stretching ratio be a simultaneous biaxial stretching ratio.

In step (B), it is preferable to adjust the biaxial stretching temperature from the viewpoint of adjusting the pin puncture strength and basis weight converted pin puncture strength, the difference R between the maximum and minimum air permeability at three points in the TD, the air permeability and porosity before compression, the thermal shrinkage rate, the tensile breaking strength and the MD/TD tensile break strength ratio of the obtained microporous membrane within the above-described numerical ranges. The biaxial stretching temperature is preferably 122°C or higher and 147°C or lower, more preferably 123°C or higher and 146°C or lower, further preferably 124°C or higher and 145°C or lower, and further preferably 127°C or higher and 140°C or lower.

The PC of the gel-like sheet to be subjected to step (B) is preferably 22% to 30%, and more preferably 25% to 32%, from the viewpoint of increasing the amount of heat applied per unit resin, making uniform the stretching stress, and increasing the distribution of the permeability of the resulting membrane.

In step (B), it is preferable to adjust the heat amount coefficient per unit resin from the viewpoint of adjusting the pin puncture strength, the basis weight converted pin puncture strength, the difference R between the maximum and minimum air permeability at three points in the TD, the air permeability and porosity before compression, and the thermal shrinkage rate of the obtained microporous membrane within the above-described numerical ranges. The heat amount coefficient per unit resin is calculated by the following formula (I):

$$\text{Heat amount coefficient per unit resin} = (\text{biaxial stretching temperature} - 115°\text{C}) / \text{PC} \quad \text{(I)}$$

This value is preferably 0.26°C/% or more. From the viewpoint of increasing the amount of heat applied per unit resin, making uniform the stretching stress, and increasing the distribution of the permeability of the obtained membrane, this value is more preferably 0.26°C/% or more and 1.2°C/% or less, further preferably 0.34°C/% or more and 1.0°C/% or less, even further preferably 0.37°C/% or less and 0.98°C/% or less, and particularly preferably 0.40°C/% or more and

0.95°C/% or less. However, in the case of a dry method in which the membrane is produced and made porous in the absence of liquid, since it is not plasticized, the amount of heat required to make uniform the stretching stress is greater, and therefore this additional heat requirement is excluded from the value calculated by the above formula.

Extraction Step (C):

In step (C), the pore-forming material is removed from the sheet-like molded body to obtain a porous membrane. Examples of the method for removing the pore-forming material include a method in which the sheet-like molded body is immersed in an extraction solvent to extract the pore-forming material and then thoroughly dried. The method for extracting the pore-forming material may be either a batch method or a continuous method. In order to suppress shrinkage of the porous membrane, it is preferable to restrain the ends of the sheet-like molded body during the series of immersion and drying steps. The amount of the pore-forming material remaining in the porous membrane is preferably less than 1 wt% relative to the weight of the entire porous membrane.

The extraction solvent used for the extraction of the pore-forming material is preferably a poor solvent for the polyolefin resin, a good solvent for the pore-forming material, and has a boiling point lower than the melting point of the polyolefin resin. Examples of such an extraction solvent include hydrocarbons such as n-hexane and cyclohexane; halogenated hydrocarbons such as methylene chloride and 1,1,1-trichloroethane; non-chlorinated halogenated solvents such as hydrofluoroethers and hydrofluorocarbons; alcohols such as ethanol and isopropanol; ethers such as diethyl ether and tetrahydrofuran; and ketones such as acetone and methyl ethyl ketone. These extraction solvents may be recovered and reused by distillation or other operations. When an inorganic material is used as the pore-forming material, an aqueous solution of sodium hydroxide, potassium hydroxide, or the like can be used as the extraction solvent.

Heat Setting Step (D):

In the heat setting step (D), in order to suppress shrinkage of the polyolefin microporous membrane, the microporous membrane is heat-treated to heat-set (HS) after the plasticizer extraction in step (C). Examples of the heat treatment of the porous membrane include a stretching operation performed in a predetermined temperature atmosphere and at a predetermined stretching ratio for the purpose of adjusting the physical properties, and/or a relaxation operation performed in a predetermined temperature atmosphere and at a predetermined relaxation rate for the purpose of reducing the stretching stress. The relaxation operation is a shrinking operation of the membrane after the stretching operation. These heat treatments can be performed using a tenter or roller stretching machine. It is preferable that the heat setting, including the stretching and relaxation operation after the plasticizer extraction, be performed in the TD.

In step (D), from the viewpoint of adjusting the post-compression porosity, crystal long-period, or crystallite size of the obtained microporous membrane to within the numerical range described above, it is preferable to preheat the microporous membrane immediately before stretching. The preheating in step (D) can be controlled in accordance with, for example, the preheating temperature.

The TD stretching temperature in the TD stretching operation in step (D) is preferably 130°C or higher and 150°C or lower, more preferably 132°C or higher and 145°C or lower, and further preferably 133°C or higher and 140°C or lower. As a result, the TD thermal shrinkage of the obtained membrane can be reduced at a temperature of 120°C, and the safety of the nonaqueous secondary battery in the pin penetration test can be improved.

The TD stretching ratio in the TD stretching operation of step (D) is preferably 1.1-fold more, more preferably 1.4-fold or more, and further preferably 1.5-fold or more. The TD stretching ratio in step (D) is preferably 3-fold or less, and more preferably 2.5-fold or less. By adjusting the TD stretching ratio in step (D) within the above numerical range, the stretch orientation strengthens the membrane, and the porosity is controlled to optimize the balance between compressibility and permeability. Furthermore, the stress inside the membrane is relaxed to suppress thermal shrinkage, and specifically, the TD thermal shrinkage at a temperature of 120°C is reduced, whereby safety in the pin penetration test can be improved.

The heat setting ratio, i.e., the post-relaxation ratio, in step (D) can be adjusted from the viewpoint of crystallizing the polyethylene, which is the primary component of the microporous membrane, to form a highly rigid trunk, and from the viewpoint of adjusting the average membrane thickness before compression, the pin puncture strength and the basis weight converted pin puncture strength, the difference R between the maximum and minimum air permeability at three points in the TD, the air permeability and the porosity before compression, the thermal shrinkage rate, and the tensile break strength and the MD/TD tensile breaking strength ratio of the obtained microporous membrane within the above-described numerical ranges. The post-relaxation ratio in step (D) is preferably 1.4-fold or more, more preferably 1.5-fold or more, and further preferably 1.5-fold or more and 3-fold or less. As a result, the stretch orientation increases the strength of the membrane, and the porosity can be controlled to optimize the balance between compressibility and permeability, and furthermore, the stress inside the membrane can be relaxed to reduce TD thermal shrinkage at a temperature of 120°C, whereby safety in the pin penetration test of a non-aqueous secondary battery can be improved.

The heat setting temperature, i.e., the relaxation temperature, in step (D) can be adjusted from the viewpoints of

adjusting the average membrane thickness before compression of the resulting microporous membrane within the numerical range described above and reducing the TD thermal shrinkage of the resulting microporous membrane at a temperature of 120°C thereby improving the safety in a pin penetration test of a nonaqueous secondary battery. The relaxation temperature in step (D) is preferably 130°C or higher and 150°C or lower, more preferably 132°C or higher and 145°C or lower, further preferably 133°C or higher and 140°C or lower, and even further preferably 135°C or higher and 140°C or lower.

The polyolefin microporous membrane can be obtained by the production method including steps (A) to (D). The total stretching ratio of the ultimately obtained polyolefin microporous membrane is preferably 60-fold or more, more preferably 61-fold or more and 81-fold or less, in order to crystallize polyethylene, which is the primary component of the microporous membrane, to form a highly rigid trunk.

Throughout steps (A) to (D), the PC of the resin composition, the gel-like sheet, or the porous membrane is preferably 22 wt% to 30 wt%, more preferably 25 wt% to 32 wt%, from the viewpoint of increasing the amount of heat applied per unit resin, making uniform the stretching stress, and increasing the distribution of the permeability of the ultimately obtained membrane.

<Covering Layer Arrangement Method>

A covering layer is arranged on at least one side of the base material produced as described above. The arrangement method of the covering layer is not particularly limited, and examples of the method including applying a coating liquid containing the inorganic filler and the particulate polymer to the base material and then removing the medium.

The coating liquid may be a dispersion in which the inorganic filler and the particulate polymer are dispersed in a solvent or dispersion medium (hereinafter simply referred to as a "medium") that does not dissolve the particulate polymer. Preferably, the particulate polymer is synthesized by emulsion polymerization, and the emulsion obtained by the emulsion polymerization may be used as-is as the coating liquid.

The medium of the coating liquid is preferably one that can uniformly and stably disperse or dissolve the inorganic filler, the particulate polymer, and, if necessary, the water-soluble polymer, and examples thereof include N-methylpyrrolidone, N,N-dimethylformamide, N,N-dimethylacetamide, water, ethanol, methanol, toluene, hot xylene, methylene chloride, and hexane. The medium of the coating liquid is preferably water, or a mixed medium composed of water and a water-soluble organic medium. The water-soluble organic medium is not particularly limited, and examples thereof include ethanol and methanol. Among these, water is more preferable. When the coating liquid is applied to the base material, if the coating liquid penetrates into the interior of the base material, the particulate polymer containing the polymer will block the surface and interior of the pores of the base material, whereby the permeability will tend to be reduced. In this regard, in the case of an aqueous dispersion using water as the medium of the coating liquid, the coating liquid will not easily penetrate into the interior of the base material, whereby the particulate polymer containing the polymer will tend to be mainly present on the outer surface of the base material, and a decrease in permeability can be more effectively suppressed, which is preferable.

The coating liquid may contain arbitrary additives such as dispersants such as surfactants; thickeners; wetting agents; antifoaming agents; and pH adjusters including acids and alkalis.

Examples of the method for dispersing or dissolving the inorganic filler, particulate polymer, and optionally the water-soluble polymer, in the medium of the coating liquid include a ball mill, a bead mill, a planetary ball mill, a vibrating ball mill, a sand mill, a colloid mill, an attritor, a roller mill, high-speed impeller dispersion, a disperser, a homogenizer, a high-speed impact mill, ultrasonic dispersion, and mechanical stirring using a stirring blade or the like.

The procedure for preparing the coating liquid preferably includes first adding the water-soluble polymer to the coating liquid in which the inorganic filler is dispersed, and then adding the resin binder and particulate polymer. By preparing the coating liquid in this order, the water-soluble polymer adsorbs and protects the metal ions contained in the inorganic filler, whereby the aggregation of the resin binder and particulate polymer can be prevented.

From the viewpoint of adjusting the gradient ratio of the covering layer and the contact ratio between the particulate polymer and the base material surface, the viscosity of the coating liquid is preferably 20 mPa·s or more and 80 mPa·s or less, more preferably 60 mPa·s or less, and further preferably 40 mPa·s or less. The viscosity of the coating liquid is preferably 20 mPa·s or more and 80 mPa·s or less, from the viewpoint of settling the particulate polymer quickly to increase the gradient ratio of the covering layer and increasing the contact ratio between the particulate polymer and the base material surface in the process of removing the solvent from the coating film after the application to form the covering layer. As a means for controlling the viscosity of the coating liquid, the aspect ratio of the inorganic filler, for example, the coefficient of variation of the particle size distribution of the inorganic filler, and the type of thickener can be adjusted. By using these means, it is possible to reduce the viscosity of the coating liquid during the process of immobilizing the coating liquid (forming a covering layer by drying) and to improve the meniscus of the coating liquid on the particulate polymer (improve wettability), thereby improving the gradient ratio of the covering layer and increasing the adhesive strength with

the electrodes.

Before the application of the coating liquid, the base material may be surface-treated. Surface treatment is preferable because it makes it easier to apply the coating liquid, improves adhesion between the base material and the thermoplastic polymer, and makes it easier to control the 180° peel strength to 200 gf/cm or more. Examples of surface treatment methods include corona discharge treatment, plasma treatment, mechanical roughening, solvent treatment, acid treatment, and ultraviolet oxidation. Examples of surface treatment include corona discharge treatment.

The method of applying the coating liquid onto the base material is not particularly limited as long as it can achieve the desired coating pattern, coating film thickness, and coating area. Examples of the coating method include the gravure coater method, small diameter gravure coater method, reverse roller coater method, transfer roller coater method, kiss coater method, dip coater method, knife coater method, air doctor coater method, blade coater method, rod coater method, squeeze coater method, cast coater method, die coater method, screen printing method, spray coating method, and inkjet coating method. Among these, the gravure coater method or the spray coating method is preferable from the viewpoint of achieving a high degree of freedom in the application shape of the particulate polymer and easily obtaining a preferable area ratio.

The application method is preferably, for example, a gravure coater method in which the coating is performed at a high shear rate, and the shear rate is preferably 40,000 $sec^{-1}$ or more and 120,000 $sec^{-1}$ or less. When the shear rate is within this range, the particulate polymer is well dispersed as primary particles, and it is easier to control the 180° peel strength to 200 gf/cm or more.

The method for removing the medium from the coating film after coating is not particularly limited so long as it does not adversely affect the base material and covering layer. Examples include a method of drying at a temperature below the melting point of the base material while fixing the base material, a method of drying under reduced pressure at a low temperature, a method of immersing in a medium that is a poor solvent for the particulate polymer to solidify the particulate polymer into particles and simultaneously extract the medium, etc.

<Production of Separator Wound Body>

The obtained separator for a power storage device is preferably wound into a wound body. By forming the separator into a wound body, it can be easily unwound at high speed, whereby productivity in the production process of the power storage device can be increased.

<<Power Storage Device>>

The power storage device of the present embodiment comprises the separator for a power storage device of the present embodiment. The power storage device is not particularly limited, and examples thereof include batteries such as non-aqueous electrolyte secondary batteries, condensers, and capacitors. Among these, in order to utilize the advantages of the separator for a power storage device of the present embodiment, a battery is preferable, a non-aqueous electrolyte secondary battery is more preferable, and a lithium-ion secondary battery is further preferable. The lithium-ion secondary battery comprises a positive electrode, a negative electrode, the separator for a power storage device of the present embodiment arranged between the positive electrode and the negative electrode, and a non-aqueous electrolyte. The power storage device of the present embodiment comprises the separator for a power storage device, and thus, has excellent characteristics such as power storage performance, and in the case of a lithium-ion secondary battery, has excellent battery characteristics.

When the power storage device of the present embodiment is a lithium-ion secondary battery, the positive electrode, the negative electrode, and the nonaqueous electrolyte are not limited, and known materials can be used. As the positive electrode, a positive electrode having a positive electrode active material layer containing a positive electrode active material on a positive electrode current collector can be suitably used. As the positive electrode current collector, for example, aluminum foil can be used. Examples of the positive electrode active material include lithium-containing composite oxides such as $LiCoO_2$, $LiNiO_2$, spinel type $LiMnO_4$, and olivine $LiFePO_4$. In addition to the positive electrode active material, the positive electrode active material layer may appropriately contain a binder, a conductive material, and the like.

As the negative electrode, a negative electrode having a negative electrode active material layer containing a negative electrode active material on a negative electrode current collector can be suitably used. As the negative electrode current collector, for example, copper foil can be used. Examples of the negative electrode active material include carbon materials such as graphite, non-graphitizable carbonaceous, graphitizable carbonaceous, and composite carbon bodies; silicon, tin, metallic lithium, and various alloy materials.

The non-aqueous electrolyte is not particularly limited, and may be an electrolyte solution obtained by dissolving an electrolyte in an organic solvent. Examples of the organic solvent include propylene carbonate, ethylene carbonate, dimethyl carbonate, diethyl carbonate, and ethyl methyl carbonate. Examples of the electrolyte include lithium salts such

as $LiClO_4$, $LiBF_4$, and LiPF6.

<Production Method of Power Storage Device>

The method for the production of a power storage device using the separator of the present embodiment is not particularly limited. Examples thereof include the following method. First, the separator of the present embodiment is produced by the method described above. The size and shape of the separator may be, for example, a vertically elongated shape having a width of 10 to 500 mm, preferably 80 to 500 mm, and a length of 200 to 10,000 m, preferably 1,000 to 6,000 m. Next, the positive electrode-separator-negative electrode-separator, or negative electrode-separator-positive electrode-separator, are laminated in this order and wound into a circular or flat spiral shape to obtain a wound body. The wound body is stored in a device can (for example, a battery can), and further an electrolyte solution is injected to produce the device. Alternatively, the electrode and the separator may be folded to form a wound body, which is then arranged in a device container (for example, an aluminum film) and the electrolyte solution is injected to produce the device.

At this time, the wound body can be pressed. Specific examples of this method include a method in which a separator, a current collector, and an electrode having an active material layer formed on at least one surface of the current collector are stacked such that the covering layer faces the active material layer, and then pressed.

The pressing temperature is preferably $T_{1.00}$ or higher, which is a temperature at which adhesiveness can be effectively exhibited. $T_{1.00}$ is the temperature at which the minimum value of DDSC, defined as the temperature derivative of heat flow difference per unit time measured by DSC (differential scanning calorimetry), is observed between 0°C and 150°C. By pressing at a temperature of $T_{1.00}$ or more, the covering layer is sufficiently deformed and suitable adhesive strength can be obtained. For example, a temperature of 35°C or higher is preferable. In order to prevent clogging of the pores in the separator or thermal shrinkage of the separator due to heat pressing, the pressing temperature is preferably lower than the melting point of the material contained in the base material, and is more preferably 130°C or lower. In order to prevent clogging of the pores in the separator, the pressing pressure is preferably 20 MPa or less. The pressing time may be 1 second or shorter when a roller press is used, or several hours when a flat press is used, and is preferably 2 hours or shorter from the viewpoint of productivity. By using the separator for a power storage device of the present embodiment through the production steps described above, spring-back can be suppressed when a wound body composed of electrodes and a separator is press-molded. Thus, a decrease in yield in the device assembly step can be suppressed and the production process time can be shortened.

Adhesion may be imparted to the wound body without pressing. Specifically, examples of the method include imparting adhesion between the covering layer of the separator and the opposing electrodes by housing the wound body in a device can and injecting an electrolyte solution, and using the pressure generated in the device can when producing a power storage device, or by pressure accompanying expansion and contraction of the electrodes due to charging and discharging of the power storage device.

The power storage device produced as described above, particularly the lithium-ion secondary battery, comprises the separator of the present embodiment, which has high adhesion to the electrodes and a small thermal shrinkage rate, and thus, has excellent battery characteristics (rate characteristics) and long-term continuous operation resistance (cycle characteristics).

## EXAMPLES

The embodiments of the present disclosure will be specifically described below using Examples and Comparative Examples, but the present disclosure is not limited to these Examples and Comparative Examples.

<<Measurement and Evaluation Methods>>

<Thickness of Covering Layer and Protruding Amount of Particulate Polymer>

The separator was freeze-fractured, and the cross section was observed with a SEM (model S-4800, manufactured by Hitachi, Ltd.). The thickness of the thermoplastic polymer-containing layer was measured from the obtained field of view. In detail, a separator sample was cut to about 1.5 mm × 2.0 mm and stained with ruthenium. The stained sample and ethanol were placed in a gelatin capsule, frozen with liquid nitrogen, and the sample was then fractured with a hammer. The fractured sample was vapor-deposited with osmium and observed at an acceleration voltage of 1.0 kV and 30,000-fold magnification. In the SEM image, the distance from the boundary line between the base material and the covering layer to the outer surface of the covering layer in the inorganic filler portion of the covering layer was measured as the thickness of the covering layer (μm). The "inorganic filler portion" refers to the portion that is 1.5D or more away from each protruding particulate polymer, where D is the diameter of each protruding particulate polymer. The "diameter of each protruding particulate polymer" was measured as the area circle equivalent diameter. The thickness of the covering layer

was measured at 20 points and the average value was calculated. The maximum distance (μm) from the boundary line between the base material and covering layer to the contour of the particulate polymer in the covering layer where the particulate polymer protruded was measured. The maximum distance to the contour of the particulate polymer was measured at 20 points and the average value was calculated. The amount of protrusion (μm) of the particulate polymer was calculated by subtracting the thickness of the inorganic filler portion of the covering layer from the maximum distance to the contour of the particulate polymer, and the ratio of the amount of protrusion of the particulate polymer to the thickness of the inorganic filler portion of the covering layer was calculated.

<180° Peel Strength>

The surface of the separator cut to 2 mm × 7 mm opposite to the covering layer to be measured was attached to a glass plate with double-sided tape, and tape (product name "Mending Tape MP-12", manufactured by 3M) was attached to the covering layer. 5 mm of the tip of the tape was peeled off, and the tip of the tape was clamped in a chuck using a tensile tester (model "AG-IS, SLBL-1kN, manufactured by Shimadzu Corporation) so that the tape was peeled off at an angle of 180° relative to the surface direction of the separator. A tensile test was performed at a pulling rate of 50 mm/sec, a temperature of 25 degrees, and a relative humidity of 40%, and the tensile strength (N/m) was measured. Note that 1 gf/cm can be converted to 0.98 N/m.

<Gradient Ratio of Covering Layer>

The separator was freeze-fractured, and the cross section was observed with an SEM (model S-4800, manufactured by Hitachi, Ltd.). The thickness of the thermoplastic polymer-containing layer was measured from the obtained field of view. In detail, a separator sample was cut to about 1.5 mm × 2.0 mm and stained with ruthenium. The stained sample and ethanol were placed in a gelatin capsule, frozen with liquid nitrogen, and the sample was then fractured with a hammer. The fractured sample was vapor-deposited with osmium and observed at an acceleration voltage of 1.0 kV and 30,000-fold magnification. As schematically shown in FIG. 2, in the SEM image of the fractured sample cross section, the distance from the boundary line between the base material and the covering layer to the outer surface of the covering layer in the inorganic filler portion of the covering layer was measured as the thickness L1 (μm) of the inorganic filler portion of the covering layer. The "inorganic filler portion" refers to the portion that is 1.5D or more away from each protruding particulate polymer, where D is the volume average particle size of the protruding particulate polymer. The maximum distance L2 (μm) from the boundary between the base material and covering layer to the outer surface of the inorganic filler of the covering layer formed in a gradient shape, and the maximum distance L3 (μm) from the boundary between the base material and covering layer to the contour of the protruding particulate polymer were measured, and the gradient ratio L2/L1 of the covering layer and the coverage ratio (L2-L1)/(L3-L1) of the protruding portion were calculated. For the gradient ratio L2/L1 of the covering layer and the coverage ratio (L2-L1)/(L3-L1) of the protruding portion, 200 points were measured, and the average value thereof was calculated.

<Contact Ratio Between Protruding Particulate Polymer and Base Material>

The separator was freeze-fractured, and the cross section was observed with an SEM (model S-4800, manufactured by Hitachi, Ltd.). The thickness of the thermoplastic polymer-containing layer was measured from the obtained field of view. In detail, a separator sample was cut to about 1.5 mm × 2.0 mm and stained with ruthenium. The stained sample and ethanol were placed in a gelatin capsule, frozen with liquid nitrogen, and the sample was then fractured with a hammer. The fractured sample was vapor-deposited with osmium and observed at an acceleration voltage of 1.0 kV and 30,000-fold magnification. In the SEM image, the number of particles in contact with the base material was counted for 200 particulate polymers having a fractured surface among the particulate polymers protruding from the thickness of the inorganic filler portion of the covering layer, and this was taken as the contact ratio between the protruding particulate polymer and the base material.

<Ratio of Particulate Polymer Particles Protruding from Thickness of Inorganic Filler Portion of Covering Layer>

The separator was freeze-fractured, and the cross section was observed with an SEM (model S-4800, manufactured by Hitachi, Ltd.). The thickness of the thermoplastic polymer-containing layer was measured from the obtained field of view. In detail, a separator sample was cut to about 1.5 mm × 2.0 mm and stained with ruthenium. The stained sample and ethanol were placed in a gelatin capsule, frozen with liquid nitrogen, and the sample was then fractured with a hammer. The fractured sample was vapor-deposited with osmium and observed at an acceleration voltage of 1.0 kV and 30,000-fold magnification. 200 particulate polymers present on the fractured surface were observed in the SEM image, and the number of particulate polymers protruding from the thickness of the inorganic filler portion of the covering

layer was counted, and this was taken as the ratio of the number of particulate polymers protruding from the thickness of the inorganic filler portion of the covering layer.

<Average Number of Adjacent Particulate Polymers>

The surface of the separator for a power storage device on which osmium was deposited was subjected to elemental mapping using a scanning electron microscope (SEM) (model "SU-8220", manufactured by Hitachi, Ltd.) and energy dispersive X-ray spectroscopy (EDX) (model "ULTIM EXTREME", manufactured by Oxford Instruments). At this time, secondary electrons were selected as the SEM detector, and mapping measurements of carbon atoms were performed at a magnification of 10,000-fold with an acceleration transmission of 3 kV and 20 mapping integrations. In the mapping of carbon atoms, parts which were visually recognized as circles were considered to be one particulate polymer, and the number of particles with a distance between the outer edges of 0.2 μm or less was counted for all particulate polymers in one field of view. This measurement was performed in three fields of view, and the average of all of the measured values was taken as the average number of adjacent particulate polymers.

<Ratio of Average Particle Size of Protruding Particulate Polymer to Average Particle Size of Inorganic Filler>

The cross section of the separator for a power storage device on which osmium was deposited was observed with a scanning electron microscope (SEM) (model "S-4800", manufactured by Hitachi, Ltd.) at an acceleration voltage of 1.0 kV and 10,000-fold magnification for measurement. Specifically, the area circle equivalent diameter was measured for 200 arbitrary inorganic filler particles, and the volume average particle size MV was calculated from these values and used as the average particle size. Similarly, the SEM image of the cross section of the separator for a power storage device on which osmium was deposited was observed, and the area circle equivalent diameter was measured for 200 particulate polymers protruding from the thickness of the inorganic filler portion of the covering layer, and the volume average particle size MV was calculated from these values and used as the average particle size. From the average particle size of the inorganic filler or the average particle size of the particulate polymer determined by the above method, the ratio of the average particle size of the protruding particulate polymer to the average particle size of the inorganic filler was calculated.

<Number of Particulate Polymers Within Radius of 10 μm>

The surface of the separator for a power storage device on which osmium was deposited was subjected to elemental mapping using a scanning electron microscope (SEM) (model "SU-8220", manufactured by Hitachi, Ltd.) and energy dispersive X-ray spectroscopy (EDX) (model "ULTIM EXTREME", manufactured by Oxford Instruments). At this time, secondary electrons were selected as the SEM detector, and mapping measurements of carbon atoms were performed at a magnification of 50 million-fold with an acceleration transmission of 3 kV and 20 mapping integrations. In the mapping of carbon atoms, a part which was visually recognized as a circle was considered to be one particulate polymer, and the number of particulate polymers present within a radius of 10 μm from any particulate polymer was measured for all particulate polymers in one field of view, and the average value thereof was calculated.

<Methylene Chloride Soluble Content>

The methylene chloride soluble content in the base material and the separator was measured by the following method. The base material or the separator sampled at a size of 100 × 100 mm was neutralized and weighed using a precision balance ($W_0$ (g)). Next, 200 ml of methylene chloride was added to a sealed container, and the separator was immersed at room temperature for 15 minutes. Thereafter, the separator was removed, dried at room temperature for 3 hours, neutralized in the same manner as above, and weighed using a precision balance ($W_1$ (g)). The methylene chloride soluble content was calculated using the following formula.

$$\text{Methylene chloride soluble content (\%)} = \{(W_1 - W_0) / W_0\} \times 100$$

<Total Amount of Metal Cations>

0.60 g of the separator was placed in a Teflon™ pressure decomposition vessel, 10 ml of sulfuric acid was added, and the vessel was sealed and heated in an air bath at 200°C for 15 hours. After cooling, the solution in the vessel was transferred to a 100 ml resin measuring flask, which was measured up to the mark to obtain a sample solution. The sample solution was measured using an inductively coupled plasma atomic emission spectrometry (ICP-OES) (model "ICPE-9000", manufactured by Shimadzu Corporation), and the content of each element was calculated using a

calibration curve prepared from the standard solution.

<Thermal Shrinkage Rate>

As a sample, the separator was cut to 100 mm in the MD and 100 mm in the TD, and allowed to stand in an oven at 130°C or 150°C for 1 hour. At this time, the sample was interposed between two pieces of paper so that the hot air would not directly hit the sample. After removing the sample from the oven and cooling, the length (mm) was measured and the thermal shrinkage rate was calculated using the following formula. Measurements were performed in the MD and TD, and the larger value was taken as the thermal shrinkage rate.

$$\text{Thermal shrinkage rate (\%)} = \{(100 - \text{length after heating}) / 100\} \times 100$$

<Viscosity Average Molecular Weight>

The intrinsic viscosity [η] (dl/g) in decalin solvent at 135°C was determined based on ASTM-D4020.
For polyethylene, the calculation was made according to the following formula:

$$[\eta] = 6.77 \times 10^{-4}\ M_V{}^{0.67}$$

For polypropylene, Mv was calculated by the following formula:

$$[\eta] = 1.10 \times 10^{-4}\ M_V{}^{0.80}$$

<Weight Average Molecular Weight and Number Average Molecular Weight>

A calibration curve was created by measuring standard polystyrene under the following conditions using a Waters ALC/GPC 150C™. Chromatograms were also measured under the same conditions for each of the following polymers, and the weight average molecular weight of each polymer was calculated based on the calibration curve by the following method.

Column: Two GMH6-HT + Two GMH6-HTL™, manufactured by Tosoh Corporation
Mobile phase: o-dichlorobenzene
Detector: Differential refractometer
Flow rate: 1.0 ml/min
Column temperature: 140°C
Sample concentration: 0.1 wt%

<Weight Average Molecular Weight and Number Average Molecular Weight of Polyethylene and Polypropylene>

Each molecular weight component in the obtained calibration curve was multiplied by 0.43 (Q factor of polyethylene / Q factor of polystyrene = 17.7/41.3) or 0.64 (Q factor of polypropylene / Q factor of polystyrene = 26.4/41.3) to obtain a polyethylene-equivalent or polypropylene-equivalent molecular weight distribution curve, and the weight average molecular weight and number average molecular weight were calculated.

<Weight Average Molecular Weight and Number Average Molecular Weight of Resin Composition or Microporous Resin Membrane>

The weight average molecular weight and number average molecular weight were calculated using the Q factor value of the polyolefin having the largest weight fraction, and otherwise in the same manner as in the case of polyethylene.

<Melt Flow Index (MI)>

The melt flow index (MI) of the microporous membrane was measured according to JIS K7210:1999 (melt mass flow rate (MFR) and melt volume flow rate (MVR) of plastics-thermoplastics). A load of 21.6 kgf was applied to the membrane at 190°C, the amount of resin (g) flowing out from an orifice having a diameter of 2 mm and a length of 10 mm in

10 minutes was measured, and the value rounded off to one decimal place was taken as the MI.

<DSC Measurement>

DSC (Differential Scanning Calorimetry) was performed using a DSC60, manufactured by Shimadzu Corporation. First, PO microporous membranes were punched into circles each having a diameter of 5 mm, several of which were stacked together to obtain a 3 mg measurement sample. This sample was placed on an open aluminum sample pan having a diameter of 5 mm, a clamping cover was placed thereon, and the sample was fixed in the aluminum pan with a sample sealer. In a nitrogen atmosphere, the temperature was raised from 30°C to 200°C at a temperature rise rate of 10°C/min (first temperature rise), maintained at 200°C for 5 minutes, and then lowered from 200°C to 30°C at a temperature decrease rate of 10°C/min. Next, the temperature was maintained at 30°C for 5 minutes, and then again raised from 30°C to 200°C at a temperature rise rate of 10°C/min (second temperature rise). In the second temperature rise, the temperature corresponding to the maximum peak in the melting endothermic curve was determined as the melting point of the PO microporous membrane. When multiple peaks were present, the first peak and the largest peak were detected. The temperature corresponding to the largest peak in the melting endothermic curve can be used as the melting point (Tm) of the PO microporous membrane.

<Density (g/cm$^3$),

The density of the sample was measured by the density gradient tube method (23°C) in accordance with JIS K7112:1999.

<Basis Weight (g/m$^2$) >

The basis weight is the weight (g) of the polyolefin microporous membrane per unit area (1 m$^2$). After sampling to 1 m × 1 m, the weight was measured using an electronic balance (AUW120D) manufactured by Shimadzu Corporation. If it was not possible to sample to 1 m × 1 m, a sample was cut to an appropriate area, the weight was measured, and then the weight was converted to the weight (g) per unit area (1 m$^2$).

<Average Membrane Thickness (μm) of Microporous Membrane Before Compression>

The thickness was measured at an atmospheric temperature of 23±2°C using a microthickness gauge (type KBN, terminal diameter Φ5 mm) manufactured by Toyo Seiki Seisaku-sho, Ltd. In the measurement of the thickness, the microporous membrane was sampled in an area of 10 cm × 10 cm, and multiple microporous membranes were stacked to a thickness of 15 μm or more, and the thickness was measured at nine locations and the average value thereof was calculated. The average value was divided by the number of membranes stacked to determine the thickness of one microporous membrane.

<Porosity (%) Before Compression>

Samples of 3 cm × 3 cm square, 1 cm × 1 cm square, 5 cm × 5 cm square, or 10 cm × 10 cm square were cut from the polyolefin microporous membrane, and their volume (cm$^3$) and weight (g) were calculated based on the average membrane thickness measurement results. The porosity (%) before compression was calculated using the following formula from these values and density (g/cm$^3$).

$$\text{Porosity (\%)} = (\text{volume - weight / density of mixed composition}) / \text{volume} \times 100$$

The density of the mixed composition was calculated from the density and mixing ratio of each of the polyolefin resin and the other components used.

<Post-Compression Porosity (%)>

Two rubber cushioning materials each having a thickness of 0.8 mm, two PET films each having a thickness of 0.1 mm, and two microporous membranes were prepared. These were laminated in the order of one cushioning material, one PET film, two microporous membranes, one PET film, and one cushioning material, and the resulting laminate was placed in a press. A compression test was performed by clamping the cushioning material surfaces on both sides of the laminate with the press and applying pressure. The compression test was performed under the conditions of a temperature of 70°C,

a pressure of 8 MPa, and a compression time of 3 minutes. If necessary, the compression ratio after pressure relaxation was measured. The compression ratio was measured between 2 hours and 24 hours after pressure relaxation. After the compression test, the pressure was relaxed, and the microporous membranes were removed from the laminate, and the microporous membranes after the compression test were used as samples, and the post-compression porosity (%) was measured by the same method as in the above "Porosity (%) Before Compression".

The same compression test was carried out under the conditions of a temperature of 30°C and a compression time of 3 minutes at pressures of 2.5 MPa, 5 MPa, 7.5 MPa, and 10 MPa. One hour after the pressure was released, the microporous membranes were removed from the laminate, and the average membrane thickness (average of 9 points) after compression and the air permeability after compression were measured. The post-compression porosity was calculated from the basis weight and the average membrane thickness after compression. Finally, an approximation curve as shown in FIG. 3 was created using power approximation for the post-compression porosity and the post-compression air permeability from the four measurement points of the microporous membranes compressed at the above four pressures. In FIG. 3, membrane types A to C are commercially available polyolefin separators.

<Air Permeability Before Compression (sec/100 $cm^3$) >

Air permeability was measured using an Oken-type air permeability measuring instrument, "EGO2," manufactured by Asahi Seiko Co., Ltd. The measured value of air permeability was calculated by averaging the air permeability at three points, 5 cm from both ends and one point in the center along the width direction of the membrane.

<Puncture Strength and Basis Weight Converted Puncture Strength>

Using a handy compression tester KES-G5™ manufactured by Kato Tech Co., Ltd., the microporous membrane was fixed with a sample holder having an opening diameter of 11.3 mm. Next, a puncture test was performed on the center of the fixed microporous membrane at a pin tip curvature radius of 0.5 mm, a puncture speed of 2 mm/sec, and an atmosphere of room temperature of 23°C and humidity of 40%, to measure the puncture strength (gf) as the maximum puncture load. For the measured value of the puncture test, the puncture strength was measured along the TD of the membrane at three points, two points 10% inside the full width from both ends toward the center and one point in the center, and the average value thereof was calculated.

The basis weight converted puncture strength was calculated using the following formula.

Basis weight converted puncture strength [gf/(g/$m^2$)] = puncture strength [gf] / basis weight [g/$m^2$]

Regarding the puncture strength and basis weight converted puncture strength of the separator having at least one layer provided on the polyolefin microporous membrane base material, the characteristics were evaluated based on the puncture strength and basis weight converted puncture strength of the polyolefin microporous membrane base material from the viewpoint of evaluating the strength of the resin and the strength per basis weight.

<Pore Diameter (nm): Half Dry>

The average pore size (N/m) was measured using a perm porometer (Porous Materials, Inc.: CFP-1500AE) in accordance with the half-dry method. Perfluoropolyester (trade name "Galwick", surface tension 15.6 dyn/cm) manufactured by the same company was used as the immersion liquid. The applied pressure and air permeability were measured for the dry curve and the wet curve. The average pore size dHD (nm) was calculated from the pressure PHD (Pa) at which the curve corresponding to half of the obtained dry curve intersected with the wet curve, using the following formula, which was taken as the pore size.

$$dHD = 2860 \times \gamma / PHD$$

<Fuse (Shutdown) Temperature>

Two Ni foils (A, B) each having a thickness of 10 μm were prepared. One Ni foil A was TM masked with Teflon tape, leaving a rectangular portion of 15 mm in length and 10 mm in width. A separator for a measurement sample was placed on the other Ni foil B, and both ends of the separator were fixed with Teflon ™ tape. This Ni foil B was immersed in a 1 mol/L lithium borofluoride electrolyte solution (solvent: propylene carbonate/ethylene carbonate/y-butyrolactone = mixed solvent with a volume ratio of 1/1/2) to impregnate the separator with the electrolyte solution. The Ni foils (A, B) were then bonded together and both sides were held down with clips by two glass plates. The Ni foil electrode prepared in this

manner was placed in an oven at 25°C and the temperature was raised to 200°C at 2°C/min. The impedance change at this time was measured using an electrical resistance measuring device "AG-4311" (manufactured by Ando Electric Co., Ltd.) under the conditions of 1 V and 1 kHz. The temperature at which the impedance value reached 1000Ω in this measurement was defined as the fuse (shutdown) temperature (°C).

<Measurement of Withstand Voltage Per Basis Weight Before Compression>

A polyolefin microporous membrane samples having a size of 10 cm MD × 10 cm TD was cut from near the center of the width direction, interposed between aluminum plates having a diameter of 5 mm, and the withstand voltage per basis weight before compression was measured using a withstand voltage measuring instrument (TOS9201) manufactured by Kikusui Electronics Corp. Regarding the measurement conditions, the DC voltage was started from an initial voltage of 0 V, a voltage was applied at a voltage increase rate of 100 V/sec, and the voltage value (kV) when a current value of 0.2 mA flowed was taken as the measured value of the withstand voltage of the microporous membrane. In addition, a total of 25 points were measured at 5 points MD × 5 points TD at 15 mm intervals, and the average value thereof was taken as the measured value of the withstand voltage. The withstand voltage per basis weight was calculated as the ratio of the basis weight to the withstand voltage (withstand voltage/basis weight).

<Crystal Structure Analysis>

The crystal long-period of the polyolefin microporous membrane was measured by small-angle X-ray scattering measurement of the transmission method using NANOPIX, manufactured by Rigaku Corporation. The sample was irradiated with CuKα radiation, and scattering was detected by a semiconductor detector HyPix-6000. The measurement was performed under the conditions of a sample-detector distance of 1312 mm and an output of 40 kV and 30 mA. A point focus was used for the optical system, and the slit diameters were 1st slit: φ = 0.55 mm, 2nd slit: open, and guard slit: φ = 0.35 mm. The sample was set so that the sample surface was perpendicular to the X-ray incidence direction.

The crystallite size of the polyethylene MDND plane (110) of the polyolefin microporous membrane was measured by wide-angle X-ray scattering measurement of the transmission method using NANOPIX, manufactured by Rigaku Corporation. The sample was irradiated with CuKα rays, and scattering was detected by an imaging plate. The measurement was performed under the conditions of a sample-detector distance of 110 mm, and an output of 40 kV, 30 mA. A point focus was adopted as the optical system, and the slit diameter was 1st slit: φ = 1.2 mm, guard slit: φ = 0.35 mm. The sample was set so that the angle between the sample surface and the X-ray incidence direction was 11.0°. At this time, the X-ray incidence direction and the MD of the sample were perpendicular to each other.

<Crystal Long-Period [nm]>

An SAXS profile I(q) was obtained by circular averaging of the X-ray scattering pattern obtained from the HyPix-6000. In the Linear-Linear plot of the obtained one-dimensional profile I(q), a straight baseline was drawn in the range of $0.1\ nm^{-1} < q < 0.6\ nm^{-1}$, and fitting was performed with a Gaussian function. The position corresponding to the maximum intensity was set as the peak position $q_m$ derived from the crystal long-period, and the crystal long-period was calculated from the following formula.

$$d = 2\pi / q_m$$

where d (nm) represents crystal long-period, and
$q_m$ ($nm^{-1}$): the peak position of the lamella in the SAXS profile

<Crystallite size>

The range of 2θ = 10.0° to 2θ = 30.0° of the obtained XRD profile was separated into three peaks, an orthorhombic (110) plane diffraction peak, an orthorhombic (200) plane diffraction peak, and an amorphous peak. The crystallite size was calculated from the full width at half maximum of the (110) plane diffraction peak according to Scherrer's formula (Formula 1). The (110) plane diffraction peak and the (200) plane diffraction peak were approximated by a Voigt function, and the amorphous peak was approximated by a Gauss function. The peak position of the amorphous peak was fixed at 2θ = 19.6°, the full width at half maximum was fixed at 6.3°, and the peak position and full width at half maximum of the crystalline peak were not particularly fixed and peak separation was performed. The crystallite size was calculated from the full width at half maximum of the (110) plane diffraction peak calculated by peak separation according to Scherrer's formula (below).

$$D(110) = K\lambda / (\beta\cos\theta)$$

where D(110): crystallite size (nm)
K: 0.9 (constant)
$\lambda$: X-ray wavelength (nm)

$$\beta: (\beta_1^2 - \beta_2^2)^{0.5}$$

$\beta_1$: Full width at half maximum (rad) of the peak (hkl) calculated as a result of peak separation
$\beta_2$: Full width at half maximum (rad) of the divergence of the incident beam
$\theta$: Bragg angle

It is preferable to measure the crystal long-period and crystallite size based on crystal structure analysis in the base material before the application is carried out. However, due to the principle of X-ray structure analysis, the same results can be obtained even if the measurements are made on the separator after the application is carried out, or even if the coating layer is peeled off from the separator after the application is carried out.

<Smoothness (sec/10 $cm^3$)>

In accordance with ISO 8791-5:2020, the smoothness of the polyolefin microporous membrane was measured in an atmosphere at a temperature of 30°C and a humidity of 40% with an air permeability smoothness meter EYO-5 manufactured by Asahi Seiko Co., Ltd., using a stainless nozzle having an inner diameter of 0.15 mm and a length of 50 mm. The surface smoothness of one surface and the other surface of the polyolefin microporous membrane were measured, and the average value of the smoothness of the one surface and the other surface was calculated as described above.

<Average Pore Size of Polyolefin Microporous Membrane>

It is known that the fluid inside a capillary follows a Knudsen flow when the mean free path of the fluid is larger than the pore diameter of the capillary, and follows a Poiseuille flow when it is smaller. Thus, it was assumed that the air flow in the air permeability measurement of the thermoplastic polymer-containing layer follows a Knudsen flow, and the water flow in the water permeability measurement of the base material follows a Poiseuille flow.

The average pore size d ($\mu$m) of the polyolefin microporous membrane was calculated from the air permeation rate constant $R_{gas}$ ($m^3/(m^2 \cdot sec \cdot Pa)$), the water permeation rate constant $R_{liq}$ ($m^3/(m^2 \cdot sec \cdot Pa)$), the air molecular velocity v (m/sec), the water viscosity $\eta$ (Pa·sec), the standard pressure Ps (= 101,325 Pa), the porosity $\varepsilon$ (%), and the membrane thickness L ($\mu$m) using the following formula:

$$d = 2v \times (R_{liq} / R_{gas}) \times (16\eta / 3Ps) \times 10^6$$

$R_{gas}$ was calculated from the air permeability (sec) using the following formula:

$$R_{gas} = 0.0001 / (\text{air permeability} \times (6.424 \times 10^{-4}) \times (0.01276 \times 101325))$$

Furthermore, $R_{liq}$ was calculated from the water permeability ($cm^3/(cm^2 \cdot sec \cdot Pa)$) using the following formula.

$$R_{liq} = \text{water permeability}/100$$

The water permeability was determined as follows. A thermoplastic polymer-containing layer that had been soaked in ethanol beforehand was placed in a stainless-steel liquid permeability cell having a diameter of 41 mm, and the ethanol in this layer was washed away with water. Water was then permeated through the cell at a differential pressure of about 50,000 Pa, the amount of water permeation per unit time, unit pressure, and unit area was calculated from the amount of water permeation ($cm^3$) after 120 seconds had elapsed, and this was taken as the water permeability.

Moreover, v was calculated using the following formula from the gas constant R (= 8.314), absolute temperature T (K), the circular constant $\pi$, and the average molecular weight of air M (=2.896 $\times$ $10^{-2}$ kg/mol).

$$\nu = ((8R \times T) / (\pi \times M))^{1/2}$$

<Glass Transition Temperature of Thermoplastic Polymer>

An appropriate amount of the aqueous dispersion (solid content = 38 to 42 parts by weight, pH = 9.0) containing a thermoplastic polymer was placed on an aluminum dish and allowed to stand at room temperature for 24 hours to obtain a dry film. Approximately 17 mg of the dry film was filled into an aluminum container for measurement, and a DSC curve under a nitrogen atmosphere and a DSC curve were obtained using a DSC measurement device (manufactured by Shimadzu Corporation, model name "DSC6220"). The measurement conditions were as follows.

First stage temperature rise program: temperature, starting at 30°C, is raised at a rate of 10°C per minute. After reaching 150°C, the temperature is maintained for 5 minutes.

Second stage temperature reduction program: temperature is reduced from 110°C at a rate of 10°C per minute. After reaching -50°C, the temperature is maintained for 5 minutes.

Third stage temperature rise program: temperature is raised from -50°C to 150°C at a rate of 10°C per minute. DSC and DDSC data were obtained during this third stage temperature rise.

The glass transition temperature of the obtained DSC curve was determined by the method described in JIS K7121. Specifically, the temperature at the point where the curve of the step-like change during the glass transition intersects with a straight line that is equidistant from a straight line obtained by extending the baseline on the low temperature side of the DSC curve to the high temperature side and a straight line obtained by extending the baseline on the high temperature side of the DSC curve to the low temperature side in the vertical axis direction was used as the glass transition temperature (Tg).

<Aspect Ratio of Inorganic Filler in Covering Layer>

The surface of the separator for a power storage device on which osmium was deposited was observed at an acceleration voltage of 1.0 kV and 10,000-fold magnification, and the aspect ratio was measured using a scanning electron microscope (SEM) (model "S-4800", manufactured by Hitachi, Ltd.). The inorganic filler in the covering layer was image-processed in the SEM image to determine the aspect ratio. Even when inorganic fillers were bound to each other, inorganic fillers whose length and width as a single unit were clearly recognizable were selected to calculate the aspect ratio. Specifically, 10 inorganic fillers whose length and width were clearly recognizable were selected, and the aspect ratio was calculated as the average ratio of the major axis to the minor axis of each filler. When there were fewer than 10 inorganic fillers whose length and width were clearly recognizable in one field of view, 10 inorganic fillers were selected from images of multiple fields of view.

<Particle Size Distribution of Inorganic Filler>

The particle size distribution of the inorganic filler was measured using a particle size measuring device (manufactured by Nikkiso Co., Ltd., product name "Microtrac UPA150"). The sample solution to be measured was the pre-application dispersion, and the measurement conditions were loading index = 0.20, a measurement time of 300 seconds, and the particle size distribution (Cv value) of the inorganic filler was calculated by dividing the standard deviation SD value of the volume average particle size in the obtained data by the value D50.

<Volume Average Particle Size (D50) of Thermoplastic Polymer (Particulate Polymer) in Aqueous Dispersion and Volume Average Particle Size (D50) of Resin Binder>

The volume average particle size (D50) of the thermoplastic polymer (particulate polymer) in the aqueous dispersion and the volume average particle size (D50) of the resin binder were measured using a particle diameter measuring device (product name "Microtrac UPA150" manufactured by Nikkiso Co., Ltd.). The measurement conditions were a loading index of 0.20 and a measurement time of 300 seconds, and the particle diameter (D50) value at which the cumulative volume in the obtained data became 50% was recorded as the volume average particle size (D50).

<Particle Size Distribution of Particulate Polymer>

The cross section of the separator for a power storage device on which osmium was deposited was observed at an acceleration voltage of 1.0 kV and 10,000-fold magnification using a scanning electron microscope (SEM) (model "S-4800", manufactured by Hitachi, Ltd.). Specifically, the area circle equivalent diameter was measured for 200 arbitrary particulate polymers, and the number average particle size MN and volume average particle size MV were calculated from

these values, and the particle size distribution of the particulate polymer was calculated as MV/MN.

<Rate Characteristics>

a. Preparation of Positive Electrode

A slurry was prepared by mixing 90.4 parts by weight of nickel, manganese, and cobalt composite oxide (NMC) (Ni:Mn:Co=1:1:1 (element ratio), density 4.70 g/$cm^3$) as a positive electrode active material, 1.6 parts by weight of graphite powder (KS6) (density 2.26 g/$cm^3$, number average particle size 6.5 $\mu$m) as a conductive additive, 3.8 parts by weight of acetylene black powder (AB) (density 1.95 g/$cm^3$, number average particle size 48 nm) as a conductive additive, and 4.2 parts by weight of polyvinylidene fluoride (PVdF) (density 1.75 g/$cm^3$) as a binder, and dispersing these in N-methylpyrrolidone (NMP). The slurry was applied to one side of an aluminum foil having a thickness of 20 $\mu$m, which serves as the positive electrode current collector, using a die coater, and then dried at 130°C for 3 minutes, followed by compression molding using a roller press to prepare a positive electrode. The amount of the positive electrode active material applied was 109 g/$m^2$.

b. Preparation of Negative Electrode

87.6 parts by weight of graphite powder A (density 2.23 g/$cm^3$, number average particle size 12.7 $\mu$m) and 9.7 parts by weight of graphite powder B (density 2.27 g/$cm^3$, number average particle size 6.5 $\mu$m) as negative electrode active materials, as well as 1.4 parts by weight (solid content equivalent) of ammonium salt of carboxymethylcellulose (solid content concentration 1.83 parts by weight aqueous solution), and 1.7 parts by weight (solid content equivalent) of diene rubber latex (solid content concentration 40 parts by weight aqueous solution) were dispersed in purified water to prepare a slurry. This slurry was applied to one side of a copper foil having a thickness of 12 $\mu$m, which serves as the negative electrode current collector, with a die coater, dried at 120°C for 3 minutes, and then compression molded with a roller press to prepare a negative electrode. The amount of negative electrode active material applied at this time was 5.2 g/$m^2$.

c. Preparation of Non-Aqueous Electrolyte Solution

A non-aqueous electrolyte was prepared by dissolving $LiPF_6$ as a solute in a mixed solvent of ethylene carbonate:ethyl methyl carbonate=1:2 (volume ratio) to a concentration of 1.0 mol/L.

d. Battery Assembly

The separator or base material was cut to a circle of 24 mm$\varphi$, and the positive and negative electrodes were each cut into a circle of 16 mm$\varphi$. The negative electrode, separator or base material, and positive electrode were stacked in this order so that the active material surfaces of the positive and negative electrodes faced each other, and then placed in a stainless-steel metal container with a lid. The container and the lid were insulated, the container was in contact with the copper foil of the negative electrode, and the lid was in contact with the aluminum foil of the positive electrode. 0.4 ml of the nonaqueous electrolyte solution was poured into this container and the container was sealed to assemble a battery.

e. Evaluation of Rate Characteristics

The simple battery assembled in "d." was charged at 25°C at a current value of 3 mA (about 0.5 C) to a battery voltage of 4.2 V, and the current value was then reduced from 3 mA so as to maintain 4.2 V, and the initial charging after the battery was made was performed for a total of about 6 hours. The battery was then discharged at a current value of 3 mA to a battery voltage of 3.0 V. Next, it was charged at 25°C at a current value of 6 mA (about 1.0 C) to a battery voltage of 4.2 V, and the current value was then reduced from 6 mA so as to maintain 4.2 V, and charging was performed for a total of about 3 hours. The discharge capacity when it was discharged at a current value of 6 mA to a battery voltage of 3.0 V was taken as the 1 C discharge capacity (mAh). Next, it was charged at 25°C at a current value of 6 mA (about 1.0 C) to a battery voltage of 4.2 V, and the current value was then reduced from 6 mA so as to maintain 4.2 V, and charging was performed for a total of about 3 hours. Thereafter, the discharge capacity when the battery was discharged at a current value of 12 mA (about 2.0 C) to a battery voltage of 3.0 V was defined as the 2 C discharge capacity (mAh). The ratio of the 2 C discharge capacity to the 1 C discharge capacity was then calculated, and this value was defined as the rate characteristic.

$$\text{Rate characteristic (\%)} = (\text{2 C discharge capacity} / \text{1 C discharge capacity}) \times 100$$

Evaluation criteria for rate characteristics (%)

A (Good): Rate characteristic exceeds 85%
B (Acceptable): Rate characteristic exceeds 80% and is 85% or less
C (Poor): rate characteristic is 80% or less

<Adhesive Strength with Electrodes (Before Electrolyte Solution Injection)>

The separator was cut into a rectangular shape of 20 mm width × 70 mm length, and was stacked on a positive electrode cut to a size of 15 mm × 60 mm to form a laminate of the separator and electrode. This laminate was then pressed under the following conditions.

Temperature: 90 °C
Pressing pressure: 1 MPa
Pressing time: 5 seconds

The peel strength between the separator and the electrodes after pressing was measured by a 90° peel test at a peel speed of 50 mm/min using force gauges ZP5N and MX2-500N (product names) manufactured by IMADA Co., Ltd. At this time, the average value of the peel strength in the peel test for a length of 40 mm conducted under the above conditions was adopted as the peel strength.

Adhesion Evaluation Criteria

A (Good): Peel strength is 5 N/m or more
B (Acceptable): Peel strength is 2N/m or more and less than 5 N/m
C (Poor): Peel strength is 1 N/m or more and less than 2 N/m
D (Unacceptable): Peel strength is less than 1 N/m

<Adhesive Strength with Electrodes (After Electrolyte Solution Injection)>

The separator was cut into a rectangular shape of 20 mm wide × 70 mm long, and was stacked with a positive electrode cut to a size of 15 mm × 60 mm to form a laminate of the separator and the electrode. This laminate was inserted into an aluminum laminate film, and 0.4 ml of electrolyte solution (a mixture of EC/DEC = 1/2 containing 1 mol/L $LiPF_6$) was added thereto. This was sealed and allowed to stand for 12 hours, and pressed under the following conditions.

Temperature: 90°C
Pressing pressure: 1 MPa
Pressing time: 1 minute

The peel strength between the separator and the electrodes after pressing was measured by a 90° peel test at a peel speed of 50 mm/min using force gauges ZP5N and MX2-500N (product names) manufactured by IMADA Co., Ltd. At this time, the average value of the peel strength in the peel test for a length of 40 mm conducted under the above conditions was adopted as the peel strength.

Adhesion Evaluation Criteria

A (Good): Peel strength is 5 N/m or more
B (Acceptable): Peel strength is 2 N/m or more and less than 5 N/m
C (Poor): Peel strength is 1 N/m or more and less than 2 N/m
D (Unacceptable): Peel strength is less than 1 N/m

<Powder Flaking>

A tape (manufactured by 3M) measuring 12 mm wide and 100 mm long was attached to the raw polymer coating layer of the separator. The force required to peel the tape from the sample at a rate of 50 mm/min was measured using a 90° peel strength measuring device (manufactured by IMADA Co., Ltd., product name IP-5N). Based on the measurement results, the adhesive strength was evaluated according to the following criteria.

A (Good): 59 N/m (6 gf/mm) or more
B (Acceptable): 40 N/m or more and less than 59 N/m
C (Poor): Less than 40 N/m

<Cycle Characteristics and Distortion of Electrode-Separator Wound Body>

a. Preparation of Positive Electrode

100 parts by weight of a nickel, cobalt, aluminum composite oxide (NCA) (Ni:Co:Al = 90:5:5 (element ratio), density 3.50 g/cm$^3$) as a positive electrode active material, 1.25 parts by weight of acetylene black powder (AB) as a conductive material, and 1.0 part by weight of polyvinylidene fluoride (PVdF) as a binder were mixed, and these were dispersed in N-methylpyrrolidone (NMP) to prepare a slurry. This slurry was applied to both sides of an aluminum foil having a thickness of 15 $\mu$m serving as a positive electrode current collector using a die coater, dried at 130°C for 3 minutes, and then compression molded using a roller press to prepare a positive electrode. The amount of positive electrode active material applied at this time was 456 g/m$^2$.

b. Preparation of Negative Electrode

A slurry was prepared by dispersing 86.0 parts by weight of graphite powder as a negative electrode active material, 4.5 parts by weight of silicon oxide (SiO), and 1 part by weight of sodium salt of carboxymethylcellulose and 1.0 part by weight of styrene-butadiene rubber (SBR) as a binder in purified water. This slurry was applied to both sides of a 7.5 $\mu$m-thick copper foil serving as a negative electrode current collector using a die coater, dried at 120°C for 3 minutes, and then compression molded using a roller press to prepare a negative electrode. The amount of negative electrode active material applied at this time was 266 g/m$^2$.

c. Preparation of Non-Aqueous Electrolyte Solution

A non-aqueous electrolyte was prepared by dissolving $LiPF_6$ as a solute in a mixed solvent of ethylene carbonate:dimethyl carbonate:ethyl methyl carbonate = 25:70:5 (weight ratio) to a concentration of 1.4 mol/L.

d. Battery Assembly

The positive electrode (width 63 mm), negative electrode (width 64 mm), and separator (width 67 mm) were stacked and spirally wound to prepare a wound body, which was then placed in a cylindrical battery can having an outer diameter of 21 mm and a height of 70 mm, and the nonaqueous electrolyte solution was poured into the can and sealed to assemble the battery.

e. Evaluation of Cycle Characteristics

The battery assembled in "d." was charged at 25°C at a current value of 3 mA (about 0.5 C) until the battery voltage was 4.2 V, and then charged until the current value was 50 mA while maintaining 4.2 V. Discharge was then performed at 0.2 C until the battery voltage was 2.5 V, and the initial capacity was obtained. Next, the battery was charged at 0.3 C until the battery voltage was 4.2 V, and then charged until the current value was 50 mA while maintaining 4.2 V, and then discharged at 1 C until the battery voltage was 2.5 V. This was set as one cycle, and charging and discharging were repeated. The cycle characteristics were evaluated according to the following criteria, using the capacity retention rate after 500 cycles relative to the initial capacity (capacity in the first cycle).

A: capacity retention rate of 80% or more
B: capacity retention rate of 75% or more and less than 80%
C: capacity retention rate less than 75%

f. Evaluation of Condition of Wound Body after Cycle Characteristics

After the cycle characteristic test performed in "e.", the battery was disassembled and the electrode-separator wound body was checked for distortion. If distortion was present, it was judged as "present", and if no distortion was present, it was judged as "absent." If there was a gap of 0.5 mm or more, it was judged as "present", and if there was a gap of less than 0.5 mm, it was judged as "absent."

<<Base Material Production Examples>>

<Production of Polyolefin Microporous Membrane Base Materials B1 to B11>

(1) As shown in Table 1, the ratio of the polyethylene having an Mv of 700,000 or more (PE1: Mv 900,000, PE3: Mv 800,000, PE4: Mv 700,000, PE6: Mv 770,000), the polyethylene having an Mv of 700,000 or less (PE2: Mv 250,000, PE5: Mv 370,000) and polypropylene (PP, Mv 400,000) was adjusted to obtain a raw material resin composition. Next, the raw material resin composition, a plasticizer (liquid paraffin), and 0.1 wt% of an antioxidant were blended so as to obtain the resin content (PC) shown in Table 1 to obtain a polyolefin composition. Next, the polyolefin composition was charged into a twin-screw extruder, and the molten polyolefin composition was extruded to form a gel-like sheet, which was then cooled and solidified with a cast roller.
(2) The cooled and solidified sheet was subjected to a biaxial stretching step using a simultaneous biaxial stretching machine under the conditions shown in Table 1 to obtain a stretched sheet.
(3) The stretched sheet was then immersed in methylene chloride to extract and remove the liquid paraffin, and then dried to make it porous.
(4) Furthermore, the obtained porous material was heat-set using a uniaxial stretching machine under the conditions shown in Table 1 to obtain polyolefin microporous membrane base materials B1 to B11. The obtained polyolefin microporous membranes were evaluated according to the methods described above. The evaluation results are shown in Table 2.

[Table 1]

Table 1. Base Material

| | | | Base material B1 | Base material B2 | Base material B3 | Base material B4 | Base material B5 | Base material B6 | Base material B7 | Base material B8 | Base material B9 | Base material B10 | Base material B11 |
|---|---|---|---|---|---|---|---|---|---|---|---|---|---|
| Raw material composition | $PE_1$ | wt% | 100 | 70 | 93 | 70 | 0 | 0 | 93 | 0 | 0 | 0 | 30 |
| | $PE_2$ | wt% | 0 | 30 | 0 | 23 | 0 | 0 | 0 | 0 | 70 | 0 | 70 |
| | $PE_3$ | wt% | 0 | 0 | 0 | 0 | 100 | 0 | 0 | 0 | 0 | 0 | 0 |
| | $PE_4$ | wt% | 0 | 0 | 0 | 0 | 0 | 93 | 0 | 93 | 30 | 0 | 0 |
| | $PE_5$ | wt% | 0 | 0 | 0 | 0 | 0 | 0 | 0 | 0 | 0 | 30 | 0 |
| | $PE_6$ | wt% | 0 | 0 | 0 | 0 | 0 | 0 | 0 | 0 | 0 | 70 | 0 |
| | Avg Mv of PE | $\times 10^4$ | 90 | 82.5 | 90 | 55 | 80 | 70 | 90 | 70 | 35 | 49 | 41 |
| | PP | wt% | 0 | 30 | 7 | 7 | 0 | 7 | 7 | 7 | 0 | 0 | 0 |
| Extru | Plasticizer | wt% | 74 | 75 | 76 | 71 | 75 | 72 | 76 | 74 | 68 | 71 | 70 |
| | PC | wt% | 26 | 25 | 24 | 29 | 25 | 28 | 24 | 26 | 32 | 29 | 30 |
| Biaxial stretching | Preheating temperature | °C | 129 | 128 | 122 | 124 | 129 | 124.5 | 122 | 122 | 118.5 | 126 | 120.7 |
| | Preheating coefficient | °C×m | 197370 | 195840 | 186660 | 169703 | 197370 | 231895 | 186660 | 169575 | 206836 | 206182 | 210676 |
| | Longitudinal stretching ratio | -fold | 7 | 7 | 7 | 7 | 7 | 7 | 7 | 7 | 7 | 7 | 7 |
| | Longitudinal stretching temperature | °C | 129.0 | 126.0 | 122.0 | 123.8 | 128.5 | 124.5 | 122.0 | 122.0 | 123.2 | 117.5 | 123.8 |
| | Transverse stretching ratio | -fold | 6.4 | 6.4 | 6.4 | 6.4 | 6.4 | 6.4 | 6.4 | 6.4 | 6.38 | 6.4 | 6.38 |
| | Transverse stretching temperature | °C | 129.0 | 126.0 | 122.0 | 123.8 | 128.5 | 124.5 | 122.0 | 122.0 | 123.2 | 117.5 | 123.8 |
| | Stretching coefficient | °C×m | 34017 | 33226 | 32171 | 30154 | 33885 | 38000 | 32171 | 21864 | 36109 | 34438 | 36285 |
| | Preheating coefficient /Stretching coefficient | - | 5.80 | 5.89 | 5.80 | 5.63 | 5.82 | 6.10 | 5.80 | 7.76 | 5.73 | 5.99 | 5.81 |
| | Stretching method | - | Simultaneous biaxial | Simultaneous biaxial | Simultaneous biaxial | Simultaneous biaxial | Simultaneous biaxial | Simultaneous biaxial | Simultaneous biaxial | Simultaneous biaxial | Simultaneous biaxial | Simultaneous biaxial | Simultaneous biaxial |
| Heat setting | Transverse stretching temperature | °C | 130 | 125 | 125 | 127 | 115 | 115 | 125 | 130 | 133 | 128 | 131 |
| | Heat setting ratio | -fold | 1.50 | 1.65 | 1.45 | 1.58 | 1.55 | 1.5 | 1.5 | 1.6 | 1.71 | 1.72 | 1.72 |
| | Heat setting temperature | °C | 137 | 135 | 124 | 129 | 137 | 136 | 132 | 133 | 132 | 131 | 135 |
| Total stretching ratio | | -fold | 67 | 74 | 65 | 71 | 69 | 67 | 67 | 72 | 76 | 77 | 77 |

[Table 2]

| Table 2. Base Material | | | | | | | | | | | | | |
|---|---|---|---|---|---|---|---|---|---|---|---|---|---|
| | | Base material B1 | Base material B1 obtained from Ex 28 | Base material B2 | Base material B3 | Base material B4 | Base material B5 | Base material B6 | Base material B7 | Base material B8 | Base material B9 | Base material B10 | Base material B11 |
| Crystal long-period | nm | 48.3 | 48.3 | 37.0 | 30.5 | 35.9 | 46.5 | 38.8 | 35.7 | 38.0 | 32.9 | 33.4 | 34.7 |
| Crystallite size PE(110) MDND | nm | 22.2 | 22.2 | 21.6 | 17.7 | 29.7 | 22.6 | 24.0 | 18.1 | 24.0 | 19.9 | 20.1 | 19.4 |
| Basis weight | $g/m^2$ | 6.4 | 6.5 | 5.6 | 5.3 | 5.1 | 5.7 | 4.6 | 5.7 | 4.5 | 6.3 | 6.0 | 6.3 |
| Membrane thickness | μm | 14.2 | 14.4 | 12.0 | 11.9 | 10.2 | 10.2 | 9.1 | 12.2 | 8.9 | 11.0 | 10.8 | 10.5 |
| Air permeability before compression | $s/100cm^3$ | 88 | 90 | 75 | 108 | 86 | 106 | 81 | 119 | 85 | 160 | 175 | 185 |
| Porosity before compression | % | 52.3 | 52.5 | 51.0 | 53.5 | 47.3 | 41.3 | 46.8 | 50.9 | 46.0 | 40.5 | 41.5 | 37.0 |
| Post-compression porosity | % | 36.9 | 37.1 | 33.9 | 30.5 | 28.3 | 31.2 | 31.8 | 32.3 | 31.1 | 30.4 | 31.8 | 30.2 |
| Puncture strength | gf | 531 | 535 | 438 | 567 | 257 | 425 | 273 | 580 | 250 | 505 | 510 | 525 |
| Puncture strength (basis weight converted) | $gf/(g/m^2)$ | 82 | 82 | 79 | 108 | 50 | 75 | 59 | 102 | 56 | 80 | 85 | 83 |

(continued)

Table 2. Base Material

| | | Base material B1 | Base material B1 obtained from Ex 28 | Base material B2 | Base material B3 | Base material B4 | Base material B5 | Base material B6 | Base material B7 | Base material B8 | Base material B9 | Base material B10 | Base material B11 |
|---|---|---|---|---|---|---|---|---|---|---|---|---|---|
| Pore diameter (half dry) | nm | 52 | 52 | 51 | 35 | 58 | 49 | 56 | 37 | 56 | 46 | 41 | 42 |
| Voltage resistance per basis weight | kv/(g/m$^2$) | 0.18 | 0.19 | 0.22 | 0.26 | 0.17 | 0.17 | 0.19 | 0.26 | 0.19 | 0.21 | 0.22 | 0.23 |
| Smoothness | s/10cm$^3$ | 57945 | 57950 | 75590 | 152195 | 77755 | 42975 | 74285 | 133320 | 86500 | 199640 | 105370 | 129900 |
| Fuse temp | °C | 148 | 148 | 143 | 149 | 139 | 140 | 142 | 150 | 141 | 142 | 143 | 142 |
| Methylene chloride soluble content | wt% | 0.5 | 0.5 | 0.7 | 0.8 | 0.3 | 0.5 | 0.8 | 0.8 | 0.7 | 0.6 | 0.6 | 0.6 |

<<Preparation Examples of Aqueous Dispersions (Particulate Polymer)>>

<Preparation of aqueous dispersion A1>

70.4 parts by weight of ion-exchanged water, 0.5 parts by weight of "Aqualon KH1025" (registered trademark, 25% aqueous solution manufactured by DKS Co., Ltd., indicated as "KH1025" in the table; the same applies below), and 0.5 parts by weight of "ADEKA REASOAP SR1025" (registered trademark, manufactured by ADEKA Corporation, 25% aqueous solution by weight, indicated as "SR1025" in the table; the same applies below) were charged into a reaction vessel equipped with a stirrer, reflux condenser, dropping tank, and thermometer, and the temperature inside the reaction vessel was raised to 95°C. Thereafter, while maintaining the temperature inside the vessel at 95°C, 7.5 parts by weight of ammonium persulfate (2% aqueous solution by weight) (indicated as "APS (aq)" in the table; the same applies below) was added.

A mixture of 71.5 parts by weight of methyl methacrylate (MMA), 18.9 parts by weight of n-butyl acrylate (BA), 2 parts by weight of 2-ethylhexyl acrylate (EHA), 0.1 parts by weight of methacrylic acid (MAA), 0.1 parts by weight of acrylic acid (AA), 2 parts by weight of 2-hydroxyethyl methacrylate (HEMA), 5 parts by weight of acrylamide (AM), 0.4 parts by weight of glycidyl methacrylate (GMA), 0.4 parts by weight of trimethylolpropane triacrylate (A-TMPT) (manufactured by Shin-Nakamura Chemical Co., Ltd.), 0.3 parts by weight of γ-methacryloxypropyltrimethoxysilane (AcSi), 3.0 parts by weight of KH1025, 3.0 parts by weight of SR1025, 0.05 parts by weight of sodium p-styrenesulfonate (NaSS), 7.5 parts by weight of ammonium persulfate (2 wt% aqueous solution), and 52 parts by weight of ion-exchanged water was mixed for 5 minutes using a homomixer to prepare an emulsion. The resulting emulsion was dripped from the dropping tank into the reaction vessel. The dripping started 5 minutes after the aqueous ammonium persulfate solution was added to the reaction vessel, and the entire amount of the emulsion was dripped over 150 minutes. During the dripping of the emulsion, the temperature inside the vessel was maintained at 80°C. At this time, the stirrer inserted in the reaction vessel was constantly stirred with a magnetic stirrer.

After the dripping of the emulsion, the temperature inside the reaction vessel was maintained at 80°C for 90 minutes, and then cooled to room temperature to obtain an emulsion. The obtained emulsion was adjusted to pH = 9.0 using an aqueous ammonium hydroxide solution (25 wt% aqueous solution) to obtain an acrylic copolymer latex having a concentration of 40 parts by weight (aqueous dispersion A1). The glass transition temperature (Tg) and volume average particle size (D50) of the thermoplastic polymer contained in the obtained aqueous dispersion A1 were evaluated by the method described above. The obtained results are shown in Table 3.

<Preparation of Aqueous Dispersions A2, A3, and A4>

Aqueous dispersions A2 to A4 were obtained and their physical properties were evaluated in the same manner as aqueous dispersion A1, except that the composition of the emulsion was changed as shown in Tables 3 and 4. The obtained results are shown in Tables 3 and 4.

<Preparation of Aqueous Dispersion A1-1>

A part of the aqueous dispersion A1 was taken and used as a seed polymer to carry out multi-stage polymerization to synthesize aqueous dispersion A1-1. Specifically, a mixture of 20 parts by weight of aqueous dispersion A1 converted into solid content and 70.4 parts by weight of ion-exchanged water was first charged into a reaction vessel equipped with a stirrer, a reflux condenser, a dropping tank, and a thermometer, and the temperature inside the reaction vessel was raised to 80°C. Thereafter, while maintaining the temperature inside the vessel at 80°C, 7.5 parts by weight of ammonium persulfate (aqueous solution of 2 wt%) was added. This was the initial charge.

71.5 parts by weight of methyl methacrylate (MMA), 18.9 parts by weight of n-butyl acrylate (BA), 2 parts by weight of 2-ethylhexyl acrylate (EHA), 0.1 parts by weight of methacrylic acid (MAA), 0.1 parts by weight of acrylic acid (AA), 2 parts by weight of 2-hydroxyethyl methacrylate (HEMA), 5 parts by weight of acrylamide (AM), 0.4 parts by weight of glycidyl methacrylate (GMA), 0.7 parts by weight of trimethylolpropane triacrylate (A-TMPT), 0.3 parts by weight of γ-methacryloxypropyltrimethoxysilane (AcSi), 3 parts by weight of KH1025, 3 parts by weight of SR1025, 0.05 parts by weight of sodium p-styrenesulfonate (NaSS), 7.5 parts of ammonium persulfate (2 wt% aqueous solution), and 52 parts by weight of ion-exchanged water was mixed for 5 minutes using a homomixer to prepare an emulsion. The resulting emulsion was dripped from the dropping tank into the reaction vessel. The dripping started 5 minutes after the aqueous ammonium persulfate solution was added to the reaction vessel, and the entire amount of the emulsion was dripped over 150 minutes. During the dripping of the emulsion, the temperature inside the vessel was maintained at 80°C. At this time, the stirrer inserted in the reaction vessel was constantly stirred with a magnetic stirrer.

After the dripping of the emulsion was completed, the temperature inside the reaction vessel was maintained at 80°C while stirring for 90 minutes, and then cooled to room temperature to obtain an emulsion. The obtained emulsion was

adjusted to pH = 9.0 using an aqueous ammonium hydroxide solution (25 wt% aqueous solution) to obtain an acrylic copolymer latex having a concentration of 40 parts by weight (aqueous dispersion A1-1). The obtained aqueous dispersion A1-1 was evaluated by the method described above. The obtained results are shown in Table 3.

<Preparation of Aqueous Dispersions A1-2 to A1-4>

Copolymer latexes (aqueous dispersions A1-2 to A1-4) were obtained by adjusting the number of multi-stage polymerizations. The obtained aqueous dispersions were evaluated by the methods described above. The obtained results are shown in Table 3.

<Preparation of Aqueous Dispersions A2-1, A3-1 to A3-4, and A4-1>

Copolymer latexes (aqueous dispersions A2-1, A3-1 to A3-4, and A4-1) were obtained in the same manner as aqueous dispersion A1-1, except that the compositions of the seed polymer, monomers, and other raw materials, the number of multi-stage polymerizations, and the polymerization conditions were changed as shown in Table 2. The obtained aqueous dispersions were each evaluated by the methods described above. The obtained results are shown in Tables 3 and 4.

<Aqueous Dispersions A5 and A6>

SB latex (Tg: 33°C, particle size: 300 nm, toluene insoluble content: 95%, degree of swelling: 1.4-fold) was used as aqueous dispersion A5. PVdF-HFP (product name LBG, Arkema) having a primary particle size of 200 nm and in which the primary particles aggregate to form secondary particles of 2,030 nm was used as aqueous dispersion A6.

[Table 3]

Table 3. Aqueous Dispersion (Particular Polymer)

| | Type | Raw material name | Active ingredient ratio | Unit | Aqueous dispersion | | | | | | |
|---|---|---|---|---|---|---|---|---|---|---|---|
| | | | | | A1 | A1-1 | A1-2 | A1-3 | A1-4 | A2 | A2-1 |
| Initial charge | Seed polymer type | | - | - | - | A1 | A1 | A1 | A1 | - | A2 |
| | Seed polymer diameter | | - | nm | - | 132 | 132 | 132 | 132 | - | 122 |
| | Seed polymer amount | | 100 wt% | Parts by weight | - | 20 | 20 | 20 | 20 | - | 20 |
| | Emulsifier | KH1025 | 25 wt% | Parts by weight | 0.5 | - | - | - | - | 0.5 | - |
| | | SR1025 | 25 wt% | Parts by weight | 0.5 | - | - | - | - | 0.5 | - |
| | Ion-exchanged water | | - | Parts by weight | 70.4 | 70.4 | 70.4 | 70.4 | 70.4 | 70.4 | 70.4 |
| | Initiator | APS(aq) | 2 wt% | Parts by weight | 7.5 | 7.5 | 7.5 | 7.5 | 7.5 | 7.5 | 7.5 |
| Emulsion | Acid monomer | MAA | 100 wt% | Parts by weight | 0.1 | 0.1 | 0.1 | 0.1 | 0.1 | 1.0 | 1.0 |
| | | AA | 100 wt% | Parts by weight | 0.1 | 0.1 | 0.1 | 0.1 | 0.1 | 1.0 | 1.0 |
| | (Meth)acrylic acid ester | MMA | 100 wt% | Parts by weight | 71.5 | 71.5 | 71.5 | 71.5 | 71.5 | 51.0 | 51.0 |
| | | BA | 100 wt% | Parts by weight | 18.9 | 18.9 | 18.9 | 18.9 | 18.9 | 37.0 | 37.0 |
| | | BMA | 100 wt% | Parts by weight | 0 | 0 | 0 | 0 | 0 | 0 | 0 |
| | | EHA | 100 wt% | Parts by weight | 2 | 2 | 2 | 2 | 2 | 0 | 0 |
| | | CHMA | 100 wt% | Parts by weight | 0 | 0 | 0 | 0 | 0 | 0 | 0 |
| | Aromatic vinyl monomer | St | 100 wt% | Parts by weight | 0 | 0 | 0 | 0 | 0 | 0 | 0 |
| | Cyano group-containing monomer | AN | 100 wt% | Parts by weight | 0 | 0 | 0 | 0 | 0 | 10 | 10 |
| | Functional group-containing monomer | HEMA | 100 wt% | Parts by weight | 2 | 2 | 2 | 2 | 2 | 0 | 0 |
| | | AM | 100 wt% | Parts by weight | 5 | 5 | 5 | 5 | 5 | 0 | 0 |
| | Crosslinkable monomer | GMA | 100 wt% | Parts by weight | 0.4 | 0.4 | 0.4 | 0.4 | 0.4 | 0 | 0 |
| | | A-TMPT | 100 wt% | Parts by weight | 0.4 | 0.4 | 0.4 | 0.4 | 0.4 | 1.0 | 1.0 |
| | | AcSi | 100 wt% | Parts by weight | 0.3 | 0.3 | 0.3 | 0.3 | 0.3 | 0.5 | 0.5 |

| | | | | | | | | | | | |
|---|---|---|---|---|---|---|---|---|---|---|---|
| | Emulsifier | KH1025 | 25 wt% | Parts by weight | 3.0 | 3.0 | 3.0 | 3.0 | 3.0 | 2.0 | 2.0 |
| | | SR1025 | 25 wt% | Parts by weight | 3.0 | 3.0 | 3.0 | 3.0 | 3.0 | 0 | 0 |
| | | NaSS | 100 wt% | Parts by weight | 0.05 | 0.05 | 0.05 | 0.05 | 0.05 | 0 | 0 |
| | Initiator | APS(aq) | 2 wt% | Parts by weight | 7.5 | 7.5 | 7.5 | 7.5 | 7.5 | 7.5 | 7.5 |
| | Ion-exchanged water | | - | Parts by weight | 52 | 52 | 52 | 52 | 52 | 52 | 52 |
| Physical properties | Glass transition temp (Tg) | | - | °C | 55 | 55 | 55 | 55 | 55 | 24.8 | 24.8 |
| | Volume avg particle size (D50) | | - | nm | 132 | 700 | 1220 | 4220 | 9530 | 122 | 1350 |
| | Particle size distribution | | - | - | 1.10 | 1.08 | 1.09 | 1.15 | 1.30 | 1.13 | 1.06 |
| Shape of polymer after covering layer formation | | | | - | Particulate | Particulate | Particulate | Particulate | Particulate | Film-like | Film-like |
| Polymer particle size after covering layer formation | | | - | nm | - | 710 | 1250 | 4230 | 9550 | - | 1360 |

[Table 4]

Table 4. Aqueous Dispersion (Particulate Polymer)

| | Type | Raw material name | Active ingredient ratio | Unit | Aqueous dispersion | | | | | | | | |
|---|---|---|---|---|---|---|---|---|---|---|---|---|---|
| | | | | | A3 | A3-1 | A3-2 | A3-3 | A3-4 | A4 | A4-1 | A5 | A6 |
| Initial charge | Seed polymer type | | - | - | - | A3 | A3 | A3 | A3 | - | A4 | SB Latex | PVdF-HFP |
| | Seed polymer diameter | | - | nm | - | 131 | 131 | 131 | 131 | - | 125 | | |
| | Seed polymer amount | | 100 wt% | Parts by weight | - | 20 | 20 | 20 | 20 | - | 20 | | |
| | Emulsifier | KH1025 | 25 wt% | Parts by weight | 0.5 | - | - | - | - | 0.5 | - | | |
| | | SR1025 | 25 wt% | Parts by weight | 0.5 | - | - | - | - | 0.5 | - | | |
| | Ion-exchanged water | | - | Parts by weight | 70.4 | 70.4 | 70.4 | 70.4 | 70.4 | 70.4 | 70.4 | | |
| | Initiator | APS(aq) | 2 wt% | Parts by weight | 7.5 | 7.5 | 7.5 | 7.5 | 7.5 | 7.5 | 7.5 | | |
| Emulsion | Acid monomer | MAA | 100 wt% | Parts by weight | 1.0 | 1.0 | 1.0 | 1.0 | 1.0 | 0.1 | 0.1 | | |
| | | AA | 100 wt% | Parts by weight | 1.0 | 1.0 | 1.0 | 1.0 | 1.0 | 0.1 | 0.1 | | |
| | (Meth)acrylic acid ester | MMA | 100 wt% | Parts by weight | 20.0 | 20.0 | 20.0 | 20.0 | 20.0 | 71.5 | 71.5 | | |
| | | BA | 100 wt% | Parts by weight | 0 | 0 | 0 | 0 | 0 | 18.9 | 18.9 | | |
| | | BMA | 100 wt% | Parts by weight | 0 | 0 | 0 | 0 | 0 | 0 | 0 | | |
| | | EHA | 100 wt% | Parts by weight | 0 | 0 | 0 | 0 | 0 | 2 | 2 | | |
| | | CHMA | 100 wt% | Parts by weight | 0 | 0 | 0 | 0 | 0 | 0 | 0 | | |
| | Aromatic vinyl monomer | St | 100 wt% | Parts by weight | 78 | 78 | 78 | 78 | 78 | 0 | 0 | | |
| | Cyano group-containing monomer | AN | 100 wt% | Parts by weight | 0 | 0 | 0 | 0 | 0 | 0 | 0 | | |
| | Functional group-containing monomer | HEMA | 100 wt% | Parts by weight | 0 | 0 | 0 | 0 | 0 | 2 | 2 | | |
| | | AM | 100 wt% | Parts by weight | 0 | 0 | 0 | 0 | 0 | 5 | 5 | | |

| | | | | | | | | | | | | | |
|---|---|---|---|---|---|---|---|---|---|---|---|---|---|
| | Crosslinkable monomer | GMA | 100 wt% | Parts by weight | 0 | 0 | 0 | 0 | 0 | 0 | 0 | | |
| | | A-TMPT | 100 wt% | Parts by weight | 1.0 | 1.0 | 1.0 | 1.0 | 1.0 | 0 | 0 | | |
| | | AcSi | 100 wt% | Parts by weight | 0.5 | 0.5 | 0.5 | 0.5 | 0.5 | 0 | 0 | | |
| | Emulsifier | KH1025 | 25 wt% | Parts by weight | 2.0 | 2.0 | 2.0 | 2.0 | 2.0 | 3.0 | 3.0 | | |
| | | SR1025 | 25 wt% | Parts by weight | 0 | 0 | 0 | 0 | 0 | 3.0 | 3.0 | | |
| | | NaSS | 100 wt% | Parts by weight | 0 | 0 | 0 | 0 | 0 | 0.05 | 0.05 | | |
| | Initiator | APS(aq) | 2 wt% | Parts by weight | 7.5 | 7.5 | 7.5 | 7.5 | 7.5 | 7.5 | 7.5 | | |
| | Ion-exchanged water | | - | Parts by weight | 52 | 52 | 52 | 52 | 52 | 52 | 52 | | |
| Physical properties | Glass transition temp (Tg) | | - | °C | 95 | 95 | 95 | 95 | 95 | 55 | 55 | | |
| | Volume avg particle size (D50) | | - | nm | 131 | 2020 | 3500 | 5570 | 9960 | 125 | 700 | | |
| | Particle size distribution | | - | - | 1.12 | 1.08 | 1.04 | 1.04 | 1.35 | 1.08 | 1.55 | 1.66 | - |
| Shape of polymer after covering layer formation | | | | - | Particulate | Particulate | Particulate | Particulate | Particulate | Particulate | Particulate | Particulate | Particulate |
| Polymer particle size after covering layer formation | | | - | nm | - | 2020 | 3500 | 5570 | 9960 | - | 710 | 2030 | 200/2030 |

A6: primary particle size 200 nm, secondary particle size 2030 nm

·Emulsifier

KH1025: "Aqualon KH1025"™, manufactured by DKS Co., Ltd., 25% by weight aqueous solution
SR1025: "ADEKA REASOAP SR1025" ™, manufactured by ADEKA Corporation, 25% by weight aqueous solution
NaSS: Sodium p-styrenesulfonate

·Initiator

APS(aq): Ammonium persulfate (2% by weight aqueous solution)

·Monomer

MAA: methacrylic acid
AA: acrylic acid
MMA: methyl methacrylate
BA: n-butyl acrylate
BMA: n-butyl methacrylate
EHA: 2-ethylhexyl acrylate
CHMA: cyclohexyl methacrylate
St: styrene
AN: acrylonitrile
HEMA: 2-hydroxyethyl methacrylate
AM: Acrylamide
GMA: glycidyl methacrylate
A-TMPT: Trimethylolpropane triacrylate
AcSi: γ-methacryloxypropyltrimethoxysilane

«Separator Production Examples»

<Example 1>

100 parts by weight of water was mixed with 0.3 parts by weight of an aqueous solution of ammonium polycarboxylate (SN Dispersant 5468 manufactured by San Nopco Limited) and 100 parts by weight of aluminum hydroxide oxide (Boehmite) as an inorganic filler, and the mixture was processed with a bead mill to obtain a pre-application dispersion. In the pre-application dispersion, 1 part by weight of carboxymethylcellulose (CMC) as a water-soluble polymer component was mixed with 100 parts by weight of the inorganic filler, and then 4 parts by weight as a solid

content of an acrylic latex suspension (solid concentration 40 wt%, volume average particle size 150 nm, glass transition point -40°C) as a resin binder was mixed, and 20 parts by weight of aqueous dispersion A1-3 (particulate polymer) was mixed and uniformly dispersed to prepare a coating liquid (solid content 40 parts by weight) containing a thermoplastic polymer.

Both sides of the polyolefin microporous membrane B1 were surface-treated by corona discharge treatment. The coating liquid was then applied to one side (side (A)) of the polyolefin microporous membrane B1 using a gravure coater. The shear rate by the gravure coater was 80,000 $sec^{-1}$. At this time, the coverage area ratio of the covering layer to the polyolefin microporous membrane was 100%. The applied coating liquid was then dried at 60°C to remove the water. The coating liquid was similarly applied to the side (side (B)) opposite to the side (A) of the polyolefin microporous membrane B1, and dried again in the same manner as described above. In this manner, a separator in which a covering layer was formed on both sides of the polyolefin microporous membrane B1 was obtained.

<Examples 2 to 27>

The separators of Examples 2 to 27 were obtained in the same manner as Example 1, except that the polyolefin microporous membrane, the composition of the coating liquid, and the coating conditions were changed as shown in Tables 5 to 11. In the separator of Comparative Example 5, the particulate polymer was dispersed in the form of secondary particles. Alumina "AKP3000" manufactured by Sumitomo Chemical Co., Ltd. was used.

<Example 28>

The separator of Example 28 was obtained in the same manner as in Example 1. The coating layer of the obtained separator was peeled off by the following method to prepare a base material sample for measurement. First, the cut separator was placed on a mount and the four sides of the separator were fixed with adhesive tape (packaging OPP tape). Adhesive tape was similarly applied to the part not covered with tape. After applying pressure from above the tape with a roller, the tape was peeled off to remove the coating layer attached to the tape. The opposite side was then treated in the same manner to obtain a base material sample without a coating layer. The physical properties of the base material were measured using this, and the results are shown in Table 2.

<Comparative Examples 1 to 7>

The separators of Comparative Examples 1 to 7 were obtained in the same manner as in Example 1, except that the polyolefin microporous membrane, the composition of the coating liquid, the coating conditions, etc., were changed as shown in Tables 5 to 10.

[Table 5]

Table 5. Separator

| | | Ex 1 | Ex 2 | Ex 3 | Ex 4 | Ex 5 | Ex 6 | Ex 7 | Comp Ex 1 |
|---|---|---|---|---|---|---|---|---|---|
| Base material | | Base material B1 | Base material B2 | Base material B3 | Base material B5 | Base material B6 | Base material B7 | Base material B8 | Base material B4 |
| Methylene chloride soluble content (%) of base material | | 0.5 | 0.5 | 0.5 | 0.5 | 0.5 | 0.5 | 0.5 | 0.5 |
| Weight ratio of each component (parts by weight) | Inorganic filler | 100 | 100 | 100 | 100 | 100 | 100 | 100 | 100 |
| | Particulate polymer | 7 | 7 | 7 | 7 | 7 | 7 | 7 | 7 |
| | Resin binder | 4 | 4 | 4 | 4 | 4 | 4 | 4 | 4 |
| | Water-soluble polymer component | 1.0 | 1.0 | 1.0 | 1.0 | 1.0 | 1.0 | 1.0 | 1.0 |
| Inorganic components | Type | Boehmite | Boehmite | Boehmite | Boehmite | Boehmite | Boehmite | Boehmite | Boehmite |
| | Average particle size (nm) | 200 | 200 | 200 | 200 | 200 | 200 | 200 | 200 |
| | Shape | Block-like | Block-like | Block-like | Block-like | Block-like | Block-like | Block-like | Block-like |
| | Aspect ratio | 1.7 | 1.7 | 1.7 | 1.7 | 1.7 | 1.7 | 1.7 | 1.7 |
| | Particle size distribution CV | 0.50 | 0.50 | 0.50 | 0.50 | 0.50 | 0.50 | 0.50 | 0.50 |
| Aqueous dispersion components | Type | Al-3 | Al-3 | Al-3 | Al-3 | Al-3 | Al-3 | Al-3 | Al-3 |
| | Average particle size (nm) | 4230 | 4230 | 4230 | 4230 | 4230 | 4230 | 4230 | 4230 |
| Resin binder | Volume average particle size | 150 | 150 | 150 | 150 | 150 | 150 | 150 | 150 |
| Water-soluble polymer component | Type | CMC | CMC | CMC | CMC | CMC | CMC | CMC | CMC |
| Base material thickness (μm) | | 14.2 | 12.0 | 11.9 | 10.2 | 9.1 | 12.2 | 8.9 | 10.2 |
| Maximum distance to particulate polymer contour: L3 (μm) | | 5.5 | 5.6 | 5.3 | 5.5 | 5.4 | 5.6 | 5.5 | 5.5 |
| Covering layer thickness: L2 (μm) | | 4.4 | 4.2 | 4.3 | 4.4 | 4.3 | 4.3 | 4.4 | 4.1 |

(continued)

Table 5. Separator

| | Ex 1 | Ex 2 | Ex 3 | Ex 4 | Ex 5 | Ex 6 | Ex 7 | Comp Ex 1 |
|---|---|---|---|---|---|---|---|---|
| Thickness of inorganic filler portion of covering layer: L1 (μm) | 3.0 | 2.9 | 3.2 | 3.2 | 3.0 | 3.0 | 3.1 | 3.1 |
| Particulate polymer protrusion amount: L3-L1 (μm) | 2.5 | 2.7 | 2.1 | 2.3 | 2.4 | 2.6 | 2.4 | 2.4 |
| Protrusion amount ratio (L3-L1)/L1 | 0.8 | 0.9 | 0.7 | 0.7 | 0.8 | 0.9 | 0.8 | 0.8 |
| Particulate polymer particle size (μm)/ covering layer thickness: L2 (μm) | 1.4 | 1.5 | 1.3 | 1.3 | 1.4 | 1.4 | 1.4 | 1.4 |
| Separator total thickness (μm) | 25.2 | 23.2 | 22.5 | 21.2 | 19.9 | 23.4 | 19.9 | 21.2 |
| Protruding particle polymer particle size (μm)/ inorganic filler particle size (μm) | 21.15 | 21.15 | 21.15 | 21.15 | 21.15 | 21.15 | 21.15 | 21.15 |
| Average number of adjacent particulate polymers | 0 | 0 | 0 | 0 | 0 | 0 | 0 | 0 |
| Average number of particulate polymers within a radius of 10 μm | 1 | 1 | 1 | 1 | 1 | 1 | 1 | 1 |
| Metal cations (ppm) | 40 | 40 | 40 | 40 | 40 | 40 | 40 | 40 |
| 180° peel strength (N/m) | 325 | 330 | 298 | 290 | 310 | 305 | 280 | 278 |
| Gradient ratio of covering layer L2/L 1 | 1.47 | 1.46 | 1.34 | 1.38 | 1.43 | 1.43 | 1.42 | 1.32 |
| Coverage ratio of protruding portion (L2-L1)/(L3-L1) | 0.56 | 0.49 | 0.52 | 0.52 | 0.54 | 0.50 | 0.54 | 0.42 |
| Ratio of protruding particulate polymers (%) | 85 | 78 | 88 | 85 | 86 | 89 | 81 | 84 |
| Contact ratio between particulate polymer and base material (%) | 87 | 77 | 88 | 75 | 76 | 88 | 80 | 85 |
| 130°C thermal shrinkage in TD (%) | <1.0 | <1.0 | <1.0 | <1.0 | <1.0 | <1.0 | <1.0 | <1.0 |
| 130°C thermal shrinkage in MD (%) | <1.0 | <1.0 | <1.0 | <1.0 | <1.0 | <1.0 | <1.0 | <1.0 |
| 150°C thermal shrinkage in TD (%) | <1.0 | <1.0 | <1.0 | <1.0 | <1.0 | <1.0 | <1.0 | <1.0 |
| 150°C thermal shrinkage in MD (%) | <1.0 | <1.0 | <1.0 | <1.0 | <1.0 | <1.0 | <1.0 | <1.0 |
| Adhesive strength with electrodes before electrolyte solution injection (N/m) | A (5.0) | B (4.5) | B (4.0) | B (4.1) | B (4.3) | B (5.0) | B (4.5) | B (4.0) |

(continued)

Table 5. Separator

| | Ex 1 | Ex 2 | Ex 3 | Ex 4 | Ex 5 | Ex 6 | Ex 7 | Comp Ex 1 |
|---|---|---|---|---|---|---|---|---|
| Adhesive strength with electrodes after electrolyte solution injection (N/m) | A (6.0) | A (5.5) | A (5.0) | A (5.0) | A (6.2) | A (6.0) | A (6.1) | B (4.0) |
| Rate characteristics (%) | A (95) | A (96) | A (97) | A (87) | A (88) | A (92) | A (87) | C (67) |
| Powder flaking (N/m) | A (65) | A (60) | A (63) | A (60) | A (61) | A (62) | A (60) | B (45) |
| Cycle characteristics (%) | A (98) | A (98) | A (92) | A (86) | A (85) | A (93) | A (86) | C (70) |
| Distortion of electrode separator wound body (mm) | Absent (0.0) | Absent (0.0) | Absent (0.0) | Absent (0.0) | Absent (0.0) | Absent (0.0) | Absent (0.0) | Present (0.5) |

[Table 6]

| Table 6. Separator | | | | | | |
|---|---|---|---|---|---|---|
| | | Ex 1 | Ex 8 | Comp Ex 2 | Comp Ex 3 | Comp Ex 4 |
| Base material | | Base material B1 | Base material B1 | Base material B1 | Base material B1 | Base material B1 |
| Methylene chloride soluble content (%) of base material | | 0.5 | 0.5 | 0.5 | 0.5 | 0.5 |
| Weight ratio of each component | Inorganic filler (parts by weight) | 100 | 100 | 100 | 100 | 100 |
| | Particulate polymer (parts by weight) | 7 | 20 | 20 | 20 | 20 |
| | Resin binder (parts by weight) | 4 | 4 | 4 | 4 | 4 |
| | Water-soluble polymer component (parts by weight) | 1.0 | 1.0 | 1.0 | 1.0 | 1.0 |
| Inorganic components | Type | Boehmite | Boehmite | Boehmite | Boehmite | Boehmite |
| | Average particle size (nm) | 200 | 200 | 200 | 200 | 200 |
| | Shape | Block-like | Block-like | Block-like | Block-like | Block-like |
| | Aspect ratio | 1.7 | 1.8 | 1.8 | 1.8 | 1.8 |
| | Particle size distribution CV | 0.50 | 0.45 | 0.45 | 0.45 | 0.45 |
| Aqueous dispersion components | Type | Al-3 | Al-2 | A1-1 | A1-1 | A1-1 |
| | Average particle size (nm) | 4230 | 1250 | 710 | 710 | 710 |
| Resin binder | Volume average particle size (D50) (nm) | 150 | 150 | 150 | 150 | 150 |
| Water-soluble polymer component | Type | CMC | CMC | CMC | CMC | CMC |
| Base material thickness (μm) | | 14.2 | 14.2 | 14.2 | 14.2 | 14.2 |
| Maximum distance to particulate polymer contour: L3 (μm) | | 5.5 | 1.5 | 1.20 | 1.21 | 1.20 |
| Covering layer thickness: L2 (μm) | | 4.4 | 1.4 | 1.15 | 1.19 | 1.20 |
| Thickness of inorganic filler portion of covering layer: L1 (μm) | | 3.0 | 1.1 | 1.10 | 1.19 | 1.20 |
| Particulate polymer protrusion amount: L3-L1 (μm) | | 2.5 | 0.4 | 0.10 | 0.02 | 0.00 |
| Protrusion amount ratio (L3-L1)/L1 | | 0.8 | 0.4 | 0.09 | 0.02 | 0.00 |
| Particulate polymer particle size (μm)/ covering layer thickness: L2 (μm) | | 1.4 | 1.1 | 0.6 | 0.6 | 0.6 |
| Separator total thickness (μm) | | 25.2 | 17.2 | 16.6 | 16.6 | 16.6 |

(continued)

| Table 6. Separator | | | | | |
|---|---|---|---|---|---|
| | Ex 1 | Ex 8 | Comp Ex 2 | Comp Ex 3 | Comp Ex 4 |
| Protruding particle polymer particle size (μm)/ inorganic filler particle size (μm) | 21.15 | 6.25 | 3.55 | 3.55 | |
| Average number of adjacent particulate polymers | 0 | 0 | 0 | 0 | 0 |
| Average number of particulate polymers within a radius of 10 μm | 1 | 1 | 1 | 1 | 1 |
| Metal cations (ppm) | 40 | 40 | 40 | 40 | 40 |
| 180° peel strength (N/m) | 325 | 300 | 125 | 120 | 25 |
| Gradient ratio of covering layer L2/L1 | 1.47 | 1.27 | 1.05 | 1.00 | 1.00 |
| Coverage ratio of protruding portion (L2-L1)/(L3-L1) | 0.56 | 0.75 | 0.50 | 0.00 | |
| Ratio of protruding particulate polymers (%) | 85 | 57 | 6 | 12 | 0 |
| Contact ratio between particulate polymer and base material (%) | 87 | 55 | 5 | 15 | 0 |
| 130°C thermal shrinkage in TD (%) | <1.0 | <1.0 | 10.5 | 12.0 | 3.0 |
| 130°C thermal shrinkage in MD (%) | <1.0 | <1.0 | 13.0 | 14.5 | 4.0 |
| 150°C thermal shrinkage in TD (%) | <1.0 | <2.2 | 50.0< | 50.0< | 50.0< |
| 150°C thermal shrinkage in MD (%) | <1.0 | <3.0 | 50.0< | 50.0< | 50.0< |
| Adhesive strength with electrodes before electrolyte solution injection (N/m) | A (5.0) | B (4.4) | D(0.7) | D(0.7) | D(0.2) |
| Adhesive strength with electrodes after electrolyte solution injection (N/m) | A (6.0) | A (6.4) | C (1.5) | C (1. 4) | D(0.4) |
| Rate characteristics (%) | A (95) | A (99) | C (65) | C (63) | C (53) |
| Powder flaking (N/m) | A (65) | A (63) | C (35) | C (35) | C (36) |
| Cycle characteristics (%) | A (98) | A (99) | C (65) | C (66) | C (55) |
| Distortion of electrode separator wound body (mm) | Absent (0.0) | Absent (0.0) | Present (0.8) | Present (0.9) | Present (0.9) |

[Table 7]

| Table 7. Separator | | | | | | |
|---|---|---|---|---|---|---|
| | | Ex 9 | Ex 10 | Ex 11 | Ex 12 | Ex 13 |
| Base material | | Base material B1 | Base material B1 | Base material B1 | Base material B1 | Base material B1 |
| Methylene chloride soluble content (%) of base material | | 0.5 | 0.5 | 0.5 | 0.5 | 0.5 |
| Weight ratio of each component | Inorganic filler (parts by weight) | 100 | 100 | 100 | 100 | 100 |
| | Particulate polymer (parts by weight) | 7 | 7 | 7 | 7 | 20 |
| | Resin binder (parts by weight) | 4 | 4 | 4 | 4 | 4 |
| | Water-soluble polymer component (parts by weight) | 0.5 | 0.5 | 0.5 | 0.5 | 1.0 |
| Inorganic components | Type | Boehmite | Boehmite | Boehmite | Boehmite | Boehmite |
| | Average particle size (nm) | 200 | 200 | 200 | 200 | 200 |
| | Shape | Block-like | Block-like | Block-like | Block-like | Block-like |
| | Aspect ratio | 1.8 | 1.8 | 1.8 | 1.8 | 1.8 |
| | Particle size distribution CV | 0.45 | 0.45 | 0.45 | 0.45 | 0.45 |
| Aqueous dispersion components | Type | A3-2 | A3-2 | A3-3 | A3-4 | A3-1 |
| | Average particle size (nm) | 3500 | 3500 | 5570 | 9960 | 2020 |
| Resin binder | Volume average particle size (D50) (nm) | 150 | 150 | 150 | 150 | 150 |
| Water-soluble polymer component | Type | CMC | Polyacryl | CMC | CMC | CMC |
| Base material thickness (μm) | | 14.2 | 14.2 | 14.2 | 14.2 | 14.2 |
| Maximum distance to particulate polymer contour: L3 (μm) | | 7.5 | 7.4 | 8.0 | 11.0 | 2.5 |
| Covering layer thickness: L2 (μm) | | 6.3 | 6.2 | 7.2 | 8.8 | 2.4 |
| Thickness of inorganic filler portion of covering layer: L1 (μm) | | 3.2 | 3.0 | 2.5 | 2.8 | 2.0 |
| Particulate polymer protrusion amount: L3-L 1 (μm) | | 4.3 | 4.4 | 5.5 | 8.2 | 0.5 |
| Protrusion amount ratio (L3-L1)/L1 | | 1.3 | 1.5 | 2.2 | 2.9 | 0.3 |
| Particulate polymer particle size (μm) / covering layer thickness: L2 (μm) | | 1.1 | 1.2 | 2.2 | 3.6 | 1.0 |
| Separator total thickness (μm) | | 29.2 | 29.0 | 30.2 | 36.2 | 19.2 |
| Protruding particle polymer particle size (μm) / inorganic filler particle size (μm) | | 17.50 | 17.50 | 27.85 | 49.80 | 10.10 |

(continued)

| Table 7. Separator | | | | | |
|---|---|---|---|---|---|
| | Ex 9 | Ex 10 | Ex 11 | Ex 12 | Ex 13 |
| Average number of adjacent particulate polymers | 0 | 1 | 0 | 0 | 0 |
| Average number of particulate polymers within a radius of 10 μm | 1 | 0.4 | 1 | 1 | 1 |
| Metal cations (ppm) | 40 | 40 | 40 | 40 | 40 |
| 180° peel strength (N/m) | 282 | 320 | 280 | 267 | 299 |
| Gradient ratio of covering layer L2/L1 | 1.97 | 2.07 | 2.88 | 3.14 | 1.20 |
| Coverage ratio of protruding portion (L2-L1)/(L3-L1) | 0.72 | 0.73 | 0.85 | 0.73 | 0.80 |
| Ratio of protruding particulate polymers (%) | 76 | 56 | 88 | 98 | 64 |
| Contact ratio between particulate polymer and base material (%) | 78 | 55 | 87 | 99 | 60 |
| 130°C thermal shrinkage in TD (%) | <1.0 | <1.0 | <1.0 | <1.0 | <1.0 |
| 130°C thermal shrinkage in MD (%) | <1.0 | <1.0 | <1.0 | <1.0 | <1.0 |
| 150°C thermal shrinkage in TD (%) | <1.0 | <1.0 | <1.0 | <1.0 | <2.5 |
| 150°C thermal shrinkage in MD (%) | <1.0 | <1.0 | <1.0 | <1.0 | <2.9 |
| Adhesive strength with electrodes before electrolyte solution injection (N/m) | B (4.8) | B (5.0) | B (4.5) | B (4.8) | B (4.6) |
| Adhesive strength with electrodes after electrolyte solution injection (N/m) | A (6.1) | A (6.0) | A (7.0) | A (6.2) | A (7.2) |
| Rate characteristics (%) | A (96) | A (96) | A (97) | A (97) | A (97) |
| Powder flaking (N/m) | A (66) | A (66) | A (62) | A (63) | A (62) |
| Cycle characteristics (%) | A (98) | A (99) | A (99) | A (99) | A (98) |
| Distortion of electrode separator wound body (mm) | Absent (0.0) | Absent (0.0) | Absent (0.0) | Absent (0.0) | Absent (0.0) |

[Table 8]

| Table 8. Separator | | | | | | | |
|---|---|---|---|---|---|---|---|
| | Ex 1 | Ex 14 | Ex 15 | Ex 16 | Ex 17 | Comp Ex 5 | Comp Ex 6 |
| Base material | Base material B1 | Base material B1 | Base material B1 | Base material B1 | Base material B1 | Base material B1 | Base material B1 |
| Methylene chloride soluble content (%) of base material | 0.5 | 0.5 | 0.5 | 0.5 | 0.5 | 0.5 | 0.5 |

(continued)

Table 8. Separator

| | | Ex 1 | Ex 14 | Ex 15 | Ex 16 | Ex 17 | Comp Ex 5 | Comp Ex 6 |
|---|---|---|---|---|---|---|---|---|
| Weight ratio of each component (parts by weight) | Inorganic filler | 100 | 100 | 100 | 100 | 100 | 100 | 100 |
| | Particulate polymer | 7 | 7 | 7 | 7 | 7 | 20 | 20 |
| | Resin binder | 4 | 4 | 4 | 4 | 4 | 4 | 4 |
| | Water-soluble polymer component | 1.0 | 1.0 | 1.0 | 1.0 | 1.0 | 1.0 | 1.0 |
| Inorganic components | Type | Boehmite | Boehmite | Boehmite | Boehmite | Boehmite | Boehmite | Boehmite |
| | Average particle size (nm) | 200 | 100 | 700 | 450 | 200 | 200 | 200 |
| | Shape | Block-like | Block-like | Block-like | Block-like | Plate-like | Plate-like | Plate-like |
| | Aspect ratio | 1.7 | 1.7 | 1.8 | 1.8 | 2.5 | 2.5 | 2.5 |
| | Particle size distribution CV | 0.50 | 0.50 | 0.50 | 0.45 | 0.50 | 0.50 | 0.50 |
| Aqueous dispersion components | Type | A1-3 | A1-3 | A1-3 | A1-3 | A1-3 | A6 | A5 |
| | Average particle size (nm) | 4230 | 4230 | 4230 | 4230 | 4230 | 200 | 2030 |
| Resin binder | Volume average particle size | 150 | 150 | 150 | 150 | 150 | 150 | 150 |
| Water-soluble polymer component | Type | CMC | CMC | CMC | CMC | CMC | CMC | CMC |
| Base material thickness (μm) | | 14.2 | 14.2 | 14.2 | 14.2 | 14.2 | 14.2 | 14.2 |
| Maximum distance to particulate polymer contour: L3 (μm) | | 5.5 | 5.6 | 5.4 | 5.5 | 5.30 | 2.60 | 2.62 |
| Covering layer thickness: L2 (μm) | | 4.4 | 4.2 | 3.8 | 3.9 | 1.15 | 2.45 | 2.44 |
| Thickness of inorganic filler portion of covering layer: L1 (μm) | | 3.0 | 2.9 | 3.3 | 3.2 | 1.10 | 2.40 | 2.42 |
| Particulate polymer protrusion amount: L3-L 1 (μm) | | 2.5 | 2.7 | 2.1 | 2.3 | 4.20 | 0.20 | 0.20 |
| Protrusion amount ratio (L3-L1)/L1 | | 0.8 | 0.9 | 0.6 | 0.7 | 3.82 | 0.08 | 0.08 |
| Particulate polymer particle size (μm) / covering layer thickness: L2 (μm) | | 1.4 | 1.5 | 1.3 | 1.3 | 3.8 | 6.4 | 10.1 |

(continued)

| Table 8. Separator | | | | | | | |
|---|---|---|---|---|---|---|---|
| | Ex 1 | Ex 14 | Ex 15 | Ex 16 | Ex 17 | Comp Ex 5 | Comp Ex 6 |
| Separator total thickness (μm) | 25.2 | 25.4 | 25.0 | 25.2 | 24.8 | 19.40 | 19.44 |
| Protruding particle polymer particle size (μm) / inorganic filler particle size (μm) | 21.15 | 42.30 | 6.04 | 9.40 | 21.15 | 1.00 | 10.15 |
| Average number of adjacent particulate polymers | 0 | 1 | 0 | 0 | 3 | 7 | 9 |
| Average number of particulate polymers within a radius of 10 μm | 1 | 37 | 1 | 1 | 280 | >500 | >500 |
| Metal cations (ppm) | 40 | 40 | 40 | 40 | 40 | 40 | 40 |
| 180° peel strength (N/m) | 325 | 390 | 283 | 282 | 125 | 56 | 54 |
| Gradient ratio of covering layer L2/L1 | 1.47 | 1.45 | 1.15 | 1.22 | 1.05 | 1.02 | 1.01 |
| Coverage ratio of protruding portion (L2-L1)/(L3-L1) | 0.56 | 0.48 | 0.24 | 0.30 | 0.01 | 0.25 | 0.10 |
| Ratio of protruding particulate polymers (%) | 85 | 57 | 55 | 54 | 56 | 12 | 11 |
| Contact ratio between particulate polymer and base material (%) | 87 | 55 | 55 | 45 | 43 | <0.01 | <0.01 |
| 130°C thermal shrinkage in TD (%) | <1.0 | <1.0 | <1.0 | <1.0 | 6.3 | 11.0 | 10.0 |
| 130°C thermal shrinkage in MD (%) | <1.0 | <1.0 | <1.0 | <1.0 | 7.0 | 13.5 | 14.5 |
| 150°C thermal shrinkage in TD (%) | <1.0 | <1.0 | <1.0 | <1.0 | 11 | 50.0< | 50.0< |

(continued)

| Table 8. Separator | | | | | | | |
|---|---|---|---|---|---|---|---|
| | Ex 1 | Ex 14 | Ex 15 | Ex 16 | Ex 17 | Comp Ex 5 | Comp Ex 6 |
| 150°C thermal shrinkage in MD (%) | <1.0 | <1.0 | <1.0 | <1.0 | 15 | 50.0< | 50.0< |
| Adhesive strength with electrodes before electrolyte solution injection (N/m) | A (5.0) | A (7.0) | B (4.0) | A (6.1) | B (2.5) | D (0.9) | D (0.9) |
| Adhesive strength with electrodes after electrolyte solution injection (N/m) | A (6.0) | A (7.7) | B (4.5) | A (6.7) | B (4.9) | D (0.8) | D (0.8) |
| Rate characteristics (%) | A (95) | A (95) | A (97) | A (96) | B (82) | A (75) | A (74) |
| Powder flaking (N/m) | A (65) | A (62) | A (67) | A (69) | B (58) | C (38) | C (39) |
| Cycle characteristics (%) | A (98) | A (94) | A (98) | A (98) | B (79) | C (66) | C (65) |
| Distortion of electrode separator wound body (mm) | Absent (0.0) | Absent (0.0) | Absent (0.0) | Absent (0.0) | Absent (0.2) | Present (1.0) | Present (1.2) |

[Table 9]

| Table 9. Separator | | | | | | |
|---|---|---|---|---|---|---|
| | | Ex 18 | Ex 19 | Ex 20 | Ex 21 | Comp Ex 7 |
| Base material | | Base material B1 | Base material B1 | Base material B1 | Base material B1 | Base material B1 |
| Methylene chloride soluble content (%) of base material | | 0.5 | 0.5 | 0.5 | 0.5 | 0.5 |
| Weight ratio of each component | Inorganic filler (parts by weight) | 100 | 100 | 100 | 100 | 100 |
| | Particulate polymer (parts by weight) | 7 | 7 | 12 | 12 | 55 |
| | Resin binder (parts by weight) | 4 | 4 | 4 | 4 | 4 |
| | Water-soluble polymer component (parts by weight) | 1.0 | 1.0 | 1.5 | 1.0 | 1.0 |

(continued)

| Table 9. Separator | | | | | | | |
|---|---|---|---|---|---|---|---|
| | | | Ex 18 | Ex 19 | Ex 20 | Ex 21 | Comp Ex 7 |
| Inorganic components | Type | | Alumina | Alumina | Alumina | Alumina | Alumina |
| | Average particle size (nm) | | 500 | 500 | 500 | 500 | 500 |
| | Shape | | Spherical | Spherical | Spherical | Spherical | Spherical |
| | Aspect ratio | | 1.3 | 1.3 | 1.3 | 1.3 | 1.3 |
| | Particle size distribution CV | | 0.89 | 0.89 | 0.89 | 0.89 | 0.89 |
| Aqueous dispersion components | Type | | A1-3 | A1-3 | A3-2 | A1-3 | A1-3 |
| | Average particle size (nm) | | 4230 | 4230 | 3500 | 4230 | 4230 |
| Resin binder | Volume average particle size (D50) (nm) | | 40 | 150 | 150 | 150 | 150 |
| Water-soluble polymer component | Type | | CMC | CMC | CMC | CMC | CMC |
| Base material thickness (μm) | | | 14.2 | 14.2 | 14.2 | 14.2 | 14.2 |
| Maximum distance to particulate polymer contour: L3 (μm) | | | 5.6 | 5.5 | 4.30 | 5.30 | 5.40 |
| Covering layer thickness: L2 (μm) | | | 2.5 | 2.6 | 2.90 | 3.80 | 5.10 |
| Thickness of inorganic filler portion of covering layer: L1 (μm) | | | 2.4 | 2.4 | 2.50 | 3.30 | 4.95 |
| Particulate polymer protrusion amount: L3-L 1 (μm) | | | 3.2 | 3.1 | 1.80 | 2.00 | 0.45 |
| Protrusion amount ratio (L3-L1)/L1 | | | 1.3 | 1.3 | 0.72 | 0.61 | 0.09 |
| Particulate polymer particle size (μm) / covering layer thickness: L2 (μm) | | | 1.8 | 1.8 | 17.4 | 20.5 | 20.5 |
| Separator total thickness (μm) | | | 25.4 | 25.2 | 22.8 | 24.8 | 25.0 |
| Protruding particle polymer particle size (μm) / inorganic filler particle size (μm) | | | 8.46 | 8.46 | 7 | 8.46 | 8.46 |
| Average number of adjacent particulate polymers | | | 4 | 4 | 7 | 7 | 7 |
| Average number of particulate polymers within a radius of 10 μm | | | 7 | 7 | 0.4 | 0.4 | 0.4 |
| Metal cations (ppm) | | | 39 | 40 | 40 | 40 | 40 |
| 180° peel strength (N/m) | | | 40 | 40 | 150 | 70 | 130 |
| Gradient ratio of covering layer L2/L1 | | | 1.04 | 1.08 | 1.16 | 1.15 | 1.03 |
| Coverage ratio of protruding portion (L2-L1)/(L3-L1) | | | 0.03 | 0.06 | 0.22 | 0.25 | 0.33 |
| Ratio of protruding particulate polymers (%) | | | 25.00 | 20.00 | 6 | 3 | 4 |

(continued)

| Table 9. Separator | | | | | |
|---|---|---|---|---|---|
| | Ex 18 | Ex 19 | Ex 20 | Ex 21 | Comp Ex 7 |
| Contact ratio between particulate polymer and base material (%) | 15 | 15 | 5 | 2 | 3 |
| 130°C thermal shrinkage in TD (%) | 20.0 | 10.0 | 5.5 | 20.0 | 10.5 |
| 130°C thermal shrinkage in MD (%) | 22.0 | 13.0 | 6.2 | 22.0 | 13.0 |
| 150°C thermal shrinkage in TD (%) | 50.0< | 50.0< | 50.0< | 50.0< | 50.0< |
| 150°C thermal shrinkage in MD (%) | 50.0< | 50.0< | 50.0< | 50.0< | 50.0< |
| Adhesive strength with electrodes before electrolyte solution injection (N/m) | A (5.8) | C (1.5) | C (1.4) | C (1.3) | D (0.7) |
| Adhesive strength with electrodes after electrolyte solution injection (N/m) | A (5.7) | C (1.6) | C (1.6) | C (1.6) | C (1.8) |
| Rate characteristics (%) | B (83) | B (84) | B (82) | B (81) | C (65) |
| Powder flaking (N/m) | B (45) | B (43) | B (40) | B (41) | C (32) |
| Cycle characteristics (%) | B (77) | B (78) | B (75) | B (76) | C (65) |
| Distortion of electrode separator wound body (mm) | Absent (0.1) | Absent (0.1) | Absent (0.3) | Absent (0.2) | **Present** (0.9) |

[Table 10]

| Table 10. Separator | | | | | |
|---|---|---|---|---|---|
| | | Ex 5 | Ex 22 | Ex 23 | Ex 24 |
| Base material | | Base material B1 | Base material B1 | Base material B1 | Base material B1 |
| Methylene chloride soluble content (%) of base material | | 0.5 | 0.5 | 0.5 | 0.5 |
| Weight ratio of each component | Inorganic filler (parts by weight) | 100 | 100 | 100 | 100 |
| | Particulate polymer (parts by weight) | 7 | 7 | 7 | 7 |
| | Resin binder (parts by weight) | 4 | 4 | 4 | 4 |
| | Water-soluble polymer component (parts by weight) | 0.5 | 0.5 | 0.5 | 1.5 |

(continued)

| Table 10. Separator | | | | | |
|---|---|---|---|---|---|
| | | Ex 5 | Ex 22 | Ex 23 | Ex 24 |
| Inorganic components | Type | Boehmite | Boehmite | Barium sulfate | Alumina |
| | Average particle size (nm) | 200 | 450 | 400 | 500 |
| | Shape | Block-like | Block-like | Granular | Spherical |
| | Aspect ratio | 1.8 | 1.8 | 1.4 | 1.3 |
| | Particle size distribution CV | 0.45 | 0.45 | 0.50 | 0.89 |
| Aqueous dispersion components | Type | A3-2 | A3-2 | A3-2 | A3-2 |
| | Average particle size (nm) | 3500 | 3500 | 3500 | 3500 |
| Resin binder | Volume average particle size (D50) (nm) | 150 | 150 | 150 | 150 |
| Water-soluble polymer component | Type | CMC | CMC | CMC | CMC |
| Base material thickness (μm) | | 14.2 | 14.2 | 14.2 | 14.2 |
| Maximum distance to particulate polymer contour: L3 (μm) | | 7.5 | 7.4 | 7.3 | 5.5 |
| Covering layer thickness: L2 (μm) | | 6.3 | 6.2 | 6.2 | 2.7 |
| Thickness of inorganic filler portion of covering layer: L1 (μm) | | 3.2 | 3.2 | 3.3 | 2.4 |
| Particulate polymer protrusion amount: L3-L 1 (μm) | | 4.3 | 4.2 | 4.0 | 3.1 |
| Protrusion amount ratio (L3-L1)/L1 | | 1.3 | 1.3 | 1.2 | 1.3 |
| Particulate polymer particle size (μm) / covering layer thickness: L2 (μm) | | 1.1 | 1.1 | 1.1 | 1.5 |
| Separator total thickness (μm) | | 29.2 | 29.0 | 28.8 | 25.2 |
| Protruding particle polymer particle size (μm) / inorganic filler particle size (μm) | | 17.50 | 7.78 | 8.75 | 7.00 |
| Average number of adjacent particulate polymers | | 0 | 0 | 1 | 3 |
| Average number of particulate polymers within a radius of 10 μm | | 1 | 1 | 0.5 | 7 |
| Metal cations (ppm) | | 40 | 40 | 40 | 40 |
| 180° peel strength (N/m) | | 282 | 275 | 335 | 40 |
| Gradient ratio of covering layer L2/L1 | | 1.97 | 1.94 | 1.88 | 1.13 |
| Coverage ratio of protruding portion (L2-L1)/(L3-L1) | | 0.72 | 0.71 | 0.73 | 0.10 |
| Ratio of protruding particulate polymers (%) | | 76 | 76 | 46 | 10.00 |
| Contact ratio between particulate polymer and base material (%) | | 78 | 78 | 45 | 5 |
| 130°C thermal shrinkage in TD (%) | | <1.0 | <1.0 | <1.0 | 5.5 |
| 130°C thermal shrinkage in MD (%) | | <1.0 | <1.0 | <1.0 | 5.9 |

(continued)

| Table 10. Separator | | | | |
|---|---|---|---|---|
| | Ex 5 | Ex 22 | Ex 23 | Ex 24 |
| 150°C thermal shrinkage in TD (%) | <1.0 | <1.0 | <1.0 | 50.0< |
| 150°C thermal shrinkage in MD (%) | <1.0 | <1.0 | <1.0 | 50.0< |
| Adhesive strength with electrodes before electrolyte solution injection (N/m) | B (4.8) | B (3.8) | B (3.7) | C (1.4) |
| Adhesive strength with electrodes after electrolyte solution injection (N/m) | A (6.1) | B (4.5) | B (4.6) | C (1.5) |
| Rate characteristics (%) | A (96) | A (95) | A (98) | B (82) |
| Powder flaking (N/m) | A (66) | A (65) | A (72) | B (41) |
| Cycle characteristics (%) | A (98) | A (97) | A (98) | B (74) |
| Distortion of electrode separator wound body (mm) | Absent (0.0) | Absent (0.1) | Absent (0.0) | Absent (0.3) |

[Table 11]

| Table 11. Separator | | | | | | | |
|---|---|---|---|---|---|---|---|
| | | Ex 1 | Ex 25 | Ex 26 | Ex 27 | Ex 28 | Comp Ex 1 |
| Base material | | Base material B1 | Base material B9 | Base material B10 | Base material B11 | Base material B1 | Base material B4 |
| Methylene chloride soluble content (%) of base material | | 0.5 | 0.5 | 0.5 | 0.5 | 0.5 | 0.5 |
| Weight ratio of each component (parts by weight) | Inorganic filler | 100 | 100 | 100 | 100 | 100 | 100 |
| | Particulate polymer | 7 | 7 | 7 | 7 | 7 | 7 |
| | Resin binder | 4 | 4 | 4 | 4 | 4 | 4 |
| | Water-soluble polymer component | 1.0 | 1.0 | 1.0 | 1.0 | 1.0 | 1.0 |
| Inorganic components | Type | Boehmite | Boehmite | Boehmite | Boehmite | Boehmite | Boehmite |
| | Average particle size (nm) | 200 | 200 | 200 | 200 | 200 | 200 |
| | Shape | Block-like | Block-like | Block-like | Block-like | Block-like | Block-like |
| | Aspect ratio | 1.7 | 1.7 | 1.7 | 1.7 | 1.7 | 1.7 |
| | Particle size distribution CV | 0.50 | 0.50 | 0.50 | 0.50 | 0.50 | 0.50 |
| Aqueous dispersion components | Type | A1-3 | A1-3 | A1-3 | A1-3 | A1-3 | A1-3 |
| | Average particle size (nm) | 4230 | 4230 | 4230 | 4230 | 4230 | 4230 |

(continued)

| Table 11. Separator | | | | | | | |
|---|---|---|---|---|---|---|---|
| | | Ex 1 | Ex 25 | Ex 26 | Ex 27 | Ex 28 | Comp Ex 1 |
| Resin binder | Volume average particle size (nm) | 150 | 150 | 150 | 150 | 150 | 150 |
| Water-soluble polymer component | Type | CMC | CMC | CMC | CMC | CMC | CMC |
| Base material thickness (μm) | | 14.2 | 11.0 | 10.8 | 10.5 | 14.2 | 10.2 |
| Maximum distance to particulate polymer contour: L3 (μm) | | 5.5 | 5.6 | 5.3 | 5.5 | 5.3 | 5.5 |
| Covering layer thickness: L2 (μm) | | 4.4 | 4.3 | 4.2 | 4.4 | 4.3 | 4.1 |
| Thickness of inorganic filler portion of covering layer: L1 (μm) | | 3.0 | 2.9 | 3.2 | 3.2 | 3.1 | 3.1 |
| Particulate polymer protrusion amount: L3-L 1 (μm) | | 2.5 | 2.7 | 2.1 | 2.3 | 2.2 | 2.4 |
| Protrusion amount ratio (L3-L1)/L1 | | 0.8 | 0.9 | 0.7 | 0.7 | 0.7 | 0.8 |
| Particulate polymer particle size (μm) / covering layer thickness: L2 (μm) | | 1.4 | 1.5 | 1.3 | 1.3 | 1.4 | 1.4 |
| Separator total thickness (μm) | | 25.2 | 22.2 | 21.4 | 21.5 | 24.8 | 21.2 |
| Protruding particle polymer particle size (μm) / inorganic filler particle size (μm) | | 21.15 | 21.15 | 21.15 | 21.15 | 21.15 | 21.15 |
| Average number of adjacent particulate polymers | | 0 | 0 | 0 | 0 | 0 | 0 |
| Average number of particulate polymers within a radius of 10 μm | | 1 | 1 | 1 | 1 | 1 | 1 |
| Metal cations (ppm) | | 40 | 40 | 40 | 40 | 40 | 40 |
| 180° peel strength (N/m) | | 325 | 332 | 325 | 305 | 310 | 278 |
| Gradient ratio of covering layer L2/L1 | | 1.47 | 1.48 | 1.31 | 1.38 | 1.39 | 1.32 |
| Coverage ratio of protruding portion (L2-L1)/(L3-L1) | | 0.56 | 0.52 | 0.48 | 0.52 | 0.55 | 0.42 |

(continued)

| Table 11. Separator | | | | | | |
|---|---|---|---|---|---|---|
| | Ex 1 | Ex 25 | Ex 26 | Ex 27 | Ex 28 | Comp Ex 1 |
| Ratio of protruding particulate polymers (%) | 85 | 85 | 89 | 84 | 83 | 84 |
| Contact ratio between particulate polymer and base material (%) | 87 | 86 | 88 | 83 | 82 | 85 |
| 130°C thermal shrinkage in TD (%) | <1.0 | <1.0 | <1.0 | <1.0 | <1.0 | <1.0 |
| 130°C thermal shrinkage in MD (%) | <1.0 | <1.0 | <1.0 | <1.0 | <1.0 | <1.0 |
| 150°C thermal shrinkage in TD (%) | <1.0 | <1.0 | <1.0 | <1.0 | <1.0 | <1.0 |
| 150°C thermal shrinkage in MD (%) | <1.0 | <1.0 | <1.0 | <1.0 | <1.0 | <1.0 |
| Adhesive strength with electrodes before electrolyte solution injection (N/m) | A (5.0) | B (4.9) | B (4.8) | B (5.2) | B(5.1) | B (4.0) |
| Adhesive strength with electrodes after electrolyte solution injection (N/m) | A (6.0) | A (6.1) | A (5.9) | A (5.9) | A (6.0) | B (4.0) |
| Rate characteristics (%) | A (95) | A (96) | A (98) | A (97) | A (98) | C (67) |
| Powder flaking (N/m) | A (65) | A (64) | A (65) | A (65) | A (64) | B (45) |
| Cycle characteristics (%) | A (98) | A (98) | A (99) | A (97) | A (96) | C (70) |
| Distortion of electrode separator wound body (mm) | Absent (0.0) | Absent (0.0) | Absent (0.0) | Absent (0.0) | Absent (0.0) | Present (0.5) |

INDUSTRIAL APPLICABILITY

The separator for a power storage device of the present disclosure can be suitably used for various power storage devices, and preferably lithium-ion secondary batteries.

DESCRIPTION OF REFERENCE SIGNS

1 inorganic filler
2 particulate polymer
10 base material
20 covering layer

## Claims

1. A separator for a power storage device, comprising a base material which is a polyolefin microporous membrane comprising a polyolefin as a primary component, and a covering layer arranged on at least one surface of the base material, wherein

the base material has a membrane thickness of 1 μm to 30 μm, an air permeability of 500 sec/100 $cm^3$ or less, and a post-compression porosity of 30% or more as measured after compressing the base material under conditions of a temperature of 70°C, a pressure of 8 MPa, and a compression time of 3 minutes,
the covering layer comprises an inorganic filler and a particulate polymer that is a thermoplastic polymer, and the particulate polymer comprises a particulate polymer protruding from the covering layer by 0.1-fold or greater the thickness of an inorganic filler portion of the covering layer.

2. A separator for a power storage device, comprising a base material which is a polyolefin microporous membrane comprising a polyolefin as a primary component, and a covering layer arranged on at least one surface of the base material, wherein

a crystal long-period of the polyolefin microporous membrane as measured by small-angle X-ray scattering (SAXS) is 37.0 nm or more,
the covering layer comprises an inorganic filler and a particulate polymer that is a thermoplastic polymer, and the particulate polymer comprises a particulate polymer protruding from the covering layer by 0.1-fold or greater the thickness of an inorganic filler portion of the covering layer.

3. The separator for a power storage device according to claim 2, wherein the base material has a membrane thickness of 1 μm to 30 μm, an air permeability of 500 sec/100 $cm^3$ or less, and a post-compression porosity of 30% or more as measured after compressing the base material under conditions of a temperature of 70°C, a pressure of 8 MPa, and a compression time of 3 minutes.

4. The separator for a power storage device according to any one of claims 1 to 3, wherein an amount of the particulate polymer in the covering layer is 1 part by weight or more and 50 parts by weight or less relative to 100 parts by weight of inorganic filler contained in the covering layer, and
the covering layer is formed in a gradient shape so as to become thicker toward the protruding particulate polymer.

5. The separator for a power storage device according to claim 4, wherein when a thickness of the inorganic filler portion of the covering layer is defined as L1, and a maximum distance from a boundary between the base material and the covering layer to an outer surface of the inorganic filler of the covering layer, which is formed in a gradient shape, is defined as L2, an average value of a gradient ratio L2/L1 of the covering layer is 1.2 or more.

6. The separator for a power storage device according to claim 4, wherein when a thickness of the inorganic filler portion of the covering layer is defined as L1, and a maximum distance from a boundary between the base material and the covering layer to an outer surface of the inorganic filler of the covering layer, which is formed in a gradient shape, is defined as L2, and a maximum distance from a boundary between the base material and the covering layer to a contour of the protruding particulate polymer is defined as L3, an average value of a coverage rate (L2-L1) / (L3-L1) of a protruding portion of the protruding particulate polymer is 0.4 or more.

7. The separator for a power storage device according to any one of claims 1 to 3, wherein the particulate polymer comprises at least one selected from the group consisting of (meth)acrylic polymers, styrene-butadiene copolymers, and copolymers containing fluorine atoms.

8. The separator for a power storage device according to any one of claims 1 to 3, wherein the particulate polymer comprises a copolymer containing (meth)acrylic acid, butyl (meth)acrylate, and ethylhexyl (meth)acrylate as monomers.

**9.** The separator for a power storage device according to any one of claims 1 to 3, wherein the particulate polymer comprises a copolymer containing a polyfunctional (meth)acrylate as a monomer.

**10.** A power storage device, comprising the separator for a power storage device according to any one of claims 1 to 3.

Fig. 1

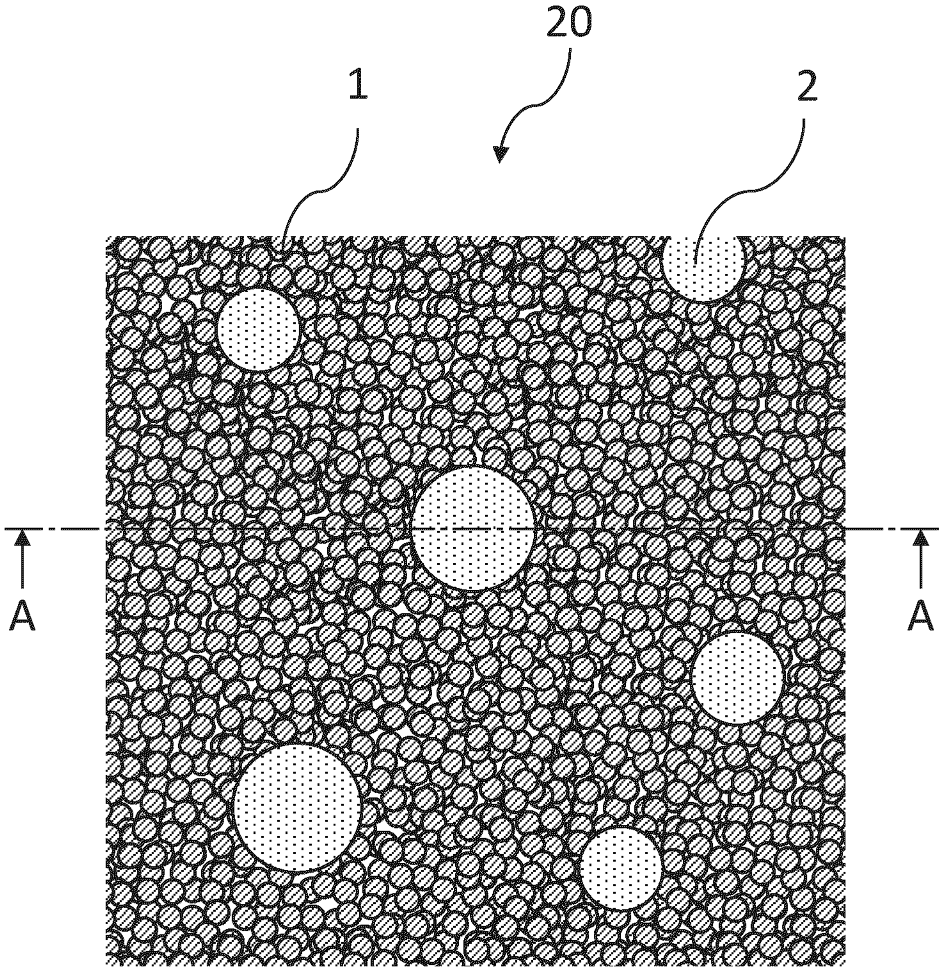

Fig. 2

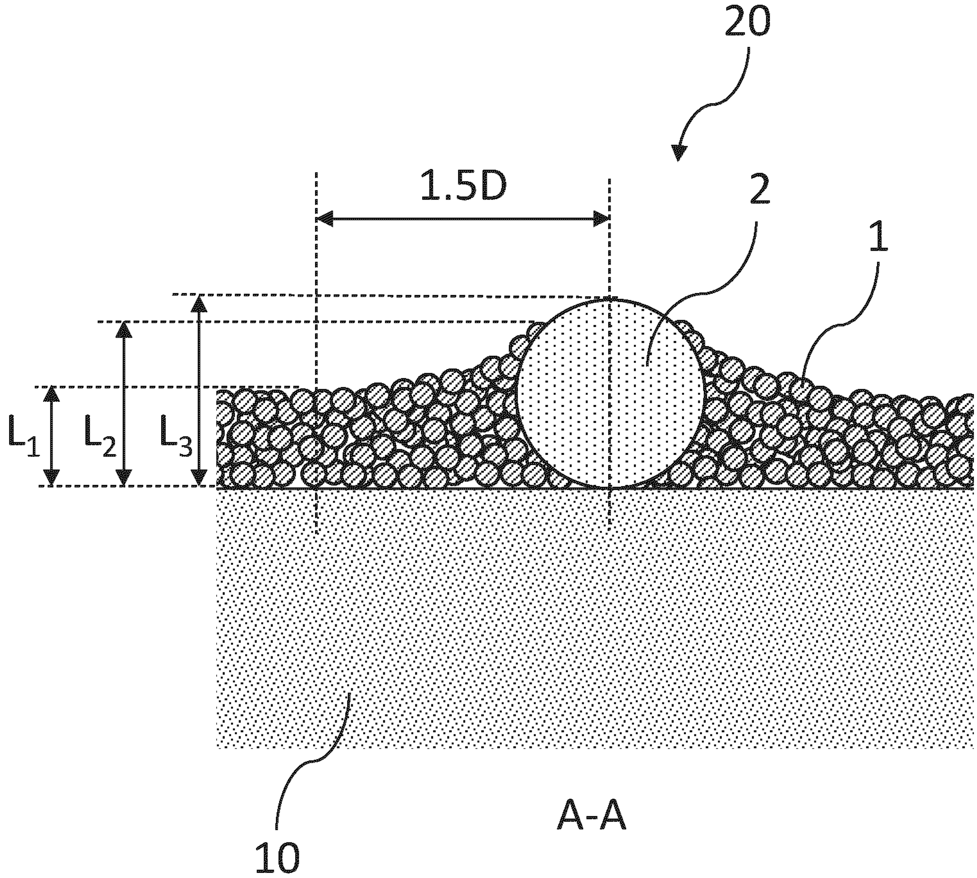


A-A

Fig. 3

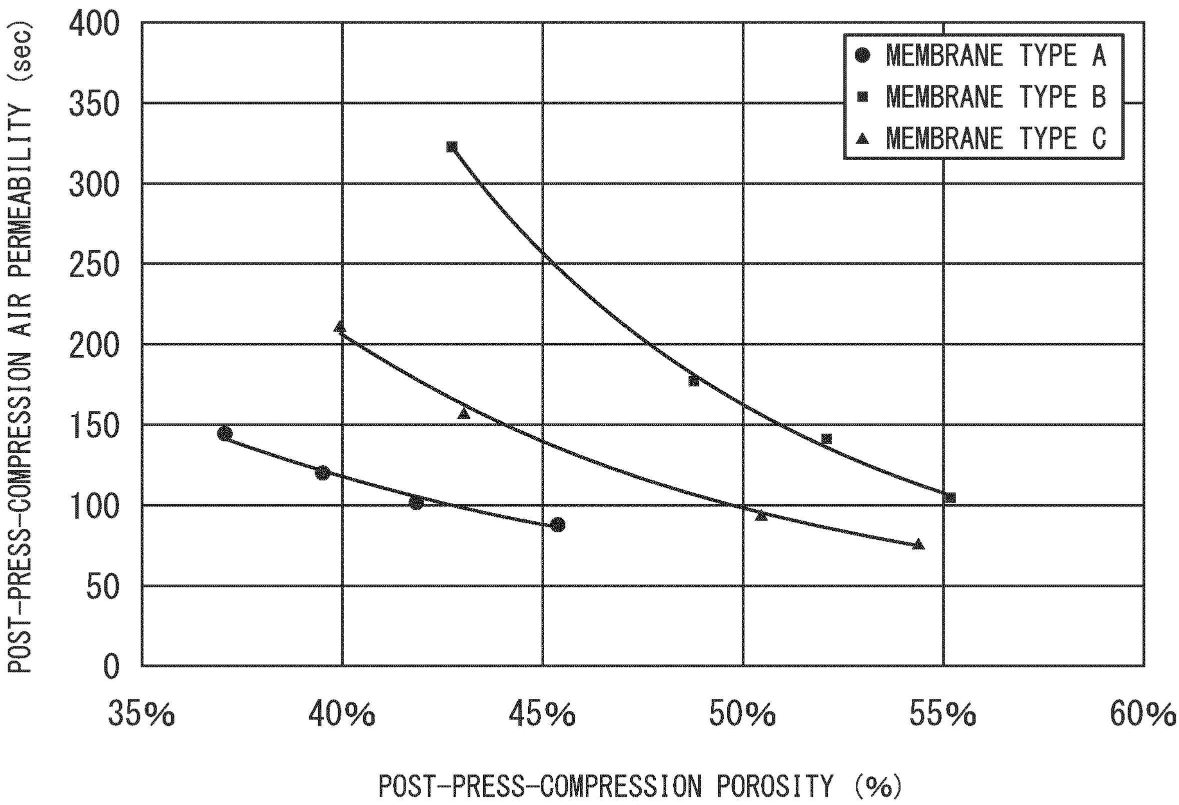
400
350
300
250
200
150
100
50
0
35%
40%
45%
50%
55%
60%
POST-PRESS-COMPRESSION AIR PERMEABILITY (sec)
POST-PRESS-COMPRESSION POROSITY (%)
MEMBRANE TYPE A
MEMBRANE TYPE B
MEMBRANE TYPE C

**INTERNATIONAL SEARCH REPORT**

International application No.
**PCT/JP2023/015785**

**A. CLASSIFICATION OF SUBJECT MATTER**

***H01M 50/451***(2021.01)i; ***H01M 50/414***(2021.01)i; ***H01M 50/417***(2021.01)i; ***H01M 50/42***(2021.01)i; ***H01M 50/426***(2021.01)i; ***H01M 50/443***(2021.01)i; ***H01M 50/463***(2021.01)i; ***H01M 50/489***(2021.01)i; ***H01M 50/491***(2021.01)i

FI: H01M50/451; H01M50/414; H01M50/417; H01M50/42; H01M50/426; H01M50/443 B; H01M50/443 E; H01M50/443 M; H01M50/463 A; H01M50/489; H01M50/491

According to International Patent Classification (IPC) or to both national classification and IPC

**B. FIELDS SEARCHED**

Minimum documentation searched (classification system followed by classification symbols)

H01M50/451; H01M50/414; H01M50/417; H01M50/42; H01M50/426; H01M50/443; H01M50/463; H01M50/489; H01M50/491

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2020/246394 A1 (ZEON CORP.) 10 December 2020 (2020-12-10) entire text, all drawings | 1-10 |
| A | JP 2002-194132 A (TONEN CHEM. CORP.) 10 July 2002 (2002-07-10) entire text, all drawings | 1-10 |
| A | JP 2019-091549 A (SEKISUI CHEM. CO., LTD.) 13 June 2019 (2019-06-13) entire text, all drawings | 1-10 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **07 July 2023** | **18 July 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/015785**

| Patent document cited in search report | Publication date (day/month/year) | Patent family member(s) | Publication date (day/month/year) |
|---|---|---|---|
| WO 2020/246394 A1 | 10 December 2020 | US 2022/0231378 A1<br>all<br>EP 3979354 A1<br>CN 113906626 A<br>KR 10-2022-0016457 A | |
| JP 2002-194132 A | 10 July 2002 | (Family: none) | |
| JP 2019-091549 A | 13 June 2019 | US 2020/0381689 A1<br>all<br>WO 2019/093470 A1<br>EP 3709390 A1<br>CN 111201635 A<br>KR 10-2020-0087188 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020160118979
- WO 2019089492 A
- CN 105958000
- WO 2020175079 A
- WO 2021085144 A
- WO 2014175252 A
- WO 2015012324 A
- WO 2018164056 A
- WO 2015194504 A


### Non-patent literature cited in the description


- Polymer Handbook. Wiley-Interscience